# EUROPÄISCHE PATENTSCHRIFT

(11) **EP 4 001 333 B1**
(45) Veröffentlichungstag und Bekanntmachung des Hinweises auf die Patenterteilung: **08.10.2025**
(21) Anmeldenummer: 21206873.8
(22) Anmeldetag: 08.11.2021
(51) Int. Cl.: C09J 5/06, C09J 7/10, C08G 18/10, C08G 18/34, C08G 18/79, C08G 18/80, C09J 7/35

(54) **ZUBEREITUNG ZUR HERSTELLUNG LATENTREAKTIVER KLEBMASSEN**
PREPARATION FOR THE PREPARATION OF LATENT REACTIVE ADHESIVES
PRÉPARATION DESTINÉE À LA FABRICATION DE MATIÈRES ADHÉSIVES À RÉACTIVITÉ LATENTE

(30) Priorität: 10.11.2020 DE 102020214095; 22.01.2021 DE 102021200580
(43) Veröffentlichungstag der Anmeldung: 25.05.2022
(60) Teilanmeldung: 25193012.9
(73) Patentinhaber: tesa SE, 22848 Norderstedt (DE)
(72) Erfinder: KUPSKY, Marco, 25451 Quickborn (DE); DOLLASE, Thilo, 22397 Hamburg (DE); EGGER, Dr. Michael, 22297 Hamburg (DE); BOLUS, Dr. Anika, 22529 Hamburg (DE)
(74) Vertreter: tesa SE

(56) Entgegenhaltungen:
- EP-A1- 1 172 390
- EP-A1- 2 236 532
- EP-A1- 2 820 098
- DE-A1- 102018 214 254

## Beschreibung

Die Erfindung betrifft eine Zubereitung zur Herstellung einer insbesondere latentreaktiven Klebmasse aus mindestens einem isocyanatreaktiven Polymer und mindestens einer isocyanathaltigen Verbindung, eine entsprechende Klebemasse sowie Verfahren zum Verkleben zweier Substratoberflächen mittels aus einer solchen Zubereitung ausgeformten und anschließend getrockneten Klebefilme.

Nahezu alle Geräte der modernen Unterhaltungselektronik, Kommunikationselektronik, Datenverarbeitung und immer mehr Geräte der Haushaltselektronik weisen visuelle Anzeigesysteme zur Anzeige des Betriebszustands des Geräts oder weiterer Informationen auf. Sind dabei komplexere Zusammenhänge darzustellen, so werden zur Anzeige häufig Anzeigemodule auf der Grundlage von Flüssigkristallen (LCD) oder von organischen Leuchtdioden (OLED) eingesetzt. Solche Anzeigen kommen zum Beispiel bei Digitalkameras, tragbaren Kleinstcomputern, sogenannten Tablet-PCs, sogenannten Laptop- und/oder Notebook-PCs, Mobiltelefonen und sogenannten Smartphones zum Einsatz. Zum Schutz der Anzeigemodule vor einer etwaigen Beschädigung durch äußere mechanische Einwirkung wie zum Beispiel Stößen weisen derartige Anzeigesysteme üblicherweise transparente Schutzfenster auf, die die Außenseite der Anzeigemodule bedecken und so die Gefahr einer direkten Einwirkung auf das Modul vermindern. Ein derartiger Schutz ist ebenfalls bei nichtelektronischen visuellen Anzeigesystemen erforderlich, etwa bei mechanischen Anzeigen wie beispielsweise Uhren oder Füllstandsanzeigen an Vorratsgefäßen. Als Schutzfenster wird häufig Glas eingesetzt, da es auf Grund seiner Haptik gegenüber Kunststoffen Vorteile bietet. Glas ist zudem inert gegenüber organischen Lösemitteln und infolge der großen Härte auch kratzbeständig, wodurch es einen hochwertigen Eindruck vermittelt. Scheiben aus Glas kommen auch zum Einsatz, wenn es um die Erfüllung optischer Funktionen, wie Lichtbrechung, -bündelung, - abschwächung oder -verstärkung geht. Bei dem Einbau derartiger Linsen in die Halterung bzw. den Gerätekörper kommt es zu ähnlichen Anforderungen wie bei den vorbeschriebenen Fenstern.

Eine Verklebung, für die in den letzten Jahren insbesondere im Electronics-Bereich, so zum Beispiel bei Mobiltelefonen, sogenannten Smartphones, sogenannten Laptop- /Notebook-Computern oder Tablet-Computern zunehmend Bedarf entsteht, ist die Verklebung von eloxiertem Aluminium. Eloxiertes Aluminium gewinnt als Dekormaterial bei Elektronik-Geräten immer weiter an Bedeutung. Sogenanntes eloxiertes oder auch anodisiertes Aluminium, d.h. mit dem Eloxal-Verfahren verarbeitetes Aluminium, ist Aluminium, an dessen Oberfläche eine oxidische Schutzschicht durch anodische Oxidation des Aluminiums gebildet wurde. Dabei wird im Gegensatz zu den galvanischen Überzugsverfahren die Schutzschicht nicht auf dem Werkstück niedergeschlagen, sondern durch Umwandlung der obersten Metallschicht ein Oxid bzw. ein Hydroxid gebildet. Diese weist daher eine besonders gute Verbindung zum Aluminium auf. Es entsteht eine 5 bis 25 µm dicke Schicht, die tiefere Schichten solange vor Korrosion schützt, wie keine Lücken, beispielsweise durch mechanische Beschädigung, in dieser Schicht entstehen. Neben den vielen Vorteilen dieses Materials für z.B. Gehäuse von elektronischen Geräten, wie zum Beispiel die hochwertige Optik und Haptik, die guten mechanischen Eigenschaften und die hohe Beständigkeit gegen mechanische Einwirkung und Umwelteinflüsse, gilt die geringe thermische Belastbarkeit von ca. 80 °C, oberhalb derer die anodisierte Schicht zu brechen beginnt, als eine Herausforderung für die Verarbeitung.

Eine weitere Anwendung für thermisch sensible Verklebung stellt die Verklebung von Lederprodukten in Textilien und/oder zu Dekorzwecken zum Beispiel in Kraftfahrzeugen und/oder für Bezüge von Sitzmöbeln und/oder Fahrzeugsitzen dar. Leder fängt bei längerer Temperaturbelastung oberhalb von 80 °C an zu schrumpfen und zu verhärten, was ebenfalls hohe Anforderungen an die entsprechenden Herstellungsprozesse stellt.

Üblicherweise erfolgt die Verklebung verschiedener, gegebenenfalls zumindest teils thermisch sensibler Substrate in elektronischen Geräten, insbesondere tragbaren Kleingeräten wie Mobiltelefonen, Tablet-PCs und dergleichen, heutzutage hauptsächlich mittels doppelseitiger Selbstklebebänder, Flüssigklebern, niedrig schmelzender Thermoplaste oder bei niedriger Temperatur aktivierbarer, latent reaktiver Klebefilme auf Basis wässriger Dispersionen und partikulären, blockierten und/oder oberflächendeaktivierten Vernetzersystemen.

All diese Systeme weisen Vorteile für die Verklebung insbesondere thermisch sensibler Substrate auf, sind jedoch mit deutlichen Nachteilen in der Applikation und/oder Anwendung im Endprodukt verbunden.

Doppelseitige Selbstklebebänder sind aufgrund ihrer intrinsischen Haftklebrigkeit sehr einfach zu applizieren, haben jedoch zum Beispiel Grenzen in der maximal erreichbaren Verklebungsfestigkeit, insbesondere bei immer kleiner werdenden Verklebungsflächen. Flüssigkleber erreichen exzellente Verklebungsfestigkeiten mit sogenannten strukturellen oder semistrukturellen Verklebungsfestigkeiten, weisen jedoch deutliche Nachteile in der Applikation auf, zum Beispiel durch Tropfen- oder Nasenbildung und die zu verklebenden Substrate sind für die Zeit der Aushärtung des Flüssigklebers zu fixieren. Die höchsten Verklebungsfestigkeiten in diesem Segment bieten die sogenannten 2 Komponenten Flüssigkleber, die zu den oben aufgeführten Nachteilen zusätzlich durch schnelle Aushärtungsreaktionen die Applikations- und/oder Mischwerkzeuge verstopfen und zudem vor der Anwendung noch homogen vermischt werden müssen. Niedrig schmelzende Thermoplaste bieten den Vorteil einer einfachen Applikation durch Heißlamination oder Heißverpressen und erreichen sehr gute Verklebungsfestigkeiten im sogenannten semistrukturellen oder strukturellen Bereich, bei normalen Umgebungstemperaturbedingungen. Durch die dauerhafte Schmelzbarkeit dieser Systeme erweichen diese jedoch oberhalb der Erweichungstemperatur und verlieren signifikant an Verklebungsfestigkeit, was insbesondere bei Anwendbarkeit für thermisch sensible Substrate zu Problemen in der Anwendung führen kann. Latent reaktive Klebefilme auf Basis wässriger Dispersionen und partikulären, blockierten und/oder oberflächendeaktivierten Vernetzersystemen bieten einen guten Kompromiss aus einfacher Applikation analog den Thermoplasten und hoher Performance in der Verklebungsfestigkeit im sogenannten semistrukturellen oder strukturellen Bereich. Durch die chemische Vernetzungsreaktion verfügen diese Systeme zudem über eine signifikant verbesserte Performance auch bei höheren Anwendungstemperaturen, wie diese zum Beispiel durch Abwärme elektronischer Bauteile oder Sonneneinwirkung auftreten können. Diese Systeme haben jedoch, bedingt durch den Herstellungs-/Syntheseprozess und/oder durch notwendige Emulgatoren und/oder Stabilisatoren und/oder Tensiden, intrinsische Nachteile unter feuchten oder feucht-warmen Umgebungsbedingungen und/oder bei Kontakt mit polaren Lösemitteln und/oder Chemikalien (z.B. Wasser, Alkohole, (Poly- )Ethylenglycole etc.), insbesondere auf hydrophilen und/oder polaren Substraten, bei denen Feuchtigkeit in die Grenzflächen zwischen Klebefilm und Substrat oder in den Klebefilm selber eindringt beziehungsweise migriert.

Diese intrinsischen Schwächen sind dem Fachmann bekannt und zum Beispiel in diversen Publikationen nachzulesen, wie
Ziortza Aguirreurreta, Jörg-Alexander Dimmer, Immanuel Willerich, Jose C. de la Cal, Jose R. Leiza; Water Whitening Reduction in Waterborne Pressure-Sensitive Adhesives Produced with Polymerizable Surfactants, Wiley-VCH, Macromol. Mater. Eng. 2015, 9, 925-936;
Ziortza Aguirreurreta Jörg-Alexander Dimmer, Immanuel Willerich, José R. Leiza,
José C.de la Cal; Improving the properties of water-borne pressure sensitive adhesives by using non-migratory surfactants; Elsevier International Journal of Adhesion & Adhesives 70 (2016) 287-296;
Bo Jiang, John G. Tsavalas, Donald C. Sundberg; Water whitening of polymer films: Mechanistic studies and comparisons between water and solvent borne films; Elsevier, Progress in Organic Coatings 105 (2017) 56-66;
Joseph L. Keddie, Alexander F. Routh; Surfactant Distribution in Latex Films; in: Fundamentals of Latex Film Formation Processes and Properties, Kapitel 6, Springer 2010, ISBN 978-90-481-2844-0.

Zudem müssen in modernen Geräten der Consumer-Elektronik aber auch anderen elektronischen, insbesondere mobilen, Geräten oftmals verschiedene Bauteile zum Teil mit nur sehr geringen Stegbreiten miteinander verklebt werden. Unter "Steg" bzw. "Stegbreite" sei in diesem Zusammenhang die Ausgestaltung eines doppelseitig klebenden Materials zu verstehen. Statt einer vollflächigen Verklebung ist oft nur eine Rahmenverklebung gewünscht. Das Klebesystem kommt dabei als konfektionierter Abschnitt zum Einsatz, der ein Segment ("Steg") aufweisen kann mit geringer Breite ("Stegbreite"). Es kann sich dabei um Stegbreiten in zumindest einem Abschnitt des Verklebungsbereichs von höchstens 2 mm, höchstens 1 mm, höchstens 0,8 mm oder sogar um etwa 0,5 mm oder noch geringer, handeln. Die Verklebungsstärken von Selbstklebebändern reichen dabei, wie bereits erwähnt, oftmals nicht aus, so dass in diesen Fällen häufig auf reaktive Flüssigkleber zurückgegriffen wird. Die Verwendung von Flüssigklebern ist jedoch mit einigen Nachteilen verbunden, da sie mit erheblichen Geruchsbelastungen verknüpft ist. Außerdem sind Flüssigkleber schwer zu handhaben. Daher werden Klebesysteme gesucht, die einen geringen Dampfdruck aufweisen und für eine sauberere Verarbeitung in flächiger Form zur Verfügung stehen. Dazu bieten sich hitzeaktivierbare Folien an. Da auch thermosensitive Substrate miteinander verklebt werden sollen, besteht der Bedarf, hitzeaktivierbare Folien anzubieten, die schon bei sehr geringen Temperaturen (T höchstens 90°C oder sogar nicht mehr als 80 °C oder weniger) verarbeitet werden können. Beispiele für besonders thermosensitive Substrate, die Verarbeitungstemperaturen deutlich oberhalb 80 °C nicht tolerieren, sind anodisiertes (eloxiertes) Aluminium, verschiedene (gegebenenfalls transparente) Kunststoffe und/oder Textilien, einige oberflächenmodifizierte Bauteile und Leder.

Der Fachmann ist daher interessiert an geeigneten und immer besseren Klebesystemen für doppelseitige Klebefilme zur Verklebung zum Beispiel solcher Abdeckgläser oder Linsen, Bau- und/oder Dekorteilen mit Halterungen und/oder Gehäusen und/oder untereinander, verschiedener Textilien und/oder Leder. Das Anforderungsprofil für Klebesysteme für diese Anwendungen umfasst eine hohe Ausstoßfestigkeit (also die Verklebungsfestigkeit des Bauteils in seiner Halterung, sogenannte "Push-Out-Festigkeit") und oft auch gleichzeitig hoher Schlagzähigkeit auch bei niedrigen Temperaturen, damit einzelne Bauelemente beim Herunterfallen nicht an der Klebefuge auseinanderbrechen. Im Hinblick auf die Verklebungsfestigkeit erscheinen Klebesysteme mit einer Schicht eines latentreaktiven Klebefilms sehr gut geeignet. Beispiele für latentreaktive Klebefilme sind bei Habenicht (G. Habenicht, Kleben, 6. Aufl., 2009, J. Springer, Heidelberg, S. 242-243) zu finden. Typisch für solche Systeme ist die Existenz eines Reaktivsystems innerhalb eines Films, bei dem die Reaktionspartner unterhalb der Verarbeitungsbedingungen (also zumeist bei reduzierter Temperatur) effektiv voneinander getrennt vorliegen oder einer der Reaktionspartner in seiner Reaktivität in anderer Weise gehemmt ist, so dass eine Reaktion/Härtung unter diesen Bedingungen im Wesentlichen unterdrückt ist. Viele solcher latentreaktiven Klebefilme, zum Beispiel solche auf Basis Epoxid/Dicyandiamid (B. Müller, W. Rath, Formulierung von Kleb- und Dichtstoffen, 2. Aufl., 2009, Vincentz Network, Hannover, S. 167-169) benötigen für die Härtung jedoch Temperaturen, die für empfindliche Bauteile zu hoch liegen. Nur spezielle Reaktivsysteme sind daher für die Verklebung empfindlicher Bauteile einsetzbar.

Als vorteilhaft für hohe Verklebungsfestigkeiten bei geringen Verklebungstemperaturen bieten sich Klebeprodukte mit mindestens einer Schicht eines latentreaktiven Klebefilms an, der eine thermoplastische Komponente, die funktionelle Gruppen enthält, die mit Isocyanat reagieren können, und eine Isocyanat-haltige Komponente, die partikulär in die thermoplastische Komponente eindispergiert vorliegt und gegebenenfalls blockiert (siehe z. B. B. Müller, W. Rath, Formulierung von Kleb- und Dichtstoffen, 2. Aufl., 2009, Vincentz Network, Hannover, S. 141-144 als technologisches Anschauungsmaterial), mikroverkapselt (siehe z. B. US 4,483,744 und J.-M. Pernot, B. Pouyet, H. Brun, S. Briancon in Microspheres, Microcapsules & Liposomes, Vol. 1, R. Arshady (Hrsg.), Citus Books, London, S. 441-456 als technologisches Anschauungsmaterial) oder im Bereich der Partikeloberfläche im Wesentlichen desaktiviert (siehe z. B. WO 99/29755 als technologisches Anschauungsmaterial) ist.

DE 10 2010 013 145 A1 beschreibt Klebemassen, die hitzeaktivierbar und latentreaktiv sind. Bei Raumtemperatur weisen sie leichte Haftklebrigkeit auf und nach einer ersten Erwärmung und Abkühlung noch für eine gewisse Zeit Klebrigkeit. Bevorzugt basieren diese Klebemassen auf Polyurethanen. Eine latent reaktive Klebemasse aus Lösung in einem organischen Lösemittel, mit einer exzellenten Topfzeit und Beschichtbarkeit von mindestens 1 Tag, bevorzugt mindestens 2 Tagen, noch bevorzugter mindestens 3 Tagen oder ein latent reaktiver Klebefilm auf Basis einer solchen Klebemasse oder ein Verbund aus zwei oder mehr Substraten, insbesondere solchen, von denen zumindest eines auf der zu verklebenden Seite anorganischen (hydrophilen) Charakter aufweist und/oder thermisch sensibel ist, die mittels eines latentreaktiven Klebefilms verklebt sind, insbesondere zur Verwendung für optische, elektronische und/oder feinmechanische Geräte und/oder thermisch sensible Substrate, mit einer thermischen Belastbarkeit von 80 °C, maximal 90 °C, wie zum Beispiel anodisiertes Aluminium, Leder, Kunstleder und/oder thermisch sensible Kunststoffsubstrate und/oder Textilien wird nicht beschrieben.

Die WO 99/29755 beschreibt reaktive Polyurethan-Klebesysteme auf Basis wässriger Polyurethan-Dispersionen. In die Matrix eines thermoplastischen Polyurethans, das noch funktionelle Gruppen für eine Reaktion mit Isocyanaten trägt, sind Polyisocyanat-Partikel, die an ihrer Oberfläche desaktiviert sind, eindispergiert. Bei einer ersten Temperatur schmilzt das thermoplastische Polyurethan. Bei einer Temperatur darüber löst sich die desaktivierte Partikeloberfläche auf und die Isocyanatgruppen können mit den funktionellen Gruppen des thermoplastischen Polyurethans reagieren. Die Formulierungen können unter anderem Silane enthalten. Silane in der Funktion eines Adhäsionspromotors auf diese Weise einzusetzen birgt allerdings den Nachteil, dass Silane in wässrigem Medium hydrolysieren und kondensieren können, so dass ihre Grenzflächenaktivität reduziert sein kann. Zusätzlich kann ihre Wirkweise beeinträchtigt werden durch mögliche weitere Bestandteile der Dispersion wie Stabilisatoren und Einstellmaßnahmen eines für die Stabilität der Dispersion wichtigen pH-Werts. Eine latent reaktive Klebemasse aus Lösung in einem organischen Lösemittel, mit einer exzellenten Topfzeit und Beschichtbarkeit von mindestens 1 Tag, bevorzugt mindestens 2 Tagen, noch bevorzugter mindestens 3 Tagen oder ein latent reaktiver Klebefilm auf Basis einer solchen Klebemasse oder ein Verbund aus zwei oder mehr Substraten, insbesondere solchen, von denen zumindest eines auf der zu verklebenden Seite anorganischen (hydrophilen) Charakter aufweist und/oder thermisch sensibel ist, die mittels eines latentreaktiven Klebefilms verklebt sind, insbesondere zur Verwendung für optische, elektronische und/oder feinmechanische Geräte und/oder thermisch sensible Substrate, mit einer thermischen Belastbarkeit von 80 °C, maximal 90 °C, wie zum Beispiel anodisiertes Aluminium, Leder, Kunstleder und/oder thermisch sensible Kunststoffsubstrate und/oder Textilien wird nicht beschrieben.

US 6,797,764 B2 beschreibt wässrige Klebeformulierungen auf Polyurethan-Basis. Diese können Adhäsionspromotoren wie Silane enthalten. Als Beispiel für zu verklebende Materialien werden neben Kunststoffen Edelstahl, Aluminium, Kupfer, Eisen, kalt gewalzter Stahl, und phosphatisierter Stahl angegeben. Eine latent reaktive Klebemasse aus Lösung in einem organischen Lösemittel, mit einer exzellenten Topfzeit und Beschichtbarkeit von mindestens 1 Tag, bevorzugt mindestens 2 Tagen, noch bevorzugter mindestens 3 Tagen oder ein latent reaktiver Klebefilm auf Basis einer solchen Klebemasse oder ein Verbund aus zwei oder mehr Substraten, insbesondere solchen, von denen zumindest eines auf der zu verklebenden Seite anorganischen (hydrophilen) Charakter aufweist und/oder thermisch sensibel ist, die mittels eines latentreaktiven Klebefilms verklebt sind, insbesondere zur Verwendung für optische, elektronische und/oder feinmechanische Geräte und/oder thermisch sensible Substrate, mit einer thermischen Belastbarkeit von 80 °C, maximal 90 °C, wie zum Beispiel anodisiertes Aluminium, Leder, Kunstleder und/oder thermisch sensible Kunststoffsubstrate und/oder Textilien wird nicht beschrieben. Die Klebemassen sind zudem nicht latent reaktiv.

WO 00/34403 A1 beschreibt wässrige Klebeformulierungen auf Polyurethan-Basis für die Verklebung von Gummiartikeln. Die Gummiartikel können mit einem Primer vorbehandelt sein. Die Offenbarung lehrt, dass die Hydrolysebeständigkeit von Polyestergruppen durch Zusatz von Epoxiden verbessert werden kann. Als Ursache für unerwünschte Hydrolyse werden chemische Abbauprodukte des Primers angegeben. Eine latent reaktive Klebemasse aus Lösung in einem organischen Lösemittel, mit einer exzellenten Topfzeit und Beschichtbarkeit von mindestens 1 Tag, bevorzugt mindestens 2 Tagen, noch bevorzugter mindestens 3 Tagen oder ein latent reaktiver Klebefilm auf Basis einer solchen Klebemasse oder ein Verbund aus zwei oder mehr Substraten, insbesondere solchen, von denen zumindest eines auf der zu verklebenden Seite anorganischen (hydrophilen) Charakter aufweist und/oder thermisch sensibel ist, die mittels eines latentreaktiven Klebefilms verklebt sind, insbesondere zur Verwendung für optische, elektronische und/oder feinmechanische Geräte und/oder thermisch sensible Substrate, mit einer thermischen Belastbarkeit von 80 °C, maximal 90 °C, wie zum Beispiel anodisiertes Aluminium, Leder, Kunstleder und/oder thermisch sensible Kunststoffsubstrate und/oder Textilien wird nicht beschrieben. Die Klebemassen sind zudem nicht latent reaktiv.

WO 2013/127697 A1 betrifft die Verklebung von eloxiertem Aluminium mit einem Kunststoff mittels eines Polyurethan-basierenden latentreaktiven Klebefilms auf Basis einer wässrigen Emulsion. Kunststoffmaterialien können oberflächenmodifiziert sein und anorganische Schichten tragen. Eine latent reaktive Klebemasse aus Lösung in einem organischen Lösemittel, mit einer exzellenten Topfzeit und Beschichtbarkeit von mindestens 1 Tag, bevorzugt mindestens 2 Tagen, noch bevorzugter mindestens 3 Tagen oder ein latent reaktiver Klebefilm auf Basis einer solchen Klebemasse oder ein Verbund aus zwei oder mehr Substraten, insbesondere solchen, von denen zumindest eines auf der zu verklebenden Seite anorganischen (hydrophilen) Charakter aufweist und/oder thermisch sensibel ist, die mittels eines latentreaktiven Klebefilms verklebt sind, insbesondere zur Verwendung für optische, elektronische und/oder feinmechanische Geräte und/oder thermisch sensible Substrate, mit einer thermischen Belastbarkeit von 80 °C, maximal 90 °C, wie zum Beispiel anodisiertes Aluminium, Leder, Kunstleder und/oder thermisch sensible Kunststoffsubstrate und/oder Textilien wird nicht beschrieben.

DE 102018206632 A1 betrifft einen latent reaktiven Klebefilm aus Lösung in einem organischen Lösemittel. Ein latent reaktiver Klebefilm zur Verklebung eines Verbundes aus zwei oder mehr Substraten, insbesondere solchen mit einer thermischen Belastbarkeit von 80 °C, maximal 90 °C, wie zum Beispiel anodisiertes Aluminium, Leder, Kunstleder und/oder thermisch sensible Kunststoffsubstrate und/oder Textilien wird nicht beschrieben. WO 9325599 A1 betrifft Schmelzklebemassen aus schmelzbaren Polymeren oder Polymermischungen, die bei Temperaturen über 40 ° C, besonders über 55° C in den flüssigen Zustand übergehen, welche isocyanatreaktive funktionelle Gruppen, wie Hydroxyl- oder Amino-gruppen, tragen, mit pulverförmigen, festen, oberflächendesaktivierten Isocyanaten mit mindestens zwei Isocyanatgruppen, oder einer Suspension oder Dispersion aus pulverförmigen, festen, Di- oder Polyisocyanaten, die mit einem Desaktivierungsmittel oberflächenbehandelt sind, in einer schwerflüchtigen Trägerflüssigkeit, in ungefähr stöchiometrischem Verhältnis bei einer Temperatur von mindestens 40° C inhomogen vermischt werden, so dass die resultierende Stoffmischung Teilbereiche aufweist, in denen das Verhältnis Polymer zu festem Isocyanat und Desaktivierungsmittel verschieden, das heißt grösser bzw. kleiner ist als das durchschnittliche Verhältnis dieser Stoffe oder Stoffgemische in der gesamten Stoffmischung, die inhomogene Mischung in einer der vorgesehenen Anwendung entsprechenden Form ausgetragen und durch Abkühlen unter den Erweichungspunkt der Mischung verfestigt wird. Eine latent reaktive Klebemasse aus Lösung in einem organischen Lösemittel, mit einer exzellenten Topfzeit und Beschichtbarkeit von mindestens 1 Tag, bevorzugt mindestens 2 Tagen, noch bevorzugter mindestens 3 Tagen oder ein latent reaktiver Klebefilm auf Basis einer solchen Klebemasse oder ein Verbund aus zwei oder mehr Substraten, insbesondere solchen, von denen zumindest eines auf der zu verklebenden Seite anorganischen (hydrophilen) Charakter aufweist und/oder thermisch sensibel ist, die mittels eines solchen latentreaktiven Klebefilms verklebt sind, wird nicht beschrieben.

Eine zentrale Anforderung an Geräte der modernen Unterhaltungselektronik und/oder Kommunikationselektronik und/oder Geräten der Datenverarbeitung und/oder Haushaltselektronik und insbesondere mobilen Geräten ist zudem die Beständigkeit unter Feucht-/Wärme-Bedingungen. So werden Verbundfestigkeiten für verklebte Substrate in ihrer Festigkeit vor und nach Feucht-/Wärme-Lagerung bestimmt und verglichen. Ein zu starker Abfall der Verklebungsfestigkeit unter diesen Bedingungen, insbesondere unterhalb des Niveaus von Selbstklebemassen / Selbstklebebändern (PSAs) ist unerwünscht. Die Verklebungsfestigkeit anorganischer (hydrophiler) Oberflächen mit einem Polyurethan-basierenden latentreaktiven Klebefilm wird durch Einwirkung von feuchtwarmem Klima beeinflusst. Es besteht daher auch die Aufgabe, einen Verbund zur Verfügung zu stellen mit zumindest einem Substrat, das auf der zu verklebenden Seite anorganischen (hydrophilen) Charakter aufweist (Glas, Keramik, Metall und entsprechend anorganisch (hydrophil) beschichtete Materialien, die selbst organischer Natur sein können), und mit einem latentreaktiven Klebefilm, der bei relativ geringen Temperaturen in einer Heißpresse schnell härtbar ist, so dass die Verklebungsfestigkeit des Verbunds weniger stark oder gar nicht durch die Einwirkung von feuchtwarmem Klima negativ beeinträchtigt wird und bei dem die Verklebungsfestigkeit unter feuchtwarmen Lagerungsbedingungen nicht stark abfällt, insbesondere nicht unter das Niveau eines PSAs. Insbesondere bei mobilen (elektronischen) Geräten wird zudem häufig eine Schockbeständigkeit der Verklebungen gefordert.

Des Weiteren wird bei Geräten der modernen Unterhaltungselektronik und/oder Kommunikationselektronik und/oder Geräten der Datenverarbeitung und/oder Haushaltselektronik und insbesondere mobilen Geräten eine breite Beständigkeit gegen chemische Einflüsse gefordert, nach deren Einwirken die Verklebungsfestigkeit ebenfalls nicht zu stark abfällt, insbesondere nicht unter das Niveau einer Verklebung mit einem PSA (<1 MPa im Push-Out-Test). Beispielhaft für solche Chemikalien seien Gemische aus Ethanol und Wasser für polare Chemikalien und Ölsäure für unpolare und/oder tensidähnliche Chemikalien genannt.

Aufgabe der Erfindung ist es, latentreaktive Klebmassen und Klebeprodukte - wie Klebefilme - weiter zu optimieren und Zubereitungen zu deren Herstellung zur Verfügung zu stellen.

Gelöst werden konnte diese Aufgabe durch latentreaktive Klebmassen auf Basis isocyanatreaktiver Polymere und isocyanathaltigen Vernetzern, die aus organischer Lösung erhältlich sind.

Gegenstand der Erfindung ist dementsprechend eine Zubereitung zur Herstellung eines Klebstoffs, umfassend
i) eine thermoplastische, bevorzugt (semi)kristalline, Polymer-Komponente, gebildet aus mindestens einem Polymeren, das funktionelle Gruppen enthält, die mit Isocyanat reagieren können,
ii) eine Vernetzer-Komponente, gebildet aus mindestens einer Isocyanat-haltigen, partikulären Verbindung,
x) eine Lösemittel-Komponente, gebildet aus mindestens einem organischen Lösemittel, wobei die Polymer-Komponente im Wesentlichen im organischen Lösemittel gelöst vorliegt, und wobei weiterhin die Isocyanat-haltige Komponente bei Raumtemperatur (23 °C) im Wesentlichen weder in der lösemittelfreien Polymer-Komponente noch in dem organischen Lösemittel löslich ist.

Dabei sind die Komponenten (i) und (ii) Bestandteile der aus der Zubereitung erhältlichen Klebmasse, während die Komponente (x) hauptsächlich als Prozesshilfsmittel für die erfindungsgemäße Zubereitung (Vorstufe der Klebmasse) dient.

Der Begriff "mindestens eine/r/s" ist - wie üblich - demgemäß zu verstehen, dass die thermoplastische, bevorzugt (semi)kristalline, Polymer-Komponente aus einem oder mehreren Polymeren mit funktionellen Gruppen, die mit Isocyanat reagieren können, gebildet wird, und dass die Vernetzer-Komponente aus einer oder mehreren Isocyanat-haltigen, partikulären Verbindungen gebildet wird, und dass die Lösemittel-Komponente aus einem oder mehreren organischen Lösemitteln gebildet wird. Sofern im Folgenden von den Eigenschaften "des mindestens einen" Vertreters der jeweiligen Komponente gesprochen wird, gelten die beschriebenen Eigenschaften insbesondere für alle Vertreter der jeweiligen Komponente, wenn davon mehrere vorliegen.

Die Begriffe "im Wesentlichen" und "signifikant" werden im Rahmen dieser Schrift derart verwendet, dass auf die Bedeutung für die Erfindung abgestellt wird. Ist die Polymerkomponente "im Wesentlichen" im organischen Lösemittel gelöst, so können geringfügige ungelöste Anteile des Polymers vorliegen, insbesondere sofern sie die Umsetzung der Lehre der Erfindung nicht in Frage stellen. Findet eine Reaktion "im Wesentlichen" nicht statt, so schaden geringfügig bereits einsetzende Reaktionsvorgänge der Erfindung nicht. So zeigen etwa in der Wärme ablaufende Reaktionsmechanismen üblicherweise auch bei geringeren Temperaturen bereits geringfügige Reaktionsabläufe (siehe hierzu die Theorie der Gleichgewichtsreaktionen).

Mittels der erfindungsgemäßen Zubereitung kann für den Fachmann in nicht erwarteter Weise ein latentreaktiver Klebstoff, insbesondere in Filmform, aus einem organisch gelösten Polymer in neuer Weise angeboten werden, der besonders vorteilhafte Klebeigenschaften aufweist.

Dies ist für den Fachmann insbesondere überraschend, da dies sowohl für die Verwendung oberflächlich deaktivierter, isocyanathaltiger, partikulärer Verbindungen, als auch für die Verwendung nicht oberflächlich deaktivierter, partikulärer isocyanathaltiger Verbindungen als Vernetzerkomponenten gilt, obwohl dies der Fachmann durch die Publikationen "Lagerstabile latent-reaktive Klebfolien" (Jörg Büchner, Wolfgang Henning, Horst Stepanski, Bolko Raffel; Adhäsion 7-8.05) und "Latent reaktiv und lagerfähig" (Jörg Büchner, Wolfgang Henning; Adhäsion 6/2007) ausdrücklich ausschließt.

Ähnlich zum Stand der Technik erhalten die Zubereitungen zur Herstellung von (insbesondere latentreaktiven) Klebemassen und daraus erhältlicher latentreaktiver Klebefilme eine thermoplastische Komponente, die eine Schmelztemperatur, T(Schmelz), aufweist und funktionelle Gruppen enthält, die mit Isocyanat reagieren können, sowie eine Isocyanat-haltige Komponente, die partikulär, insbesondere feinteilig partikulär (bevorzugt mit einer Partikelgrößenverteilung mit d₅₀ < 50 µm, insbesondere < 15 µm) vorliegt. Im Gegensatz zum Stand der Technik sind die Polymerkomponente und die IsocyanatKomponente jedoch nicht in wässrigem Milieu dispergiert, sondern das Polymer liegt in einem organischen Lösemittel gelöst vor, und die Isocyanat-Verbindung ist in diesem Lösemittel fein verteilt dispergiert.

Die Zusammensetzung enthält somit eine Polymer-Komponente (Komponente (i)), gebildet aus mindestens einem Polymeren, das funktionelle Gruppen enthält, die mit Isocyanat reagieren können (im Folgenden auch als isocyanatreaktives Polymer bezeichnet). Diese Polymer-Komponente stellt die polymere Basis für die aus der Zusammensetzung herstellbaren Klebmasse dar. In der erfindungsgemäßen Zusammensetzung liegt die polymere Komponente (i) organisch gelöst vor.

Als Polymer-Komponente kommen beispielweise solche Verbindungen zum Einsatz, die mit OH- und/oder NH₂-Gruppen und/oder Urethan-Gruppen funktionalisiert sind.

In einer sehr bevorzugten Vorgehensweise handelt es sich bei dem mindestens einen isocyanatreaktiven Polymer um ein zumindest teilkristallines Polymer, also ein semikristallines oder kristallines Polymer. (Semi)Kristalline Stoffe können mittels Differential Scanning Calorimetry (DSC) nach DIN 53765:1994-03 bestimmt werden. Bei amorphen Stoffen treten Glasübergangstemperaturen auf, bei (rein) kristallinen Stoffen Schmelztemperaturen. Glasübergangstemperaturen sind dabei als Stufen, Schmelztemperaturen als Peak im Thermogramm erkennbar. Semikristalline Stoffe können Glasübergangstemperaturen neben Schmelztemperaturen aufweisen. Bei (semi)kristallinen Stoffen ist jedenfalls zumindest eine Schmelztemperatur erkennbar, während diese bei amorphen Stoffen nicht auftreten.

Für (semi)kristalline Polymere hat sich gezeigt, dass die Anforderung der Nicht-Lösbarkeit der partikulären Isocyanat-haltigen Verbindung hierin - im Zustand der Zubereitung, insbesondere also bei Raumtemperatur - in der Regel besser erfüllt wird als bei amorphen Systemen. Erst bei Erwärmung der später erhaltenen Klebmasse, insbesondere auf die Schmelz- und/oder Dekristallisationstemperatur, wird eine hinreichende Verträglichkeit von Polymer-Komponente und Vernetzer-Komponente bewirkt.

In einer weiteren bevorzugten Ausführung ist das mindestens eine isocyanatreaktive Polymer ein Polyurethanpolymer, und noch weiter bevorzugt in Verbindung mit der vorstehend genannten vorteilhaften Ausführung ein kristallines oder semikristallines Polyurethanpolymer, beispielweise Polyurethanester.

Vorzugsweise besitzt das thermoplastische Polyurethan eine Erweichungstemperatur und/oder Dekristallisationstemperatur von kleiner als 90 °C, bevorzugt kleiner als 80 °C, noch bevorzugter kleiner als 70 °C.

In einer besonders bevorzugten, erfindungsgemäßen Ausführungsform wird ein hydroxyl-terminiertes, weitgehend lineares, thermoplastisches, stark kristallisierendes Polyurethan-Elastomer als isocanatreaktives Polymer eingesetzt. Ein solches Polymer ist etwa unter dem Namen Desmomelt 530^{®} im Handel bei der Covestro Deutschland AG erhältlich.

Es können jedoch auch weniger stark kristallisierende und/oder verzweigte und/oder polyfunktionelle Polymere vorteilhaft sein, wenn zum Beispiel bezüglich einer noch besseren chemischen Beständigkeit und/oder Verklebungsfestigkeit und/oder Härte, wenn eine höhere Vernetzungsdichte vorteilhaft ist.

Die erfindungsgemäße Zubereitung enthält weiterhin eine Vernetzer-Komponente für die zu vernetzenden Polymere, die aus mindestens einer Isocyanat-haltigen partikulären Komponente (Komponente (ii)) gebildet wird.

Die Isocyanat-verbindungen können dabei oberflächendeaktiviert oder nicht oberflächendeaktiviert eingesetzt werden. Dies stellt einen Vorteil zum Stand der Technik dar, der zwingend oberflächendeaktivierte Isocyanatverbindungen für latent reaktive Klebmassen fordert.

Da die Zubereitung ein zumindest zweiphasiges System darstellt, nämlich die Polymerlösung und die partikulär vorliegende Isocyanat-haltige Komponente, findet ein wesentliches Einsetzen der Härtungsreaktion in diesem Zustand nicht statt. Auch nach einem Ausstreichen der Zubereitung auf einen temporären oder permanenten Träger und dem Trocknen, also dem Abziehen des Lösemittels- vollständig oder bis zu einem geringen Restlösemittelanteil von wenigen Prozent - ist die Zusammensetzung über einen langen Zeitraum lagerfähig, ohne dass die Härtungsreaktion signifikant einsetzt, so dass die Anwendbarkeit des aus dieser Zubereitung erhaltenen, latent reaktiven Klebefilms innerhalb von mindestens 3 Monaten, bevorzugt mindestens 6 Monaten, noch bevorzugter mindestens 9 Monaten oder länger mit dem Erzielen des geforderten Eigenschaftsprofils (>= 2 MPa im Push-Out-Test auf anodisiertem Aluminium und/oder Polycarbonat und >= 1 MPa im Push-Out-Test [sehr gutes PSA ohne Feucht-Wärme-Lagerung oder nach chemischer Belastung] nach Feucht-Wärme-Lagerung [72 h bei 60 °C und 95 % relativer Feuchter und/oder 72 h bei 85 °C und 85 % relativer Feuchte], bevorzugt auch >= 1 MPa im Push-Out-Test nach 72 h Lagerung bei 60 °C in Ölsäure, noch bevorzugter auch >= 1 MPa im Push-Out-Test nach 72 h Lagerung bei 60 °C in einem Gemisch aus Ethanol und Wasser [75 Volumenanteile : 25 Volumenanteile]) gewährleistet ist.

In einer bevorzugten Vorgehensweise werden ganz oder teilweise Toluylen-diisocyanat-Verbindungen (TDI-Verbindungen) als Isocyanat-haltige Komponente eingesetzt, wie TDI-Dimere (etwa erhältlich als Dispercoll BL XP 2514^{®} (wässrige Dispersion eines reaktiven Isocyanats auf Basis TDI-Dimer; vorliegend vorzugsweise einsetzbar nach Entfernung des Wassers) oder als Dancure 999^{®} (1,3-Bis(3-isocyanato-4-methylphenyl)-1,3-diazetidin-2,4-dion; Feststoff)), und/oder Isophoron-Diisocyanate (IPDI).

In einer einfachsten, erfindungsgemäßen Ausführung besteht die Formulierung nur aus einem erfindungsgemäßen Polymer und einer erfindungsgemäßen isocyanathaltigen Verbindung in einem erfindungsgemäßen Lösemittel. Das Verhältnis zwischen dem erfindungsgemäßen Polymer und der erfindungsgemäßen isocyanathaltigen Verbindung wird so gewählt, dass der daraus resultierende, latent reaktive Film das erfindungsgemäße und gegebenenfalls erwünschte Eigenschaftsprofil aufweist. Vorteilhaft setzt der Fachmann die mindestens erforderliche Menge an erfindungsgemäßer isocyanathaltiger Verbindung ein, die stöchiometrisch notwendig ist, um die isocyanatreaktiven Gruppen des erfindungsgemäßen Polymers zu vernetzen.

Weiter vorteilhaft setzt der Fachmann mehr als diese notwendige Menge an erfindungsgemäßer isocyanathaltiger Verbindung ein, insbesondere um unbeabsichtigte Reaktionen der erfindungsgemäßen isocyanathaltigen Verbindung zum Beispiel mit Restfeuchte des verwendeten, erfindungsgemäßen Lösemittels und/oder Feuchteeintrag über die Luftfeuchtigkeit, während beispielsweise der Lagerung und/oder Transport und/oder Applikation des aus der erfindungsgemäßen Zubereitung ausgeformten und anschließend getrockneten latent reaktiven Klebefilms auszugleichen oder wenn zum Beispiel weitere isocyanatreaktive Komponenten der erfindungsgemäßen Formulierung hinzugegeben werden.

Es kann weiter vorteilhaft sein, höhere Mengen der erfindungsgemäßen isocyanathaltigen Verbindung einzusetzen, wenn zum Beispiel die Schmelzviskosität des erfindungsgemäßen Polymers und/oder die Schmelzviskosität des latent reaktiven Klebefilms hoch sind, so dass eine ausreichende Löslichkeit und/oder Migrationsfähigkeit in der geforderten Applikationszeit nicht gewährleistet ist. Hier kann das Temperatur-Zeit-Verhältnis durch Erhöhung des Gehaltes an erfindungsgemäß isocyanathaltiger Verbindung positiv beeinflusst werden. In diesem Fall bliebe nach der Vernetzung nicht reagierte Anteile der erfindungsgemäß isocyanathaltigen Verbindung im Klebefilm erhalten.

Es kann ebenso vorteilhaft sein, weniger als die stöchiometrisch notwendige Menge an erfindungsgemäß isocyanathaltiger Verbindung einzusetzen, zum Beispiel wenn es sich bei dem eingesetzten, erfindungsgemäßen Polymer um ein verzweigtes und/oder polyisocyanatreaktives Polymer handelt, um eine zu hohe Vernetzungsdichte, gegebenenfalls einhergehend mit einer Versprödung, zu vermeiden oder um ein für die Anwendung gefordertes (zum Beispiel viskoelastisches) Eigenschaftsprofil des aus der erfindungsgemäßen Zubereitung ausgeformten und anschließend getrockneten latent reaktiven Klebefilms zu erzielen.

Vorteilhaft werden 1 Gewichtsprozent bis 25 Gewichtsprozent, besonders vorteilhaft 2 Gewichtsprozent bis 15 Gewichtsprozent, ganz besonders vorteilhaft 4 Gewichtsprozent bis 10 Gewichtsprozent der Komponenten der Formulierung aus erfindungsgemäßen isocyanathaltigen Verbindungen gewählt.

Das eingesetzte, erfindungsgemäße Lösemittel findet bei dieser Berechnung keine Berücksichtigung, dieses ist lediglich als Prozesshilfsmittel zu verstehen, um die Komponenten der erfindungsgemäßen Formulierung homogen zu vermengen und eine Viskosität einzustellen, die ein Beschichten der erfindungsgemäßen Formulierung im gewünschten Beschichtungsverfahren, zum Erhalt des aus der erfindungsgemäßen Zubereitung ausgeformten und anschließend getrockneten latent reaktiven Klebefilm in der gewünschten Schichtdicke zu ermöglichen.

Als Lösemittel-Komponente (x) kann ein organisches Lösemittel oder ein Gemisch miteinander verträglicher organischer Lösemittel eingesetzt werden, in dem die Polymer- Komponente im Wesentlichen löslich und die Vernetzer-Komponente im Wesentlichen unlöslich ist. Grundsätzlich können die üblichen organischen Lösemittel gewählt werden, die Löslichkeit beziehungsweise Nichtlöslichkeit der genannten Komponenten hierin kann der Fachmann durch Fachkenntnis auf einfache Weise herausfinden. Beispiele für verwendbare Lösemittel sind Aceton und 2-Butanon, ohne sich durch deren Nennung hierauf beschränken zu wollen.

Die erfindungsgemäße Zubereitung kann optional weiterhin eine Haftvermittler-Komponente (iii) umfassen. Diese wird insbesondere gebildet aus mindestens einer organofunktionellen Silanverbindung, etwa der allgemeinen Formel R-SiX₃, wobei R einen organisch funktionalisierten Rest und X eine hydrolysierbare Gruppe bezeichnet. Durch die organische Gruppe des Silans kann eine Anbindung an den Klebstoff bewirkt werden; beispielweise durch eine neu gebildete kovalente Bindung. Die organisch funktionalisierte Rest R stellt häufig einen längeren Molekülteil dar (Spacer, häufig umfassend eine Alkylkette) der in der Regel eine funktionelle Gruppe aufweist und deren Funktion es ist, an die Substratoberfläche und/oder an Komponenten der Klebmasse anzubinden. Typische funktionelle Gruppen sind Vinyl-, Methacrylsäure-, Glycidyl-, Epoxy-, Epoxid-, Amino-, Harnstoff- oder Thiol-Gruppen. Als hydrolysierbare Gruppen X werden beispielsweise Alkoxygruppen, seltener auch Halogengruppen genutzt. Vorteilhaft verwendbar sind beispielweise Epoxy- oder Epoxidterminierte Silane, auf einem Epoxy- oder Epoxidsilan basierende Verbindungen oder/oder Alkylphosphonsäuren. Beispiele für Silanverbindungen, die allein oder gemeinsam im Sinne der Haftvermittler-Komponente einsetzbar sind, sind Aminopropyltrimethoxysilan, 3-Glycidyloxypropyltrimethoxysilan (kommerziell erhältlich unter dem Namen Glymo^{®}) und β-(3,4-epoxycyclohexyl)ethyltriethoxysilan (kommerziell erhältlich unter dem Namen CoatOSil 1770^{®}).

Da silanhaltige Haftvermittler hydrolyseempfindlich sind, bietet die auf organische Lösung basierende Zubereitung - im Vergleich zu den im Stand der Technik bekannten wässrigen Systemen - eine verbesserte Möglichkeit zum Einsatz von eingemischten Haftvermittlern in polyurethanbasierenden Klebemassen.

Der Anteil eines erfindungsgemäßen Haftvermittlers beträgt vorteilhaft 0,5 Gewichtsprozent bis 6 Gewichtsprozent, besonders vorteilhaft 1 Gewichtsprozent bis 4 Gewichtsprozent, ganz besonders vorteilhaft 1,5 Gewichtsprozent bis 3 Gewichtsprozent an der erfindungsgemäßen Formulierung ohne Lösemittel.

Eine bevorzugte Ausführung der Erfindung ist dadurch gegeben, dass die Zusammensetzung der Zubereitung durch die Komponenten (i), (ii) und (x) abschließend ist, also außer den Komponenten (i), (ii) und (x) keine weiteren Komponenten oder Zusatzstoffe anwesend sind. Eine weitere bevorzugte Ausführung der Erfindung weist neben den Komponenten (i), (ii) und (x) noch die Komponente (iii) auf, ist aber ansonsten abschließend, weist also außer diesen vier Komponenten keine weiteren Komponenten oder Zusatzstoffe auf.

Eine sehr bevorzugte Ausführung der Erfindung betrifft eine Zusammensetzung aus
- einem hydroxyl-terminierten, weitgehend linearen, thermoplastischen, stark kristallisierenden Polyurethan-Elastomer (Desmomelt 530^{®}) (Komponente (i)), gelöst in
- einem organischen Lösemittel (Komponente (x)), wie Aceton oder 2-Butanon,
- und partikulär feinverteilt vorliegendem, in der Lösung dispergiertem TDI-Dimer (Komponente (ii), insbesondere 1,3-Bis(3-isocyanato-4-methylphenyl)-1,3-diazetidin-2,4-dion (DANCURE 999^{®}).

Die vorteilhafte Zusammensetzung kann auf die vorstehenden drei Komponenten (i), (ii) und (x) beschränkt sein, in vorteilhafter Weiterentwicklung aber zusätzlich noch eine oder mehrere organofunktionelle Silanverbindungen als Haftvermittler-Komponente (iii) enthalten, wie Glycidyloxypropyltrimethoxysilan und/oder β-(3,4-Epoxycyclohexyl)ethyltriethoxysilan.

Die vorteilhafte Zusammensetzung kann auf die vorstehenden vier Komponenten (i), (ii), (iii) und (x) beschränkt sein, in vorteilhafter Weiterentwicklung aber zusätzlich noch eine oder mehrere Komponenten (iv) aus der Gruppe der Epoxide und/oder Epoxy-Verbindungen, umfassend ein-, di-, tri- oder polyfunktionelle Epoxide und/oder Epoxy-Verbinden enthalten. Dazu zählen zum Beispiel bei 23 °C flüssige / viskose Verbindungen wie N,N,N',N'-Tetrakis(2,3-epoxypropyl)-m-xylol-a,a'-diamin und/oder 7-oxabicyclo-[4.1.0]hept-3-ylmethyl 7-oxabicyclo[4.1.0]heptane-3-carboxylate und/oder Verbindungen mit einem Schmelz- / Erweichungspunkt über 23 °C (sog. Epoxy- / Epoxidharze) wie Epiclon N-673.

Die vorteilhaft beschriebenen Zusammensetzungen können auf diese Komponenten beschränkt sein, jedoch weiter vorteilhaft auch weitere Additive und/oder Komponenten (v), siehe nachfolgend, etwa insbesondere Klebharze, enthalten.

Dazu zählen Verdicker, Netzmittel, Entschäumer, Füllstoffe (z. B. thermisch und/oder elektrisch leitende), organische und/oder anorganische (Farb-)Pigmente, organische und/oder anorganische Füllstoffe, Schäumungsmittel (z.B. Mikroballons), Katalysatoren, Alterungsschutzmittel, Lichtschutzmittel und weitere Polymere zur Einstellung spezieller Klebeeigenschaften. Spezielle Klebeeigenschaften lassen sich beispielsweise durch Zumischen amorpher Polymere (z. B. Polyetherurethane oder Polyacrylate) und/oder durch Zumischen von Klebharzen einstellen.

Dabei können für die vorliegende Erfindung optional Klebharze verwendet werden, um die haftklebrigen Eigenschaften des aus der erfindungsgemäßen Zubereitung ausgeformten und anschließend getrockneten Klebstofffilms zu justieren beziehungsweise diesen erst haftklebrig zu machen. Klebharze, wie sie für Klebmassen, häufig eingesetzt werden, unterscheiden sich von Reaktivkomponenten, letztere werden oft auch Reaktivharze genannt. Unter einem "Klebharz" wird entsprechend dem allgemeinen Fachmannverständnis ein oligomeres oder polymeres Harz verstanden, das die Adhäsion (den Tack, die Eigenklebrigkeit) der Klebemasse im Vergleich zu der kein Klebharz enthaltenden, ansonsten aber identischen Klebemasse bewirkt beziehungsweise erhöht und/oder beeinflusst. Typischerweise enthalten Klebharze außer Doppelbindungen (im Fall der ungesättigten Harze) keine reaktiven Gruppen, da sich ihre Eigenschaften über die Lebensdauer der Klebmasse nicht ändern sollen. Insbesondere sind Klebharze im Unterschied zu den Reaktivkomponente(n) (Reaktivharzen) solche oligomeren oder polymeren Verbindungen, die an Härtungsreaktionen nicht oder nicht maßgeblich teilnehmen.

Als Klebharze können beispielsweise auf Terpenphenol oder Kolophonium basierende Harze eingesetzt werden, wie partiell oder vollständig hydrierte Harze auf Basis von Kolophonium und Kolophoniumderivaten. Weiterhin geeignete Klebharze sind hydrierte Polymerisate des Dicyclopentadiens, partiell, selektiv oder vollständig hydrierte Kohlenwasserstoffharze auf Basis von C5-, C5/C9- oder C9-Monomerströmen, Polyterpenharze auf Basis von α-Pinen und/oder β-Pinen und/oder δ-Limonen und/oder Δ3-Caren, hydrierte Polymerisate von bevorzugt reinen C8- und C9-Aromaten. Vorgenannte Klebharze können sowohl allein als auch im Gemisch eingesetzt.

Die vorstehend erwähnten Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester, Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein.

Auch Klebharze auf der Basis von Acrylaten und Methacrylaten lassen sich erfindungsgemäß einsetzen.

Auf die Darstellung des Wissensstandes im "Handbook of Pressure Sensitive Adhesive Technology" von Donatas Satas (van Nostrand, 1989) Kapitel 25 "Tackifier Resins" sei hingewiesen.

Die erfindungsgemäßen Zubereitungen eignen sich hervorragend zur Herstellung von latentreaktiven Klebmassen. Latentreaktive Klebemassen - insbesondere auch in Form von Klebefilmen - sind solche, die bei Normalklima nicht oder nur über einen Zeitraum von Monaten aushärten und damit lagerstabil sind, die aber bei deutlich höheren Temperaturen aktivierbar sind und aushärten. Die latente Reaktivität bietet den Vorteil, dass diese Klebemasse, insbesondere Klebefilme, bei Normalklima gelagert, transportiert und weiter verarbeitet werden können (beispielsweise zu Stanzteilen) bevor sie dann an der Verklebungsstelle zum Einsatz kommen und ausgehärtet werden.

Die Klebmassen aus der erfindungsgemäßen Zubereitung und die daraus hergestellten Klebeprodukte - wie Klebefilme - weisen eine besonders gute Feucht-Wärme-Beständigkeit sowie eine gute Beständigkeit gegen chemische Einflüsse (sogenannte "chemical resistance") auf, diese Eigenschaften sind denen aus wässrigen Systemen regelmäßig überlegen. Sie sind daher auch dann sehr gut geeignet, wenn diesbezüglich sehr anspruchsvolle Lagerungsbedingungen vorliegen. Die genannten Beständigkeiten zeichnen sich insbesondere dadurch aus, dass auch die entsprechend gelagerten Filme beziehungsweise den entsprechenden Einflüssen ausgesetzten Klebemassen beziehungsweise Klebeprodukte zu Verklebungen führen, deren Eigenschaften nach der Verklebung, insbesondere deren Verklebungsfestigkeiten, sehr gut sind. Klebemassen, die schlechtere Feucht-Wärme-Eigenschaften beziehungsweise schlechtere chemische Beständigkeit besitzen, führen hingegen zu Verklebungsprodukten mit geringerer Stabilität, wenn die noch nicht ausgehärte Klebemasse solchen Bedingungen ausgesetzt war und/oder das Verklebungsprodukt solchen Bedingungen ausgesetzt wird.

Besonders bevorzugt zeigen die latent reaktiven Klebmassen beziehungsweise daraus hergestellte latent reaktive Klebefilme eine hervorragende Feucht-Wärme-Beständigkeit auf polaren Substraten (insbesondere anodisiertem Aluminium) auf; vorteilhaft entsprechend Werten im Pushout-Test von mindestens 1 MPa nach einer Lagerung für 72 h bei 60 °C und 95 % relativer Feuchte und/oder nach einer Lagerung für 72 h bei 85 °C und 85 % relativer Feuchte, besonders vorteilhaft zudem eine sehr gute Chemikalienbeständigkeit, entsprechend Werten im Push-Out-Test von mindestens 1 MPa nach einer Lagerung für 72 h bei 60 °C in Ölsäure und/oder nach einer Lagerung für 72 h bei 60°C in EtOH/H₂O (75 % Volumenanteile / 25 % Volumenanteile, ganz besonders vorteilhaft zudem noch von mindestens 1 MPa oder mehr nach einer Lagerung für 72 h bei 60 °C in Chemikalien / Mischungen aus zum Beispiel der Gruppe der haushaltsüblichen Chemikalien / Gemischen (zum Beispiel Spülmitteln, Reinigern, Kosmetikprodukten, Deos und/oder Parfüms und/oder Aftershaves, Ölen und/oder Fetten, Säuren und/oder verdünnten Säuren, Laugen und/oder verdünnten Laugen, Getränken, Spirituosen, organischen Lösemitteln, Farben, Lacken, Verdünnern, Kraftstoffen) und/oder aus der Gruppe der menschlichen Absonderungen (zum Beispiel Schweiß, Sebum, Urin, Kot, Blut, Gewebsflüssigkeiten, Speichel, andere Körperflüssigkeiten und/oder Sekrete). Je nach gewünschter Anwendung der erfindungsgemäßen latent reaktiven Klebmasse beziehungsweise des daraus hergestellten Klebefilms kann ein Wert im Push-Out-Test von mindestens 1 MPa nach 72 h Lagerung in Dämpfen von vorgenannten Chemikalien / Mischungen bzw. Chemikalien / Mischungen der vorgenannten Gruppen weiter vorteilhaft sein.

Zur Herstellung latent reaktiver Klebemassen wird insbesondere das Lösemittel weitgehend entfernt, bis nur noch ein geringer Restlösemittelanteil, bevorzugt nicht mehr als 2 Gewichtsprozent, besonders bevorzugt nicht mehr als 1 Gewichtsprozent, ganz besonders bevorzugt nicht mehr als 0,5 Gewichtsprozent in der Zubereitung verbleiben. Dies kann insbesondere durch Erhitzen geschehen, wobei die Temperatur der Klebmasse jedoch unterhalb der Aktivierungstemperatur der Härtungsreaktion liegen sollte. Das Entfernen des Lösemittels kann beispielsweise in einem Trockenofen und/oder einem Trockenkanal erfolgen und/oder einer anderweitigen technischen Lösung erfolgen, die sicherstellt, dass die Trocknungstemperatur (der Formulierung und/oder des Klebefilms) unterhalb der Aktivierungstemperatur des latent reaktiven Klebefilms verbleibt bzw. nur so lange überschritten wird, dass der latent reaktive Klebefilm nach der Trocknung immer noch das erfindungsgemäße Eigenschaftsprofil aufweist.

In einer bevorzugten Variante erfolgt die Entfernung des Lösemittels, nachdem die Zubereitung auf einen temporären oder auf einen permanenten Träger beschichtet wurde. Permanente Träger bleiben bei der Anwendung im Klebeband erhalten, während temporäre Träger zum Verkleben entfernt werden. Sie werden hauptsächlich zum Schutz und/oder zum Transport des Klebebandes und/oder für eine verbesserte Dimensionsstabilität und/oder Verarbeitbarkeit eingesetzt.

Prozessual sind solche Trocknungsverfahren aufgrund des engen zur Verfügung stehenden Temperaturfensters - wie erwähnt sollte die Trocknungstemperatur deutlich unterhalb der Aktivierungstemperatur der Härtungsreaktion liegen - anspruchsvoll. Im Stand der Technik sind jedoch solche Trocknungsverfahren hinreichend beschrieben. Sie können hier entsprechend angewandt werden.

Die aus der erfindungsgemäßen Zubereitung erhältlichen latent reaktiven Klebmassen und Klebefilme sind bevorzugt bei Raumtemperatur nicht haftklebrig, um eine gute (Re-) Positionierbarkeit zu gewährleisten, wie es für andere hitzeaktivierbar verklebbare Klebmassen- und Klebefilm-Systeme bereits in Verarbeitungsprozessen etabliert ist. Alternativ können sie jedoch auch - vor der Härtungsreaktion - haftklebrig ausgestaltet sein. Haftklebrigkeit ist die Eigenschaft eines Stoffes, bei Raumtemperatur (hier definiert als 23 °C) bereits unter relativ schwachem Andruck eine dauerhafte Verbindung zu einem Haftgrund einzugehen. Stoffe, die diese Eigenschaft besitzen, werden als Haftklebstoffe bezeichnet. Haftklebstoffe sind seit langem bekannt. Haftklebstoffe sind in der Regel bei Raumtemperatur permanent eigenklebrig, weisen also eine gewisse Viskosität und Anfassklebrigkeit auf, so dass sie die Oberfläche des jeweiligen Haftgrunds bereits bei geringem Andruck benetzen. Die Fähigkeit eines Haftklebstoffs, auf Werkstoffen zu haften und Kräfte zu übertragen, beruht auf dem Adhäsionsvermögen und der Kohäsion des Haftklebstoffs. Haftklebstoffe können als extrem hochviskose Flüssigkeiten mit einem elastischen Anteil betrachtet werden. Haftklebstoffe haben demzufolge besondere, charakteristische viskoelastische Eigenschaften, die zu der dauerhaften Eigenklebrigkeit und Klebfähigkeit führen.

Reaktivklebemassen, die wie die vorliegende Klebmasse im Weiteren reaktiv ausgehärtet wird, können zunächst bei Raumtemperatur haftklebrig vorliegen. Durch die Aushärtung verlieren sie in der Regel durch die weitgehende Vernetzung und damit verbundene Kohäsionserhöhung die haftklebrigen Eigenschaften, so dass die ausgehärteten Klebmassen in der Regel dann bei Raumtemperatur keine haftklebrigen Eigenschaften mehr aufweisen.

Die Erfindung betrifft demgemäß weiterhin Klebeprodukte umfassend zumindest eine Schicht aus der erfindungsgemäßen Klebemasse. Bei dem erfindungsgemäßen Produkt kommt zumindest eine Schicht eines latentreaktiven Klebefilms zum Einsatz, insbesondere mit einer Schichtdicke zwischen zumindest 5 µm und höchstens 1000 µm, bevorzugt zwischen zumindest 10 µm und höchstens 500 µm, besonders bevorzugt zwischen 25 µm und 250 µm.

Bei den erfindungsgemäßen Produkten handelt es sich um doppelseitig klebende Produkte. Solche Produkte enthaltend zumindest einen latentreaktiven Klebefilm kommen im einfachsten Fall in einschichtiger Form zum Einsatz, aufgebracht auf ein wieder ablösbares (temporäres) Trägermaterial. Für die erfindungsgemäße Klebemasse geeignete temporäre Trägermaterialien sind dem Fachmann bekannt. Als temporäres Trägermaterial bieten sich zum Beispiel alle für die erfindungsgemäße Klebemasse geeigneten Trennfolien und - papiere an, die aus dem Stand der Technik bekannt sind und ein- oder beidseitig mit einer Trennschicht ausgerüstet sind und/oder intrinsisch keine zu hohen Verbundfestigkeiten mit der erfindungsgemäßen Klebmasse eingehen.. Für die erfindungsgemäße Klebemasse geeignete silikonisierte Papiere werden bevorzugt. Es können auch zwei Lagen eines wiederablösbaren Trägermaterials zum Einsatz kommen, so dass Ober- und Unterseite des Klebefilms abgedeckt sind, auch wenn das Produkt nicht aufgewickelt vorliegt.

Produkte enthaltend zumindest einen latentreaktiven Klebefilm können zudem ein weiteres Trägermaterial enthalten, das auch nach Verklebung im Produkt verbleibt (Permanentträger). Hierzu bieten sich ebenfalls Folien und Papiere aber auch Gelege, Gewebe und Gewirke an. Die Oberflächen dieser Trägermaterialien können jeweils unabhängig voneinander chemisch (Primer, Plasma) und/oder physikalisch (Corona, Flamme, Plasma) so vorbehandelt sein, dass eine besonders gute Verankerung des latentreaktiven Klebefilms auf dem Trägermaterial erreicht werden kann. Vliese werden bevorzugt. Eine Lage eines Permanentträgers reduziert eine etwaige Neigung des Klebefilms, im geschmolzenen Zustand unter Verpressbedingungen seitlich aus der Verklebungsfuge ausgequetscht zu werden (siehe hierzu DE 10 2009 006 935 A1).

Als Trägervlies werden in diesem bevorzugten Fall Flächengebilde aus einzelnen Fasern eingesetzt. Dabei können alle nach der Norm DIN EN 29092 definierten Vliese eingesetzt werden. Das Vlies besteht aus lose zusammengelegten Fasern, welche noch nicht miteinander verbunden sind. Die Festigkeit resultiert aus der Faser-eigenen Haftung. Man differenziert auch zwischen verfestigten und nicht-verfestigten Vliesen. Die Fasern sind statistisch verteilt. Die Vliese lassen sich nach den Fasermaterialien differenzieren. Als Fasermaterialien können mineralische Fasern, wie z.B. Glas, Mineralwolle oder Basalt, tierische Fasern, wie z.B. Seide oder Wolle, pflanzliche Fasern, wie z.B. Baumwolle, Zellulose, chemische Fasern, wie z.B. Polyamid, Polypropylen, Polyphenylensulfid, Polyacrylnitril, Polyimid, Polytetrafluorethylen, Aramid oder Polyester, oder Mischungen aus den vorgenannten Substanzen eingesetzt werden. Die Fasern können mechanisch durch Vernadelung oder Wasserstrahlen verfestigt werden, chemisch durch Zugabe von Bindemitteln oder thermisch durch das Erweichen in einem geeigneten Gasstrom, zwischen beheizten Walzen oder auch in einem Dampfstrom.

In einer sehr bevorzugten Auslegung der Erfindung werden Vliese auf Cellulosebasis eingesetzt. Das Flächengewicht der Vliese beträgt bevorzugt zwischen 4 und 100 g/m², besonders bevorzugt zwischen 10 und 70 g/m². Solche Vliese sind z.B. kommerziell von der Firma Glatfelter erhältlich. Die Dicke dieser Vliese beträgt bevorzugt zwischen 20 und 100 µm, äußerst bevorzugt zwischen 30 und 60 µm.

Klebeprodukte mit Permanentträger können auf der Ober- und Unterseite verschieden dicke latentreaktive Klebefilmschichten und/oder bevorzugt latentreaktive Klebefilmschichten unterschiedlicher Art tragen. Kommen verschiedene latentreaktive Klebefilmschichten zum Einsatz dann erfüllen vorteilhaft beide die Anforderungen an die latentreaktiven Klebefilme, wie sie oben ausgeführt sind. Auch besteht die Möglichkeit, dass bei solchen Systemen eine der Klebeschichten nicht latentreaktiv ist, sondern z.B. thermoplastische, hitzeaktivierbar und/oder haftklebrig.

Produkte enthaltend zumindest einen latentreaktiven Klebefilm können auch in zwei- oder mehrschichtiger und permanentträgerfreier Form zum Einsatz kommen. Zumindest die oberste und unterste Schicht sind eine Schicht aus latentreaktivem Klebefilm, wobei diese verschieden im Hinblick auf Dicke und/oder Art sein können. Kommen verschiedene latentreaktive Klebefilmschichten zum Einsatz dann erfüllen vorteilhaft beide die Anforderungen an die reaktivlatenten Klebefilme, wie sie oben ausgeführt sind.

Mehrschichtige und permanentträgerhaltige Klebeprodukte können Dicken von 10 µm bis 2000 µm, bevorzugt von 25 µm bis 500 µm aufweisen, besonders bevorzugt von 75 µm bis 300 µm aufweisen.

Produkte mit geschäumten Schichten und/oder Permanentträgern und/oder Klebmassen können auch deutlich höhere Dicken aufweisen, solche können zum Beispiel eingesetzt werden um Lücken zwischen Bauteilen und/oder Substraten zu überbrücken und/oder abzudichten und/oder mechanische (zum Beispiel Schutz- und/oder Dämpfungs-) Eigenschaften zu implementieren.

Produkte enthaltend zumindest einen latent reaktiven Klebefilm können auch einseitig klebend sein, das heißt, dass ein Träger permanent auf einer Seite des Produktes verbleibt. Als Permanentträger kommen alle bereits beschrieben Träger in Frage. Vorteilhaft können auch Permanentträger zum Einsatz kommen, die eine weitere Funktion des Produktes bereitstellen, wie zum Beispiel elektrische oder thermische Leitfähigkeit, Kratzfestigkeit, Durchstoßfestigkeit, Abriebfestigkeit, Strahlenschutz, optische Eigenschaften etc. Diese Aufzählung erhebt keinen Anspruch auf Vollständigkeit und ist nicht als einschränkend zu verstehen.

Das Produkt kann bahnförmig als Rollenware, als Blattware oder als Stanzling und/oder die-cut konfektioniert sein. Die latentreaktiven Klebefilme sind bevorzugt bei Raumtemperatur nicht haftklebrig, da das Material so sehr vorteilhaft auch ohne temporären Träger konfektioniert (z. B. gestanzt) und für den Weiterverarbeitungsprozess zur Verfügung gestellt werden und/oder bei Bedarf im Verarbeitungsprozess repositioniert werden kann. Eine haftklebrige Ausgestaltung ist jedoch auch denkbar und kann besonders vorteilhaft sein, wenn zum Beispiel die erfindungsgemäße Klebemasse bzw. der erfindungsgemäße Klebefilm im Verarbeitungsprozess ohne Heißlaminationsschritt auf einem Bauteil und/oder Substrat fixiert werden soll (Zwischenprodukt) und das Fügen mit weiteren Bauteilen und/oder Substraten und Härten der erfindungsgemäßen Klebemassen beziehungsweise des erfindungsgemäßen Klebefilms erst zu einem späteren Zeitpunkt erfolgen soll.

Zum Aktivieren der Klebemasse wird die zwischen die zu verklebenden Substrate gebrachte Klebemasse - insbesondere als Klebefilm - erwärmt. Dabei springt die Reaktion zwischen der Polymerkomponente und der Isocyanat-haltigen Komponente an, und die Härtungsreaktion läuft ab. Es wird angenommen - ohne sich durch diese Annahme im generellen erfinderischen Gedanken beschränken zu wollen -, dass das Aufschmelzen von Kristallitstrukturen zu einer amorphen Polymerform führt, in der die IsocyanatKomponente letztendlich löslich ist.

Für die Einbringung der Wärme wird in einer bevorzugten Auslegung eine Heizpresse eingesetzt. Der Stempel der Heizpresse ist dabei zum Beispiel aus Aluminium, Messing oder Bronze gefertigt und wird in seiner Ausformung in der Regel den Konturen des Metallteils bzw. den Dimensionen des Stanzlings angepasst. Um eine genaue Positionierung des Stanzlings auf dem eloxierten Aluminiumteil zu gewährleisten, werden in der Regel Formteile eingesetzt, die den Konturen der zu verklebenden Bauteile angepasst sind, wodurch Verrutschungen verhindert werden. Durch Führungsstifte im Formteil und entsprechende Führungslöcher im temporären Trägermaterial des Klebeprodukts mit zumindest einer Schicht eines latentreaktiven Klebefilms kann die exakte Positionierung zwischen Stanzling und eloxiertem Aluminiumteil sichergestellt werden. Andere Positionierungsmöglichkeiten sind denkbar. Nach der Wärmeaktivierung wird das eloxierte Aluminiumteil mit dem auflaminierten Klebeprodukt mit zumindest einer Schicht eines latentreaktiven Klebefilms vom Formteil entfernt. Der gesamte Prozess kann auch in einen automatischen Prozess überführt werden.

Mittels der erfindungsgemäß erhältlichen Klebemassen, insbesondere Klebefilme, lassen sich hervorragend (semi-)strukturelle Verklebungen erzielen. Als "(semi-)strukturelle Verklebung" wird insbesondere eine Verklebung bezeichnet, bei der eine mögliche Bruchstelle bei Belastung des Klebeverbundes nicht unbedingt in der Klebstoffschicht bzw. im Trägermaterial mit der Klebstoffschicht/den Klebstoffschichten zwischen den zu verklebenden Komponenten liegen muss, sondern mit gleicher Wahrscheinlichkeit an jeder anderen Stelle der durch den strukturellen Klebstoff verklebten Gegenstände auftreten kann. Die Beständigkeit der Verklebung kann dabei also so hoch wie die Beständigkeit der verklebten Materialien sein und kann diese sogar überschreiten. Bei hochfesten und/oder beständigen zu verklebenden Materialien spricht der Fachmann von semi-strukturellen Verklebungen, wenn die Verklebungsfestigkeit oberhalb derer, mit einer nicht latent reaktiven Haftklebemasse (PSA) ausgeführten Verklebung liegt.

Die erfindungsgemäße Klebemasse - beispielweise als Teil eines mehrschichtigen Klebefilms oder als einschichtiger Klebefilm - kann insbesondere überall dort eingesetzt werden, wo die Ansprüche an die Verklebungsqualität - etwa was die Verklebungsfestigkeiten oder Dauerbeständigkeiten angeht - hoch sind. Dies ist etwa im Bereich der elektronischen Geräte oder im Automobilbau, aber auch in vielen anderen Bereichen der Fall. Sehr geeignet ist die Klebemasse für die Verklebung schwieriger Untergründe, kleiner Verklebungsflächen - etwa bei kleinflächigen Verklebungen im Bereich der Konsumelektronik - und/oder unterschiedlicher zu verklebender Substrate der Fall, um nur einige zu nennen.

Eine beispielhafte erfindungsgemäße Verwendung betrifft das Verkleben eines eloxierten Aluminiums wie zum Beispiel E6EV1 mit einem Kunststoff. Die Kunststoffteile basieren für Konsumgüterelektronikbauteile bevorzugt auf Kunststoffen, die im Spritzguss verarbeitet werden können. So umfassen diese Gruppe z.B. ABS, PC, ABS/PC Blends, PMMA, Polyamide, Glasfaserverstärkte Polyamide, Polyvinylchlorid, Polyvinylenfluorid, Cellulose Acetat, Cycloolefin Copolymere, Flüssigkristallpolymere (LCP), Polylactid, Polyetherketone, Polyetherimid, Polyethersulfon, Polymethacrylmethylimid, Polymethylpenten, Polyphenylether, Polyphenylensulfid, Polyphthalamid, Polyurethane, Polyvinylacetat, Styrol Acrylnitril Copolymere, Polyacrylate bzw. Polymethacrylate, Polyoxymethylen, Acrylester Styrol-Acrylnitril Copolymere, Polyethylen, Polystyrol, Polypropylen oder Polyester (z.B. PBT, PET). Die Aufzählung besitzt keinen Anspruch auf Vollständigkeit. Die Bauteile können jede beliebige Form annehmen, die für die Herstellung eines Bauteils oder Gehäuses für Konsumgüterelektronikartikel erforderlich ist. In der einfachsten Form sind sie planar. Weiterhin sind aber auch 3-dimensionale Bauteile durchaus üblich. Die Bauteile können die verschiedensten Funktionen einnehmen, wie z.B. Gehäuse, Sichtfenster oder Versteifungselement. Sehr bevorzugt handelt es sich bei den verwendeten Kunststoffen um Polycarbonat, PMMA oder ABS.

Die Kunststoffteile können lackiert oder anderweitig beschichtet sein. Lacke, die zur Oberflächenfunktionalisierung /-modifizierung von Kunststoffen eingesetzt werden sind z. B. Antireflex-Beschichtungen, Anti-Fingerprint-Beschichtungen, Antikratz-Beschichtungen oder dekorative Bedruckungen (sog. Backprints). Ferner können Kunststoffe auch mit (anorganischen) Schichten ausgestattet sein wie z. B. leitfähigen Schichten. Hier sei insbesondere Indium-Zinn-Oxid als leitfähige Schicht genannt. Diese Lacke und Schichten weisen zum Teil Thermosensibilität auf und machen daher selbst bereits die Verwendung von bei niedriger Temperatur verarbeitbaren Klebeprodukten erforderlich.

Für eine als Beispiel angeführte Anwendung in Konsumgüterelektronikartikeln werden die Klebeprodukte mit zumindest einer Schicht eines latentreaktiven Klebefilms üblicherweise zu Stanzlingen weiterverarbeitet. Diese werden zum Beispiel durch ein Laserschneidverfahren, durch Flachtbettstanzen oder durch Rotationsstanzen hergestellt. Der Stanzling hat üblicherweise die Dimension des eloxierten Aluminiumteils, kann aber auch etwas kleiner sein, um leichte Ausquetschprozesse während des Verklebungsprozesses zu erlauben.

Im einfachsten Fall wird der Stanzling des Klebeprodukts mit zumindest einer Schicht eines latentreaktiven Klebefilms ohne temporären Träger manuell, z.B. mit Hilfe einer Pinzette, auf dem eloxierten Aluminiumteil bzw. zwischen den zusammenzufügenden Bauteilen positioniert.

In einer weiteren Ausführung wird der Stanzling des Klebeprodukts mit zumindest einer Schicht eines latentreaktiven Klebefilms nach der Positionierung auf dem eloxierten Aluminium mit einer Wärmequelle behandelt, wodurch sich die Haftung des Stanzlings zum eloxierten Aluminium erhöht. Im einfachsten Fall kann als Wärmequelle ein IR-Strahler, ein Bügeleisen, eine Heizplatte oder eine Heizpresse eingesetzt werden. Für diesen Prozess ist es von Vorteil, wenn der Stanzling noch mit einem temporären Trägermaterial ausgestattet ist, um ein Anhaften des Klebefilms am Werkzeug bzw. der Wärmequelle zu verhindern.

In einer weiteren vorteilhaften Ausgestaltung wird das eloxierte Aluminiumteil auf den Stanzling des Klebeprodukts mit zumindest einer Schicht eines latentreaktiven Klebefilms platziert. Die Platzierung erfolgt auf der offenen Seite. Auf der Rückseite befindet sich noch das temporäre Trägermaterial. Anschließend wird durch eine Wärmequelle Wärme durch das eloxierte Aluminium in das Klebeprodukt mit zumindest einer Schicht eines latentreaktiven Klebefilms eingebracht. Dadurch wird das Klebeprodukt tackig, d.h. haftklebrig, und haftet stärker am eloxierten Aluminium als an dem temporären Träger. Es wird durch das eloxierte Aluminium geheizt, aber auch durch das Klebeprodukt oder beidseitig wären möglich.

Eine weitere erfindungsgemäß vorteilhafte Anwendung für thermisch sensible Verklebungen stellt die Verklebung von Lederprodukten in Textilien und/oder zu Dekorzwecken zum Beispiel in Kraftfahrzeugen und/oder für Bezüge von Sitzmöbeln und/oder Fahrzeugsitzen und/oder Konsumgüterelektronikbauteilen dar und/oder vorzugsweise thermisch sensible Textilien selbst.

Schließlich betrifft die Erfindung das Verfahren zum Verkleben zweier Substratoberflächen miteinander mittels eines Klebefilms, der durch Ausformen der erfindungsgemäßen Zubereitung und anschließendem Trocknen erhalten ist, auf einer Substratoberfläche. Das Verfahren ist grundsätzlich dadurch gekennzeichnet, dass der Klebefilm zwischen die zwei Substratoberflächen gebracht wird, indem er diese jeweils kontaktiert, und anschließend mittels Wärmezufuhr gehärtet wird (Ausführung 1).

In einem weiteren vorteilhaften erfindungsgemäßen Ausgestaltung betrifft die Erfindung ein Verfahren zum Verkleben eines Klebefilms, der durch Ausformen der erfindungsgemäßen Zubereitung und anschließendem Trocknen erhalten ist, auf zumindest einer Substratoberfläche (Ausführung 2). Hierbei weist der Klebefilm insbesondere einen Permanentträger auf; wobei der Klebefilm weiter insbesondere mit der freien Seite auf die entsprechende Substratoberfläche aufgebracht wird, indem er diese kontaktiert und anschließend mittels Wärmezufuhr gehärtet wird.

In einer vorteilhaften Vorgehensweise bei dem vorgenannten Verfahren gemäß Ausführung 1 oder nach Ausführung 2 wird der Klebefilm mittels Wärmezufuhr unter Druck gehärtet (Ausführungen 1a beziehungsweise 2a).

In vorteilhaften Weiterentwicklungen des Verfahren nach einer der Ausführungen 1 oder 1a, oder nach einer der Ausführungen 2 oder 2a, beträgt die Härtungszeit kürzer oder gleich 20 Minuten, bevorzugt kürzer oder gleich 10 Minuten, noch bevorzugter kürzer oder gleich 5 Minuten oder noch kürzer.

### Experimenteller Teil

### Eingesetzte Chemikalien

| Verwendete Bezeichnung / Handelsname | Anbieter | Spezifizierung | Funktion |
|---|---|---|---|
| DANCURE^{®} 999 | Danquisa GmbH | 1,3-Bis(3-isocyanato-4-methylphenyl)-1,3-diazetidin-2,4-dion | Isocyanatgruppenhaltige Komponente (TDI-Dimer) |
| Desmomelt^{®} 530 | Covestro AG | hydroxyl-terminiertes, weitgehend lineares, thermoplastisches, stark kristallisierendes Polyurethan-Elastomer | isocyanatreaktive Komponente (TPU) |
| nekafin^{®} 0 | Netstal AG | Calciumoxid | Trocknungsmittel |
| CoatOSil^{®} 1770 | Momentive Inc. | β-(3,4-epoxycyclohexyl)ethyltriethoxysilan | Haftvermittler |
| Glymo (Dynaslan^{®} Glymo) | Evonik AG | 3-Glycidyloxypropyltrimethoxysilan | Haftvermittler |
| Schwarzpigment 28 | | Partikulärer Schwarz-Farbstoff, durchschnittliche Partikelgröße nach ISO 13320-1 ca. 1,8 µm CAS 68186-91-4 | Pigment (schwarz) / anorganischer Füllstoff |
| Polydis 3610 (Struktol^{®} Polydis^{®} 3610) | Schill & Seilacher GmbH | Nitirlkautschuk-modifiziertes Epoxyharz auf Bisphenol-A-Diglycidylether-Basis | Epoxid-Harz |
| Epiclon^{®} N-673 | CIC Corp. | Kresol-Novolak-Epoxy-Harz | Epoxid-Harz |
| Erisys^{®} GA 240 | Huntsman | Tetraglycidy- mety-Xylenediamin Epoxyharz | Epoxid-Harz |
| Hostatint-Schwarz A-N 100 | Clariant Plastics & Coatings (Deutschland) GmbH | Schwarzpigment-Zubereitung auf Basis eines Aldehydharz-Trägers | Pigment (schwarz) |

Die vorstehenden Handelsnamen stellen in der Regel Markenmarken der Hersteller dar; sie werden im Rahmen dieser Schrift ohne eine entsprechende Kennzeichnung im Einzelnen genutzt.

Alle weiteren Chemikalien und/oder Lösemittel werden mit ihrer chemischen Bezeichnung angegeben:

| | |
|---|---|
| Aceton | CAS 67-64-1 |
| 2-Butanon | CAS 78-93-3 |
| Oxalsäure-Dihydrat | CAS 6153-56-6 |

### Herstellanweisungen

### Synthese 1

Es wird eine 10 gewichtsprozentige Lösung von Oxalsäure-Dihydrat in voll entsalztem (VE) Wasser erstellt (90 Gewichts-Anteile VE Wasser, 10 Gewichts-Anteile Oxalsäure Dihydrat). 1 L dieser Oxalsäure-Lösung werden in ein laborübliches 2 L Becherglas überführt und 10 g DANCURE 999 mittels Dispergierscheibe (Durchmesser 4 cm) für 1 h bei 2000 1/min dispergiert.

Das auf diese Weise oberflächlich deaktivierte DANCURE 999 wird auf dem Fachmann bekannte, geeignete Weise mittels VE Wasser bis zur PH Neutralität gewaschen und anschließend im Vakuumtrockenschrank bei Raumtemperatur getrocknet.

Das Produkt wird im Folgenden als dimerisiertes TDI aus Synthese 1 bezeichnet.

### Vorprodukt 1

Desmomelt 530 wird auf dem Fachmann bekannte, geeignete Weise in Aceton gelöst. Eine gute Verarbeitungsfähigkeit der Lösung hat sich im Labormaßstab bei einem Feststoffgehalt (Desmomelt 530 - Gehalt) von 20 Gewichtsprozent bis 25 Gewichtsprozent gezeigt.

### Vorprodukt 2

Desmomelt 530 wird auf dem Fachmann bekannte, geeignete Weise in 2-Butanon gelöst. Eine gute Verarbeitungsfähigkeit der Lösung hat sich im Labormaßstab bei einem Feststoffgehalt (Desmomelt 530 - Gehalt) von 20 Gewichtsprozent bis 25 Gewichtsprozent gezeigt.

### Beispiele (untersuchte Proben)

Die Beispiele 1 bis 3 werden aus Aceton-Lösung verarbeitet, die Beispiele 4 bis 52 aus 2-Butanon-Lösung.

Alle Beispiele werden wie nachfolgend beschrieben erstellt:

### Beispiele enthaltend das Trocknungsmittel nekafin 0 (CaO):

Das entsprechende Vorprodukt und das entsprechende Lösemittel werden in einem handelsüblichen Weithals-Schraubdeckelglas in der benötigten Menge vorgelegt. Die benötigte Lösemittelmenge für die benötigte Viskosität der entsprechenden Gesamtformulierung ist abhängig von dem vom Fachmann gewählten Beschichtungsverfahren. Mit einem handelsüblichen Filmziehgerät haben sich im Labormaßstab Gesamtfeststoffgehalte der jeweiligen Formulierungen von 20 Gewichtsprozent bis 30 Gewichtsprozent als vorteilhaft erwiesen. Die entsprechend benötigten Viskositäten für ein gewähltes Beschichtungsverfahren sind dem Fachmann hinlänglich bekannt.

Mittels Dispergierscheibe (Durchmesser 4 cm) wird das entsprechende Vorprodukt mit dem zugegebenen Lösemittel homogenisiert, das nekafin 0 hinzugegeben und anschließend 10 Minuten bei 2000 1/min dispergiert. Anschließend werden alle weiteren Komponenten hinzugefügt, für weitere 10 Minuten bei 2000 1/min homogen dispergiert, das Weithals-Schraubdeckelglas anschließend verschlossen und für 24 h auf einem handelsüblichen Rollenmischer homogen gerollt.

Nach 24 h auf dem Rollenmischer wird die entsprechende Formulierung, auf einem dem Fachmann bekannten, geeigneten Trennpapier zu einer Trockenfilmdicke von 100 µm beschichtet und für 20 Minuten bei 40 °C in einem handelsüblichen Umlufttrockenschrank getrocknet. Andere Schichtdicken sind entsprechend mit den Ergebnissen anzugeben.

Ein Teil der entsprechenden Formulierung wird entsprechend weiterhin auf dem Rollenmischer gelagert und nach weiteren 24 h und 48 h erneut beschichtet. Sollten sich die Formulierungen nach drei Tagen nicht mehr homogen beschichten lassen, so ist die Topfzeit (pot life) der entsprechenden Formulierung mit den Ergebnissen separat auszuweisen.

### Beispiele ohne das Trocknungsmittel nekafin 0 (CaO):

Das entsprechende Vorprodukt und das entsprechende Lösemittel werden in einem handelsüblichen Weithals-Schraubdeckelglas in der benötigten Menge vorgelegt.

Die benötigte Lösemittelmenge für die benötigte Viskosität der entsprechenden Gesamtformulierung ist abhängig von dem vom Fachmann gewählten Beschichtungsverfahren. Mit einem handelsüblichen Filmziehgerät haben sich im Labormaßstab Gesamtfeststoffgehalte der jeweiligen Formulierungen von 20 Gewichtsprozent bis 30 Gewichtsprozent als vorteilhaft erwiesen. Die entsprechend benötigten Viskositäten für ein gewähltes Beschichtungsverfahren sind dem Fachmann hinlänglich bekannt.

Mittels Dispergierscheibe (Durchmesser 4 cm) wird das entsprechende Vorprodukt mit dem zugegebenen Lösemittel homogenisiert, das partikuläre Isocyanat hinzugegeben und anschließend 10 Minuten bei 2000 1/min dispergiert. Anschließend werden alle weiteren Komponenten hinzugefügt, für weitere 10 Minuten bei 2000 1/min homogen dispergiert, das Weithals-Schraubdeckelglas anschließend verschlossen und für 24 h auf einem handelsüblichen Rollenmischer homogen gerollt.

Nach 24 h auf dem Rollenmischer wird die entsprechende Formulierung, auf einem dem Fachmann bekannten, geeigneten Trennpapier zu einer Trockenfilmdicke von 100 µm beschichtet und für 20 Minuten bei 40 °C in einem handelsüblichen Umlufttrockenschrank getrocknet. Andere Schichtdicken sind entsprechend mit den Ergebnissen angegeben.

Ein Teil der entsprechenden Formulierung wird entsprechend weiterhin auf dem Rollenmischer gelagert und nach weiteren 24 h und 48 h erneut beschichtet. Sollten sich die Formulierungen nach drei Tagen nicht mehr homogen beschichten lassen, so ist die Topfzeit (pot life) der entsprechenden Formulierung mit den Ergebnissen separat ausgewiesen.

### Vernetzung / Lagerung / Vermessung

Die aus der erfindungsgemäßen Zubereitung ausgeformten und getrockneten latentreaktiven Klebefilme werden nach dem Beschichten und Trocknen für 24 h bei 23 °C und 50 % relativer Feuchte gelagert.

Der Push-Out-Test ermöglicht Aussagen über die Verklebungsfestigkeit eines Klebeprodukts in Richtung der Klebschichtnormalen. Bereitgestellt werden ein kreisförmiges erstes Substrat (1) mit Durchmesser 21 mm, ein zweites Substrat (2) - beispielsweise quadratförmig mit 40 mm Seitenlänge - mit einer kreisförmigen, zentral angeordneten Öffnung (Bohrung) von 9 mm Durchmesser sowie die zu untersuchende Klebefilmprobe, die ebenfalls kreisförmig mit 21 mm Durchmesser konfektioniert (zugeschnitten oder gestanzt) wurde. Substrat (1); "Ronde", und Substrat (2), "Platte", wurden gewählt aus der folgenden Liste entsprechend der Angaben in der Ergebnistabelle, Spalte 2:
Polycarbonat, Macrolon 099, Dicke 3 mm : PC
anodisiertes Aluminium, E6EV1, Dicke 1,5 mm; Al

Aus den vorgenannten drei Bauteilen wird ein Prüfkörper hergestellt, indem der erfindungsgemäße Klebefilm mit der freien Oberfläche passgenau auf das Substrat (1) vorlaminiert (bei 70 °C für 15 s) wird. Dann wird der temporäre Träger entfernt und dieser Verbund mit der nun freiliegenden Seite des Klebeproduktes auf das Substrat (2) konzentrisch vorlaminiert (ebenfalls bei 70 °C für 15 s), also derart, dass die kreisrunde Aussparung des Substrats 2 genau mittig über dem kreisrunden ersten Substrat 1 angeordnet ist (Verklebungsfläche somit 282 mm²). Es wird darauf geachtet, dass die Gesamtzeit der Temperatureinwirkung (70 °C) im Vorlaminierprozess 30 s nicht überschreitet.

Anschließend wird der Gesamtverbund unter Druck und Temperatureinwirkung bei den in der Ergebnistabelle angegebenen Bedingungen (Spalte 3 "Vernetzung", Angaben dort: Zeit @ Temperatur @ Verpressdruck) verpresst, wobei der Prüfkörper entsteht.

Die Prüfkörper werden nach dem Verpressen nach 24 h Lagerung bei 23 °C und 50 % relativer Feuchte "initial" oder nach definierter Lagerung, siehe zur Lagerung Spalte 5 der Ergebnistabelle; Angaben dort (Zeit @ Temperatur @ Luftfeuchtigkeit (rel. Feuchte) bzw. Medium) und anschließender Lagerung für 24 h bei 23 °C und 50 % relativer Feuchte vermessen. Die Wärmezufuhr erfolgt entsprechend Spalte 4 der Tabelle ("oben" bedeutet Wärmezufuhr über Subtrat (1), "beidseitig" bedeutet Wärmezufuhr über Substrat (1) und Substrat (2)).

Die Austestung erfolgt wie folgt: Eine Zugprüfmaschine wird mit einem zylindrischen Stempel (Stahl, Durchmesser 7 mm) ausgerüstet und der Prüfkörper über Substrat (2) in eine Halterung der Zugprüfmaschine eingespannt, so dass Substrat (1) nur durch die Verklebung gehalten wird und durch hinreichenden Druck durch Lösung der Verklebung abgelöst werden kann. Die Probe wird derart fixiert, dass ein durch die Krafteinwirkung während der Prüfung mögliches Verbiegen von Substrat (2) minimiert wird. Mittels des zylindrischen Stempels wird durch das Loch in Substrat (2) senkrecht (also parallel entgegengerichtet zum Normalenvektor der Klebeproduktoberfläche) und zentrisch auf die freiliegende Fläche des Klebeproduktes mit einer konstanten Geschwindigkeit von 10 mm/s gedrückt, die Austestungen finden im Standard-Prüfklima (23 °C bei 50 % rF) statt. Aufgenommen wird diejenige Kraft, bei der die Verklebung versagt und Substrat (1) von Substrat (2) gelöst (Lösung der Klebeverbindung, erkennbar durch plötzlichen Kraftabfall) wird. Die Kraft wird auf die Verklebungsfläche normiert angegeben (N/mm² beziehungsweise MPa, siehe Spalte 6 der Ergebnistabelle). Aufgrund der natürlichen Streuung der Einzelergebnisse, durch das meist auftretende Adhäsionsversagen (Versagen an der Grenzfläche Substrat - Klebefilm, durch die häufig hohen erreichten Verklebungsfestigkeiten häufig verbunden mit Deformation und/oder kaltem Fluss der Substrate (strukturelle Verklebungsfestigkeit), wird der arithmetische Mittelwert aus drei Einzelprüfungen berechnet. Die letzte Spalte der Ergebnistabelle gibt die jeweilige Standardabweichung des Messwerts an.

### Zusammensetzung der untersuchten Proben

Alle Angaben beziehen sich auf die Gewichts-Prozent bezogen auf die eingesetzten Stoffe ohne eventuell vorhandenes Lösemittel.

Ab Beispiel 16: In Klammern angegeben ist jeweils die Abmischung einer Basisklebmasse bezogen auf 100 Gew.-% dieser in der Klammer angegebenen Basisklebmasse; Angaben vor und hinter der Klammer beziehen sich auf 100 Gew.-% einer Abmischung dieser Basisklebmasse mit den angegebenen Zusatzstoffen.

| | |
|---|---|
| Beispiel 1 | 94,0% Desmomelt 530; 6,0% dimerisiertes TDI aus Synthese 1 |
| Beispiel 2 | 92,0% Desmomelt 530; 8,0% dimerisiertes TDI aus Synthese 1 |
| Beispiel 3 | 90,0% Desmomelt 530; 10,0% dimerisiertes TDI aus Synthese 1 |
| Beispiel 4 | 93,0% Desmomelt 530; 6,0 % Dancure 999; 1,0% nekafin 0 |
| Beispiel 5 | 91,0% Desmomelt 530; 8,0 % Dancure 999; 1,0% nekafin 0 |
| Beispiel 6 | 89,0% Desmomelt 530; 10,0 % Dancure 999; 1,0% nekafin 0 |
| Beispiel 7 | 86,0% Desmomelt 530; 10,0% DANCURE 999; 3,0% CoatOSil 1770; 1,0% nekafin 0 |
| Beispiel 8 | 84,0% Desmomelt 530; 10,0% DANCURE 999; 5,0% CoatOSil 1770; 1,0% nekafin 0 |
| Beispiel 9 | 86,5% Desmomelt 530; 10,0% DANCURE 999; 2,5% CoatOSil 1770; 1,0% nekafin 0 |
| Beispiel 10 | 87,0% Desmomelt 530; 10,0% DANCURE 999; 2,0% CoatOSil 1770; 1,0% nekafin 0 |
| Beispiel 11 | 87,5% Desmomelt 530; 10,0% DANCURE 999; 1,5% CoatOSil 1770; 1,0% nekafin 0 |
| Beispiel 12 | 86,5% Desmomelt 530; 10,0% DANCURE 999; 2,5% GLYMO; 1,0% nekafin 0 |
| Beispiel 13 | 87,0% Desmomelt 530; 10,0% DANCURE 999; 2,0% GLYMO; 1,0% nekafin 0 |
| Beispiel 14 | 87,5% Desmomelt 530; 10,0% DANCURE 999; 1,5% GLYMO; 1,0% nekafin 0 |
| Beispiel 15 | 88,0% Desmomelt 530; 10,0% DANCURE 999; 2,0% CoatOSll 1770 |
| Beispiel 16 | 80,0% (88,0% Desmomelt 530; 10,0% DANCURE 999; 2,0% CoatOSll 1770); 20,0% (Schwarzpigment 28) |
| Beispiel 17 | 75,0% (88,0% Desmomelt 530; 10,0% DANCURE 999; 2,0% CoatOSll 1770); 20,0% (Schwarzpigment 28); 5,0% (Glasfaser 200µm) |
| Beispiel 18 | 70,0% (88,0% Desmomelt 530; 10,0% DANCURE 999; 2,0% CoatOSll 1770); 20,0% (Schwarzpigment 28); 10,0% (Glasfaser 200µm) |
| Beispiel 19 | 80,0% (78,0% Desmomelt 530; 10,0% DANCURE 999; 10,0% Polydis 3610; 2,0% CoatOSil 1770); 20,0% (Schwarzpigment 28) |
| Beispiel 20 | 83,0% Desmomelt 530; 10,0% DANCURE 999; 5,0% Epiclon N-673; 2,0% CoatOSil 1770 |
| Beispiel 21 | 78,0% Desmomelt 530; 10,0% DANCURE 999; 10,0% Epiclon N-673; 2,0% CoatOSil 1770 |
| Beispiel 22 | 80,0% (83,0% Desmomelt 530; 10,0% DANCURE 999; 5,0% Epiclon N-673; 2,0% CoatOSil 1770); 20,0% (Schwarzpigment 28) |
| Beispiel 23 | 80,0% (80,5% Desmomelt 530; 10,0% DANCURE 999; 7,5% Epiclon N-673; 2,0% CoatOSil 1770); 20,0% (Schwarzpigment 28) |
| Beispiel 24 | 80,0% (78,0% Desmomelt 530; 10,0% DANCURE 999; 10,0% Epiclon N-673; 2,0% CoatOSil 1770); 20,0% (Schwarzpigment 28) |
| Beispiel 25 | 80,0% (75,5% Desmomelt 530; 10,0% DANCURE 999; 12,5% Epiclon N-673; 2,0% CoatOSil 1770); 20,0% (Schwarzpigment 28) |
| Beispiel 26 | 80,0% (73,0% Desmomelt 530; 10,0% DANCURE 999; 15,0% Epiclon N-673; 2,0% CoatOSil 1770); 20,0% (Schwarzpigment 28) |
| Beispiel 27 | 80,0% (70,5% Desmomelt 530; 10,0% DANCURE 999; 17,5% Epiclon N-673; 2,0% CoatOSil 1770); 20,0% (Schwarzpigment 28) |
| Beispiel 28 | 80,0% (68,0% Desmomelt 530; 10,0% DANCURE 999; 20,0% Epiclon N-673; 2,0% CoatOSil 1770); 20,0% (Schwarzpigment 28) |
| Beispiel 29 | 80,0% (85,5% Desmomelt 530; 10,0% DANCURE 999; 2,5% Erisys GA 240; 2,0% CoatOSil 1770); 20,0% (Schwarzpigment 28) |
| Beispiel 30 | 80,0% (83,0% Desmomelt 530; 10,0% DANCURE 999; 5,0% Erisys GA 240; 2,0% CoatOSil 1770); 20,0% (Schwarzpigment 28) |
| Beispiel 31 | 80,0% (80,5% Desmomelt 530; 10,0% DANCURE 999; 7,5% Erisys GA 240; 2,0% CoatOSil 1770); 20,0% (Schwarzpigment 28) |
| Beispiel 32 | 80,0% (78,0% Desmomelt 530; 10,0% DANCURE 999; 10,0% Erisys GA 240; 2,0% CoatOSil 1770); 20,0% (Schwarzpigment 28) |
| Beispiel 33 | 85,0% (86,00% Desmomelt 530; 10,00% DANCURE 999; 1,50% Erisys GA 240; 2,50% CoatOSil 1770); 15,0% (Schwarzpigment 28) |
| Beispiel 34 | 85,0% (85,50% Desmomelt 530; 10,00% DANCURE 999; 2,00% Erisys GA 240; 2,50% CoatOSil 1770); 15,0% (Schwarzpigment 28) |
| Beispiel 35 | 85,0% (85,00% Desmomelt 530; 10,00% DANCURE 999; 2,50% Erisys GA 240; 2,50% CoatOSil 1770); 15,0% (Schwarzpigment 28) |
| Beispiel 36 | 85,0% (84,50% Desmomelt 530; 10,00% DANCURE 999; 3,00% Erisys GA 240; 2,50% CoatOSil 1770); 15,0% (Schwarzpigment 28) |
| Beispiel 37 | 85,0% (84,00% Desmomelt 530; 10,00% DANCURE 999; 3,50% Erisys GA 240; 2,50% CoatOSil 1770); 15,0% (Schwarzpigment 28) |
| Beispiel 38 | 80,0% (85,5% Desmomelt 530; 10,0% DANCURE 999; 2,5% Erisys GA 240; 2,0% CoatOSil 1770); 20,0% (Schwarzpigment 28) |
| Beispiel 39 | 80,0% (80,5% Desmomelt 530; 5,0% Desmocoll 400/3; 10,0% DANCURE 999; 2,5% Erisys GA 240; 2,0% CoatOSil 1770); 20,0% (Schwarzpigment 28) |
| Beispiel 40 | 80,0% (75,5% Desmomelt 530; 10,0% Desmocoll 400/3; 10,0% DANCURE 999; 2,5% Erisys GA 240; 2,0% CoatOSil 1770); 20,0% (Schwarzpigment 28) |
| Beispiel 41 | 80,0% (70,5% Desmomelt 530; 15,0% Desmocoll 400/3; 10,0% DANCURE 999; 2,5% Erisys GA 240; 2,0% CoatOSil 1770); 20,0% (Schwarzpigment 28) |
| Beispiel 42 | 80,0% (60,5% Desmomelt 530; 25,0% Desmocoll 400/3; 10,0% DANCURE 999; 2,5% Erisys GA 240; 2,0% CoatOSil 1770); 20,0% (Schwarzpigment 28) |
| Beispiel 43 | 80,0% (35,5% Desmomelt 530; 50,0% Desmocoll 400/3; 10,0% DANCURE 999; 2,5% Erisys GA 240; 2,0% CoatOSil 1770); 20,0% (Schwarzpigment 28) |
| Beispiel 44 | 80,5% Desmomelt 530; 10,0% Dancure 999; 5,0% Epiclon N-673; 2,5% Erisys GA 240; 2,0% CoatOSil 1770 |
| Beispiel 45 | 75,5% Desmomelt 530; 10,0% Dancure 999; 10,0% Epiclon N-673; 2,5% Erisys GA 240; 2,0% CoatOSil 1770 |
| Beispiel 46 | 70,5% Desmomelt 530; 10,0% Dancure 999; 15,0% Epiclon N-673; 2,5% Erisys GA 240; 2,0% CoatOSil 1770 |
| Beispiel 47 | 65,5% Desmomelt 530; 10,0% Dancure 999; 20,0% Epiclon N-673; 2,5% Erisys GA 240; 2,0% CoatOSil 1770 |
| Beispiel 48 | 96,0% (70,5% Desmomelt 530; 10,0% Dancure 999; 15,0% Epiclon N-673; 2,5% Erisys GA 240; 2,0% CoatOSil 1770); 4,0% (Hostatint-Schwarz A-N 100) |
| Beispiel 49 | 85,0% (70,5% Desmomelt 530; 10,0% Dancure 999; 15,0% Epiclon N-673; 2,5% Erisys GA 240; 2,0% CoatOSil 1770); 15,0% (Schwarzpigment 28) |
| Beispiel 50 | 85,0% (68,0% Desmomelt 530; 10,0% Dancure 999; 17,5% Epiclon N-673; 2,5% Erisys GA 240; 2,0% CoatOSil 1770); 15,0% (Schwarzpigment 28) |
| Beispiel 51 | 80,0% (70,5% Desmomelt 530; 10,0% Dancure 999; 15,0% Epiclon N-673; 2,5% Erisys GA 240; 2,0% CoatOSil 1770); 20,0% (Schwarzpigment 28) |
| Beispiel 52 | 80,0% (68,0% Desmomelt 530; 10,0% Dancure 999; 17,5% Epiclon N-673; 2,5% Erisys GA 240; 2,0% CoatOSil 1770); 20,0% (Schwarzpigment 28) |

### Ergebnisse

| Beispiel 1 | MKu-D530-73-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/PC | 120s @ 90°C @ 10bar | oben | initial | 3,8 | 0,1 |
| 100 | Al/PC | 300s @ 90°C @ 10bar | oben | initial | 4,4 | 0,3 |
| 100 | Al/PC | 600s @ 90°C @ 10bar | oben | initial | 5,0 | 0,3 |
| 100 | Al/PC | 120s @ 90°C @ 10bar | oben | 72h @ 85 °C @ 85%rF | 4,4 | 0,2 |
| 100 | Al/PC | 300s @ 90°C @ 10bar | oben | 72h @ 85 °C @ 85%rF | 4,8 | 0,2 |
| 100 | Al/PC | 600s @ 90°C @ 10bar | oben | 72h @ 85 °C @ 85%rF | 4,5 | 0,5 |
| | | | | | | |
| | | | | | | |

| Beispiel 2 | MKu-D530-74-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/PC | 120s @ 90°C @ 10bar | oben | initial | 3,6 | 0,1 |
| 100 | Al/PC | 300s @ 90°C @ 10bar | oben | initial | 4,4 | 0,2 |
| 100 | Al/PC | 600s @ 90°C @ 10bar | oben | initial | 4,6 | 0,2 |
| 100 | Al/PC | 120s @ 90°C @ 10bar | oben | 72h @ 85 °C @ 85%rF | 4,1 | 0,4 |
| 100 | Al/PC | 300s @ 90°C @ 10bar | oben | 72h @ 85 °C @ 85%rF | 4,7 | 0,2 |
| 100 | Al/PC | 600s @ 90°C @ 10bar | oben | 72h @ 85 °C @ 85%rF | 4,7 | 0,2 |
| | | | | | | |
| | | | | | | |

| Beispiel 3 | MKu-D530-75-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/PC | 120s @ 90°C @ 10bar | oben | initial | 3,9 | 0,1 |
| 100 | Al/PC | 300s @ 90°C @ 10bar | oben | initial | 4,4 | 0,0 |
| 100 | Al/PC | 600s @ 90°C @ 10bar | oben | initial | 4,7 | 0,1 |
| 100 | Al/PC | 120s @ 90°C @ 10bar | oben | 72h @ 85 °C @ 85%rF | 4,0 | 0,1 |
| 100 | Al/PC | 300s @ 90°C @ 10bar | oben | 72h @ 85 °C @ 85%rF | 4,8 | 0,1 |
| 100 | Al/PC | 600s @ 90°C @ 10bar | oben | 72h @ 85 °C @ 85%rF | 4,6 | 0,6 |
| | | | | | | |
| | | | | | | |

| Beispiel 4 | MKu-D530-84-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/PC | 120s @ 90°C @ 10bar | oben | initial | 4,2 | 0,2 |
| 100 | Al/PC | 300s @ 90°C @ 10bar | oben | initial | 4,5 | 0,3 |
| 100 | Al/PC | 120s @ 105°C @ 10bar | oben | initial | 4,8 | 0,2 |
| 100 | Al/PC | 300s @ 105°C @ 10bar | oben | initial | 5,2 | 0,3 |
| 100 | Al/PC | 120s @ 120°C @ 10bar | oben | initial | 5,1 | 0,1 |
| 100 | Al/PC | 300s @ 120°C @ 10bar | oben | initial | 5,6 | 0,6 |
| 100 | Al/Al | 120s @ 90°C @ 10bar | oben | initial | 4,6 | 0,3 |
| 100 | Al/Al | 300s @ 90°C @ 10bar | oben | initial | 4,8 | 0,5 |
| 100 | Al/Al | 120s @ 105°C @ 10bar | oben | initial | 4,7 | 0,6 |
| 100 | Al/Al | 300s @ 105°C @ 10bar | oben | initial | 4,7 | 0,5 |
| 100 | Al/Al | 120s @ 120°C @ 10bar | oben | initial | 4,7 | 0,3 |
| 100 | Al/Al | 300s @ 120°C @ 10bar | oben | initial | 4,8 | 0,3 |
| 100 | Al/Al | 120s @ 90°C @ 10bar | oben | 72h @ 60°C @ 95%rF | 3,6 | 0,5 |
| 100 | Al/Al | 300s @ 90°C @ 10bar | oben | 72h @ 60°C @ 95%rF | 4,2 | 0,2 |
| 100 | Al/Al | 120s @ 105°C @ 10bar | oben | 72h @ 60°C @ 95%rF | 4,3 | 0,8 |
| 100 | Al/Al | 300s @ 105°C @ 10bar | oben | 72h @ 60°C @ 95%rF | 4,9 | 0,3 |
| 100 | Al/Al | 120s @ 120°C @ 10bar | oben | 72h @ 60°C @ 95%rF | 4,7 | 0,3 |
| 100 | Al/Al | 300s @ 120°C @ 10bar | oben | 72h @ 60°C @ 95%rF | 4,8 | 0,2 |
| 100 | Al/Al | 120s @ 90°C @ 10bar | oben | 72h @ 85°C @ 85%rF | 3,8 | 0,4 |
| 100 | Al/Al | 300s @ 90°C @ 10bar | oben | 72h @ 85°C @ 85%rF | 3,3 | 0,4 |
| 100 | Al/Al | 120s @ 105°C @ 10bar | oben | 72h @ 85°C @ 85%rF | 4,0 | 0,3 |
| 100 | Al/Al | 300s @ 105°C @ 10bar | oben | 72h @ 85°C @ 85%rF | 3,7 | 0,2 |
| 100 | Al/Al | 120s @ 120°C @ 10bar | oben | 72h @ 85°C @ 85%rF | 3,5 | 0,8 |
| 100 | Al/Al | 300s @ 120°C @ 10bar | oben | 72h @ 85°C @ 85%rF | 3,4 | 0,3 |
| 100 | Al/Al | 120s @ 90°C @ 10bar | oben | 72h @ 60°C @ Ölsäure | 2,0 | 0,1 |
| 100 | Al/Al | 300s @ 90°C @ 10bar | oben | 72h @ 60°C @ Ölsäure | 2,0 | 0,7 |
| 100 | Al/Al | 120s @ 105°C @ 10bar | oben | 72h @ 60°C @ Ölsäure | 0,4 | 0,1 |
| 100 | Al/Al | 300s @ 105°C @ 10bar | oben | 72h @ 60°C @ Ölsäure | 0,6 | 0,1 |
| 100 | Al/Al | 120s @ 120°C @ 10bar | oben | 72h @ 60°C @ Ölsäure | 0,3 | 0,2 |
| 100 | Al/Al | 300s @ 120°C @ 10bar | oben | 72h @ 60°C @ Ölsäure | 1,3 | 0,5 |
| | | | | | | |
| | | | | | | |

| Beispiel 5 | MKu-D530-85-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/PC | 120s @ 90°C @ 10bar | oben | initial | 3,8 | 0,2 |
| 100 | Al/PC | 300s @ 90°C @ 10bar | oben | initial | 4,4 | 0,2 |
| 100 | Al/PC | 120s @ 105°C @ 10bar | oben | initial | 4,3 | 0,3 |
| 100 | Al/PC | 300s @ 105°C @ 10bar | oben | initial | 4,9 | 0,3 |
| 100 | Al/PC | 120s @ 120°C @ 10bar | oben | initial | 4,7 | 0,2 |
| 100 | Al/PC | 300s @ 120°C @ 10bar | oben | initial | 5,1 | 0,2 |
| 100 | Al/Al | 120s @ 90°C @ 10bar | oben | initial | 4,1 | 0,5 |
| 100 | Al/Al | 300s @ 90°C @ 10bar | oben | initial | 4,0 | 0,4 |
| 100 | Al/Al | 120s @ 105°C @ 10bar | oben | initial | 4,8 | 0,5 |
| 100 | Al/Al | 300s @ 105°C @ 10bar | oben | initial | 5,1 | 0,5 |
| 100 | Al/Al | 120s @ 120°C @ 10bar | oben | initial | 5,0 | 0,3 |
| 100 | Al/Al | 300s @ 120°C @ 10bar | oben | initial | 5,0 | 0,3 |
| 100 | Al/Al | 120s @ 90°C @ 10bar | oben | 72h @ 60°C @ 95%rF | 4,6 | 0,5 |
| 100 | Al/Al | 300s @ 90°C @ 10bar | oben | 72h @ 60°C @ 95%rF | 4,9 | 0,5 |
| 100 | Al/Al | 120s @ 105°C @ 10bar | oben | 72h @ 60°C @ 95%rF | 4,7 | 0,7 |
| 100 | Al/Al | 300s @ 105°C @ 10bar | oben | 72h @ 60°C @ 95%rF | 4,6 | 0,4 |
| 100 | Al/Al | 120s @ 120°C @ 10bar | oben | 72h @ 60°C @ 95%rF | 4,8 | 0,5 |
| 100 | Al/Al | 300s @ 120°C @ 10bar | oben | 72h @ 60°C @ 95%rF | 4,6 | 0,3 |
| 100 | Al/Al | 120s @ 90°C @ 10bar | oben | 72h @ 85°C @ 85%rF | 3,5 | 0,7 |
| 100 | Al/Al | 300s @ 90°C @ 10bar | oben | 72h @ 85°C @ 85%rF | 3,3 | 0,2 |
| 100 | Al/Al | 120s @ 105°C @ 10bar | oben | 72h @ 85°C @ 85%rF | 3,9 | 0,4 |
| 100 | Al/Al | 300s @ 105°C @ 10bar | oben | 72h @ 85°C @ 85%rF | 3,7 | 0,5 |
| 100 | Al/Al | 120s @ 120°C @ 10bar | oben | 72h @ 85°C @ 85%rF | 3,6 | 0,3 |
| 100 | Al/Al | 300s @ 120°C @ 10bar | oben | 72h @ 85°C @ 85%rF | 3,2 | 0,2 |
| 100 | Al/Al | 120s @ 90°C @ 10bar | oben | 72h @ 60°C @ Ölsäure | 2,7 | 0,3 |
| 100 | Al/Al | 300s @ 90°C @ 10bar | oben | 72h @ 60°C @ Ölsäure | 2,7 | 0,4 |
| 100 | Al/Al | 120s @ 105°C @ 10bar | oben | 72h @ 60°C @ Ölsäure | 2,1 | 0,5 |
| 100 | Al/Al | 300s @ 105°C @ 10bar | oben | 72h @ 60°C @ Ölsäure | 2,6 | 0,5 |
| 100 | Al/Al | 120s @ 120°C @ 10bar | oben | 72h @ 60°C @ Ölsäure | 2,7 | 0,7 |
| 100 | Al/Al | 300s @ 120°C @ 10bar | oben | 72h @ 60°C @ Ölsäure | 2,9 | 0,9 |
| | | | | | | |
| | | | | | | |

| Beispiel 6 | MKu-D530-86-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/PC | 120s @ 90°C @ 10bar | oben | initial | 3,9 | 0,1 |
| 100 | Al/PC | 300s @ 90°C @ 10bar | oben | initial | 4,3 | 0,3 |
| 100 | Al/PC | 120s @ 105°C @ 10bar | oben | initial | 4,2 | 0,2 |
| 100 | Al/PC | 300s @ 105°C @ 10bar | oben | initial | 4,7 | 0,3 |
| 100 | Al/PC | 120s @ 120°C @ 10bar | oben | initial | 4,9 | 0,3 |
| 100 | Al/PC | 300s @ 120°C @ 10bar | oben | initial | 5,5 | 0,3 |
| 100 | Al/Al | 120s @ 90°C @ 10bar | oben | initial | 4,5 | 0,4 |
| 100 | Al/Al | 300s @ 90°C @ 10bar | oben | initial | 4,8 | 0,2 |
| 100 | Al/Al | 120s @ 105°C @ 10bar | oben | initial | 4,4 | 0,3 |
| 100 | Al/Al | 300s @ 105°C @ 10bar | oben | initial | 5,0 | 0,5 |
| 100 | Al/Al | 120s @ 120°C @ 10bar | oben | initial | 4,9 | 0,7 |
| 100 | Al/Al | 300s @ 120°C @ 10bar | oben | initial | 5,7 | 0,0 |
| 100 | Al/Al | 120s @ 90°C @ 10bar | oben | 72h @ 60°C @ 95%rF | 4,2 | 1,3 |
| 100 | Al/Al | 300s @ 90°C @ 10bar | oben | 72h @ 60°C @ 95%rF | 4,8 | 0,1 |
| 100 | Al/Al | 120s @ 105°C @ 10bar | oben | 72h @ 60°C @ 95%rF | 4,8 | 0,3 |
| 100 | Al/Al | 300s @ 105°C @ 10bar | oben | 72h @ 60°C @ 95%rF | 4,9 | 0,6 |
| 100 | Al/Al | 120s @ 120°C @ 10bar | oben | 72h @ 60°C @ 95%rF | 4,6 | 0,7 |
| 100 | Al/Al | 300s @ 120°C @ 10bar | oben | 72h @ 60°C @ 95%rF | 4,1 | 0,6 |
| 100 | Al/Al | 120s @ 90°C @ 10bar | oben | 72h @ 85°C @ 85%rF | 3,4 | 0,1 |
| 100 | Al/Al | 300s @ 90°C @ 10bar | oben | 72h @ 85°C @ 85%rF | 3,3 | 0,4 |
| 100 | Al/Al | 120s @ 105°C @ 10bar | oben | 72h @ 85°C @ 85%rF | 3,7 | 0,6 |
| 100 | Al/Al | 300s @ 105°C @ 10bar | oben | 72h @ 85°C @ 85%rF | 3,8 | 0,4 |
| 100 | Al/Al | 120s @ 120°C @ 10bar | oben | 72h @ 85°C @ 85%rF | 3,5 | 0,7 |
| 100 | Al/Al | 300s @ 120°C @ 10bar | oben | 72h @ 85°C @ 85%rF | 3,8 | 0,1 |
| 100 | Al/Al | 120s @ 90°C @ 10bar | oben | 72h @ 60°C @ Ölsäure | 2,7 | 0,2 |
| 100 | Al/Al | 300s @ 90°C @ 10bar | oben | 72h @ 60°C @ Ölsäure | 3,2 | 0,1 |
| 100 | Al/Al | 120s @ 105°C @ 10bar | oben | 72h @ 60°C @ Ölsäure | 2,8 | 0,3 |
| 100 | Al/Al | 300s @ 105°C @ 10bar | oben | 72h @ 60°C @ Ölsäure | 3,1 | 0,2 |
| 100 | Al/Al | 120s @ 120°C @ 10bar | oben | 72h @ 60°C @ Ölsäure | 3,2 | 0,5 |
| 100 | Al/Al | 300s @ 120°C @ 10bar | oben | 72h @ 60°C @ Ölsäure | 4,0 | 0,0 |
| | | | | | | |
| | | | | | | |

| Beispiel 7 | MKu-D530-89-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 120s @ 80°C @ 10bar | oben | initial | 5,3 | 0,1 |
| 100 | Al/Al | 300s @ 80°C @ 10bar | oben | initial | 5,3 | 0,3 |
| 100 | Al/Al | 600s @ 80°C @ 10bar | oben | initial | 5,4 | 0,1 |
| 100 | Al/Al | 120s @ 90°C @ 10bar | oben | initial | 5,3 | 0,0 |
| 100 | Al/Al | 300s @ 90°C @ 10bar | oben | initial | 5,5 | 0,2 |
| 100 | Al/Al | 600s @ 90°C @ 10bar | oben | initial | 5,7 | 0,1 |
| 100 | Al/Al | 120s @ 80°C @ 10bar | oben | 72h @ 60°C @ 95%rF | 5,6 | 0,6 |
| 100 | Al/Al | 300s @ 80°C @ 10bar | oben | 72h @ 60°C @ 95%rF | 5,9 | 0,1 |
| 100 | Al/Al | 600s @ 80°C @ 10bar | oben | 72h @ 60°C @ 95%rF | 6,1 | 0,1 |
| 100 | Al/Al | 120s @ 90°C @ 10bar | oben | 72h @ 60°C @ 95%rF | 6,0 | 0,4 |
| 100 | Al/Al | 300s @ 90°C @ 10bar | oben | 72h @ 60°C @ 95%rF | 6,0 | 0,2 |
| 100 | Al/Al | 600s @ 90°C @ 10bar | oben | 72h @ 60°C @ 95%rF | 6,0 | 0,1 |
| 100 | Al/Al | 120s @ 80°C @ 10bar | oben | 72h @ 85°C @ 85%rF | 6,3 | 0,1 |
| 100 | Al/Al | 300s @ 80°C @ 10bar | oben | 72h @ 85°C @ 85%rF | 6,5 | 0,1 |
| 100 | Al/Al | 600s @ 80°C @ 10bar | oben | 72h @ 85°C @ 85%rF | 6,5 | 0,1 |
| 100 | Al/Al | 120s @ 90°C @ 10bar | oben | 72h @ 85°C @ 85%rF | 6,4 | 0,2 |
| 100 | Al/Al | 300s @ 90°C @ 10bar | oben | 72h @ 85°C @ 85%rF | 6,3 | 0,1 |
| 100 | Al/Al | 600s @ 90°C @ 10bar | oben | 72h @ 85°C @ 85%rF | 6,4 | 0,0 |
| 100 | Al/Al | 120s @ 80°C @ 10bar | oben | 72h @ 60°C @ Ölsäure | 3,7 | 0,2 |
| 100 | Al/Al | 300s @ 80°C @ 10bar | oben | 72h @ 60°C @ Ölsäure | 3,7 | 0,1 |
| 100 | Al/Al | 600s @ 80°C @ 10bar | oben | 72h @ 60°C @ Ölsäure | 3,5 | 0,2 |
| 100 | Al/Al | 120s @ 90°C @ 10bar | oben | 72h @ 60°C @ Ölsäure | 3,6 | 0,1 |
| 100 | Al/Al | 300s @ 90°C @ 10bar | oben | 72h @ 60°C @ Ölsäure | 3,6 | 0,2 |
| 100 | Al/Al | 600s @ 90°C @ 10bar | oben | 72h @ 60°C @ Ölsäure | 3,8 | 0,2 |
| 100 | Al/Al | 300s @ 80°C @ 10bar | beidseitig | 6m @ 23°C @ 50%rF; initial | 2,7 | 0,5 |
| 100 | Al/Al | 300s @ 80°C @ 10bar | beidseitig | 6m @ 23°C @ 50% rF; 72h @ 60°C @ 95%rF | 5,2 | 0,5 |
| 100 | Al/Al | 300s @ 80°C @ 10bar | beidseitig | 6m @ 23°C @ 50% rF; 72h @ 85°C @ 85%rF | 4,1 | 0,8 |
| 100 | PC/PC | 300s @ 80°C @ 10bar | beidseitig | 6m @ 23°C @ 50%rF; initial | 6,1 | 1,1 |
| 100 | PC/PC | 300s @ 80°C @ 10bar | beidseitig | 6m @ 23°C @ 50%rF; 72h @ 60°C @ 95%rF | 6,8 | 0,3 |
| 100 | PC/PC | 300s @ 80°C @ 10bar | beidseitig | 6m @ 23°C @ 50% rF; 72h @ 85°C @ 85%rF | 3,0 | 1,0 |
| | | | | | | |
| | | | | | | |

| Beispiel 8 | MKu-D530-90-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 120s @ 80°C @ 10bar | oben | initial | 4,9 | 0,0 |
| 100 | Al/Al | 300s @ 80°C @ 10bar | oben | initial | 5,0 | 0,1 |
| 100 | Al/Al | 600s @ 80°C @ 10bar | oben | initial | 4,9 | 0,1 |
| 100 | Al/Al | 120s @ 90°C @ 10bar | oben | initial | 4,9 | 0,0 |
| 100 | Al/Al | 300s @ 90°C @ 10bar | oben | initial | 4,9 | 0,2 |
| 100 | Al/Al | 600s @ 90°C @ 10bar | oben | initial | 5,1 | 0,2 |
| 100 | Al/Al | 120s @ 80°C @ 10bar | oben | 72h @ 60°C @ 95%rF | 5,9 | 0,5 |
| 100 | Al/Al | 300s @ 80°C @ 10bar | oben | 72h @ 60°C @ 95%rF | 6,1 | 0,1 |
| 100 | Al/Al | 600s @ 80°C @ 10bar | oben | 72h @ 60°C @ 95%rF | 5,9 | 0,1 |
| 100 | Al/Al | 120s @ 90°C @ 10bar | oben | 72h @ 60°C @ 95%rF | 6,3 | 0,2 |
| 100 | Al/Al | 300s @ 90°C @ 10bar | oben | 72h @ 60°C @ 95%rF | 6,0 | 0,3 |
| 100 | Al/Al | 600s @ 90°C @ 10bar | oben | 72h @ 60°C @ 95%rF | 5,9 | 0,1 |
| 100 | Al/Al | 120s @ 80°C @ 10bar | oben | 72h @ 85°C @ 85%rF | 6,4 | 0,2 |
| 100 | Al/Al | 300s @ 80°C @ 10bar | oben | 72h @ 85°C @ 85%rF | 6,1 | 0,1 |
| 100 | Al/Al | 600s @ 80°C @ 10bar | oben | 72h @ 85°C @ 85%rF | 6,3 | 0,3 |
| 100 | Al/Al | 120s @ 90°C @ 10bar | oben | 72h @ 85°C @ 85%rF | 6,5 | 0,4 |
| 100 | Al/Al | 300s @ 90°C @ 10bar | oben | 72h @ 85°C @ 85%rF | 6,4 | 0,2 |
| 100 | Al/Al | 600s @ 90°C @ 10bar | oben | 72h @ 85°C @ 85%rF | 6,5 | 0,3 |
| 100 | Al/Al | 120s @ 80°C @ 10bar | oben | 72h @ 60°C @ Ölsäure | 3,5 | 0,1 |
| 100 | Al/Al | 300s @ 80°C @ 10bar | oben | 72h @ 60°C @ Ölsäure | 3,6 | 0,1 |
| 100 | Al/Al | 600s @ 80°C @ 10bar | oben | 72h @ 60°C @ Ölsäure | 3,7 | 0,1 |
| 100 | Al/Al | 120s @ 90°C @ 10bar | oben | 72h @ 60°C @ Ölsäure | 3,8 | 0,1 |
| 100 | Al/Al | 300s @ 90°C @ 10bar | oben | 72h @ 60°C @ Ölsäure | 3,6 | 0,2 |
| 100 | Al/Al | 600s @ 90°C @ 10bar | oben | 72h @ 60°C @ Ölsäure | 3,9 | 0,1 |
| | | | | | | |
| | | | | | | |
| Beispiel 9 | MKu-D530-91-01 | | | | | |
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 120s @ 80°C @ 10bar | oben | initial | 4,9 | 0,3 |
| 100 | Al/Al | 300s @ 80°C @ 10bar | oben | initial | 5,2 | 0,0 |
| 100 | Al/Al | 600s @ 80°C @ 10bar | oben | initial | 5,3 | 0,3 |
| 100 | Al/Al | 120s @ 80°C @ 10bar | oben | 72h @ 60°C @ 95%rF | 6,0 | 0,1 |
| 100 | Al/Al | 300s @ 80°C @ 10bar | oben | 72h @ 60°C @ 95%rF | 6,1 | 0,0 |
| 100 | Al/Al | 600s @ 80°C @ 10bar | oben | 72h @ 60°C @ 95%rF | 6,0 | 0,2 |
| 100 | Al/Al | 120s @ 80°C @ 10bar | oben | 72h @ 85°C @ 85%rF | 6,4 | 0,1 |
| 100 | Al/Al | 300s @ 80°C @ 10bar | oben | 72h @ 85°C @ 85%rF | 6,5 | 0,3 |
| 100 | Al/Al | 600s @ 80°C @ 10bar | oben | 72h @ 85°C @ 85%rF | 6,6 | 0,3 |
| 100 | Al/Al | 120s @ 80°C @ 10bar | oben | 72h @ 60°C @ EtOH/H2O | 0,7 | 0,3 |
| 100 | Al/Al | 300s @ 80°C @ 10bar | oben | 72h @ 60°C @ EtOH/H2O | 1,1 | 0,1 |
| 100 | Al/Al | 600s @ 80°C @ 10bar | oben | 72h @ 60°C @ EtOH/H2O | 1,3 | 0,5 |
| 100 | Al/Al | 300s @ 80°C @ 10bar | beidseitig | 6m @ 23°C @ 50%rF; initial | 3,3 | 0,6 |
| 100 | Al/Al | 300s @ 80°C @ 10bar | beidseitig | 6m @ 23°C @ 50%rF; 72h @ 60°C @ 95%rF | 5,2 | 0,1 |
| 100 | Al/Al | 300s @ 80°C @ 10bar | beidseitig | 6m @ 23°C @ 50%rF; 72h @ 85°C @ 85%rF | 4,9 | 0,2 |
| 100 | Al/Al | 300s @ 80°C @ 10bar | beidseitig | 6m @ 23°C @ 50%rF; 72h @ 60°C @ EtOH/H2O | 0,4 | 0,1 |
| 100 | Al/Al | 300s @ 80°C @ 10bar | beidseitig | 6m @ 23°C @ 50%rF; 72h @ 60°C @ Ölsäure | 1,1 | 0,2 |
| 100 | PC/PC | 300s @ 80°C @ 10bar | beidseitig | 6m @ 23°C @ 50%rF; initial | 7,4 | 0,8 |
| 100 | PC/PC | 300s @ 80°C @ 10bar | beidseitig | 6m @ 23°C @ 50%rF; 72h @ 60°C @ 95%rF | 7,9 | 0,4 |
| 100 | PC/PC | 300s @ 80°C @ 10bar | beidseitig | 6m @ 23°C @ 50%rF; 72h @ 85°C @ 85%rF | 2,9 | 0,7 |
| | | | | | | |
| | | | | | | |

| Beispiel 10 | MKu-D530-92-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 120s @ 80°C @ 10bar | oben | initial | 4,8 | 0,1 |
| 100 | Al/Al | 300s @ 80°C @ 10bar | oben | initial | 4,9 | 0,2 |
| 100 | Al/Al | 600s @ 80°C @ 10bar | oben | initial | 5,3 | 0,1 |
| 100 | Al/Al | 120s @ 80°C @ 10bar | oben | 72h @ 60°C @ 95%rF | 6,2 | 0,2 |
| 100 | Al/Al | 300s @ 80°C @ 10bar | oben | 72h @ 60°C @ 95%rF | 6,0 | 0,2 |
| 100 | Al/Al | 600s @ 80°C @ 10bar | oben | 72h @ 60°C @ 95%rF | 6,1 | 0,1 |
| 100 | Al/Al | 120s @ 80°C @ 10bar | oben | 72h @ 85°C @ 85%rF | 6,4 | 0,5 |
| 100 | Al/Al | 300s @ 80°C @ 10bar | oben | 72h @ 85°C @ 85%rF | 6,7 | 0,2 |
| 100 | Al/Al | 600s @ 80°C @ 10bar | oben | 72h @ 85°C @ 85%rF | 6,7 | 0,2 |
| 100 | Al/Al | 120s @ 80°C @ 10bar | oben | 72h @ 60°C @ EtOH/H2O | 0,9 | 0,1 |
| 100 | Al/Al | 300s @ 80°C @ 10bar | oben | 72h @ 60°C @ EtOH/H2O | 1,2 | 0,1 |
| 100 | Al/Al | 600s @ 80°C @ 10bar | oben | 72h @ 60°C @ EtOH/H2O | 1,2 | 0,2 |
| | | | | | | |
| | | | | | | |

| Beispiel 11 | MKu-D530-93-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 120s @ 80°C @ 10bar | oben | initial | 4,5 | 0,1 |
| 100 | Al/Al | 300s @ 80°C @ 10bar | oben | initial | 4,8 | 0,1 |
| 100 | Al/Al | 600s @ 80°C @ 10bar | oben | initial | 4,7 | 0,3 |
| 100 | Al/Al | 120s @ 80°C @ 10bar | oben | 72h @ 60°C @ 95%rF | 5,2 | 0,4 |
| 100 | Al/Al | 300s @ 80°C @ 10bar | oben | 72h @ 60°C @ 95%rF | 6,0 | 0,3 |
| 100 | Al/Al | 600s @ 80°C @ 10bar | oben | 72h @ 60°C @ 95%rF | 5,9 | 0,0 |
| 100 | Al/Al | 120s @ 80°C @ 10bar | oben | 72h @ 85°C @ 85%rF | 6,1 | 0,3 |
| 100 | Al/Al | 300s @ 80°C @ 10bar | oben | 72h @ 85°C @ 85%rF | 6,4 | 0,1 |
| 100 | Al/Al | 600s @ 80°C @ 10bar | oben | 72h @ 85°C @ 85%rF | 6,5 | 0,1 |
| 100 | Al/Al | 120s @ 80°C @ 10bar | oben | 72h @ 60°C @ EtOH/H2O | 0,6 | 0,2 |
| 100 | Al/Al | 300s @ 80°C @ 10bar | oben | 72h @ 60°C @ EtOH/H2O | 0,9 | 0,1 |
| 100 | Al/Al | 600s @ 80°C @ 10bar | oben | 72h @ 60°C @ EtOH/H2O | 1,1 | 0,1 |
| | | | | | | |
| | | | | | | |

| Beispiel 12 | MKu-D530-94-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 120s @ 80°C @ 10bar | oben | initial | 4,2 | 0,2 |
| 100 | Al/Al | 300s @ 80°C @ 10bar | oben | initial | 4,5 | 0,3 |
| 100 | Al/Al | 600s @ 80°C @ 10bar | oben | initial | 4,9 | 0,4 |
| 100 | Al/Al | 120s @ 80°C @ 10bar | oben | 72h @ 60°C @ 95%rF | 5,8 | 0,4 |
| 100 | Al/Al | 300s @ 80°C @ 10bar | oben | 72h @ 60°C @ 95%rF | 6,4 | 0,1 |
| 100 | Al/Al | 600s @ 80°C @ 10bar | oben | 72h @ 60°C @ 95%rF | 6,2 | 0,2 |
| 100 | Al/Al | 120s @ 80°C @ 10bar | oben | 72h @ 85°C @ 85%rF | 6,5 | 0,1 |
| 100 | Al/Al | 300s @ 80°C @ 10bar | oben | 72h @ 85°C @ 85%rF | 7,0 | 0,4 |
| 100 | Al/Al | 600s @ 80°C @ 10bar | oben | 72h @ 85°C @ 85%rF | 7,3 | 0,3 |
| 100 | Al/Al | 120s @ 80°C @ 10bar | oben | 72h @ 60°C @ EtOH/H2O | 0,8 | 0,1 |
| 100 | Al/Al | 300s @ 80°C @ 10bar | oben | 72h @ 60°C @ EtOH/H2O | 0,8 | 0,1 |
| 100 | Al/Al | 600s @ 80°C @ 10bar | oben | 72h @ 60°C @ EtOH/H2O | 0,8 | 0,1 |
| | | | | | | |
| | | | | | | |

| Beispiel 13 | MKu-D530-95-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 120s @ 80°C @ 10bar | oben | initial | 4,2 | 0,1 |
| 100 | Al/Al | 300s @ 80°C @ 10bar | oben | initial | 4,2 | 0,7 |
| 100 | Al/Al | 600s @ 80°C @ 10bar | oben | initial | 5,1 | 0,2 |
| 100 | Al/Al | 120s @ 80°C @ 10bar | oben | 72h @ 60°C @ 95%rF | 6,5 | 0,3 |
| 100 | Al/Al | 300s @ 80°C @ 10bar | oben | 72h @ 60°C @ 95%rF | 6,1 | 0,5 |
| 100 | Al/Al | 600s @ 80°C @ 10bar | oben | 72h @ 60°C @ 95%rF | 6,1 | 0,3 |
| 100 | Al/Al | 120s @ 80°C @ 10bar | oben | 72h @ 85°C @ 85%rF | 6,5 | 0,5 |
| 100 | Al/Al | 300s @ 80°C @ 10bar | oben | 72h @ 85°C @ 85%rF | 7,0 | 0,1 |
| 100 | Al/Al | 600s @ 80°C @ 10bar | oben | 72h @ 85°C @ 85%rF | 7,3 | 0,4 |
| 100 | Al/Al | 120s @ 80°C @ 10bar | oben | 72h @ 60°C @ EtOH/H2O | 0,8 | 0,5 |
| 100 | Al/Al | 300s @ 80°C @ 10bar | oben | 72h @ 60°C @ EtOH/H2O | 1,1 | 0,1 |
| 100 | Al/Al | 600s @ 80°C @ 10bar | oben | 72h @ 60°C @ EtOH/H2O | 0,5 | 0,1 |
| | | | | | | |
| | | | | | | |

| Beispiel 14 | MKu-D530-96-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 120s @ 80°C @ 10bar | oben | initial | 4,1 | 0,2 |
| 100 | Al/Al | 300s @ 80°C @ 10bar | oben | initial | 4,5 | 0,2 |
| 100 | Al/Al | 600s @ 80°C @ 10bar | oben | initial | 5,0 | 0,5 |
| 100 | Al/Al | 120s @ 80°C @ 10bar | oben | 72h @ 60°C @ 95%rF | 6,5 | 0,3 |
| 100 | Al/Al | 300s @ 80°C @ 10bar | oben | 72h @ 60°C @ 95%rF | 6,6 | 0,2 |
| 100 | Al/Al | 600s @ 80°C @ 10bar | oben | 72h @ 60°C @ 95%rF | 6,5 | 0,3 |
| 100 | Al/Al | 120s @ 80°C @ 10bar | oben | 72h @ 85°C @ 85%rF | 6,8 | 0,4 |
| 100 | Al/Al | 300s @ 80°C @ 10bar | oben | 72h @ 85°C @ 85%rF | 6,8 | 0,1 |
| 100 | Al/Al | 600s @ 80°C @ 10bar | oben | 72h @ 85°C @ 85%rF | 6,9 | 0,4 |
| 100 | Al/Al | 120s @ 80°C @ 10bar | oben | 72h @ 60°C @ EtOH/H2O | 0,5 | 0,2 |
| 100 | Al/Al | 300s @ 80°C @ 10bar | oben | 72h @ 60°C @ EtOH/H2O | 0,6 | 0,0 |
| 100 | Al/Al | 600s @ 80°C @ 10bar | oben | 72h @ 60°C @ EtOH/H2O | 0,6 | 0,2 |
| | | | | | | |
| | | | | | | |

| Beispiel 15 | MKu-D530-97-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 120s @ 80°C @ 10bar | oben | initial | 4,8 | 0,2 |
| 100 | Al/Al | 300s @ 80°C @ 10bar | oben | initial | 5,2 | 0,0 |
| 100 | Al/Al | 600s @ 80°C @ 10bar | oben | initial | 5,3 | 0,0 |
| 100 | Al/Al | 120s @ 80°C @ 10bar | oben | 72h @ 60°C @ 95%rF | 6,0 | 0,1 |
| 100 | Al/Al | 300s @ 80°C @ 10bar | oben | 72h @ 60°C @ 95%rF | 6,3 | 0,2 |
| 100 | Al/Al | 600s @ 80°C @ 10bar | oben | 72h @ 60°C @ 95%rF | 6,2 | 0,3 |
| 100 | Al/Al | 120s @ 80°C @ 10bar | oben | 72h @ 85°C @ 85%rF | 6,5 | 0,3 |
| 100 | Al/Al | 300s @ 80°C @ 10bar | oben | 72h @ 85°C @ 85%rF | 6,5 | 0,3 |
| 100 | Al/Al | 600s @ 80°C @ 10bar | oben | 72h @ 85°C @ 85%rF | 6,7 | 0,2 |
| 100 | Al/Al | 120s @ 80°C @ 10bar | oben | 72h @ 60°C @ EtOH/H2O | 1,8 | 0,2 |
| 100 | Al/Al | 300s @ 80°C @ 10bar | oben | 72h @ 60°C @ EtOH/H2O | 1,9 | 0,2 |
| 100 | Al/Al | 600s @ 80°C @ 10bar | oben | 72h @ 60°C @ EtOH/H2O | 1,9 | 0,1 |
| 100 | Al/Al | 300s @ 80°C @ 10bar | beidseitig | 3,5m @ 23°C @ 50%rF; initial | 3,0 | 0,6 |
| 100 | Al/Al | 300s @ 80°C @ 10bar | beidseitig | 3,5m @ 23°C @ 50%rF; 72h @ 60°C @ 95%rF | 3,9 | 0,1 |
| 100 | Al/Al | 300s @ 80°C @ 10bar | beidseitig | 3,5m @ 23°C @ 50%rF; 72h @ 85°C @ 85%rF | 4,9 | 0,5 |
| 100 | Al/Al | 300s @ 80°C @ 10bar | beidseitig | 3,5m @ 23°C @ 50%rF; 72h @ 60°C @ EtOH/H2O | 1,2 | 0,1 |
| 100 | Al/Al | 300s @ 80°C @ 10bar | beidseitig | 3,5m @ 23°C @ 50%rF; 72h @ 60°C @ Ölsäure | 1,7 | 0,4 |
| 100 | PC/PC | 300s @ 80°C @ 10bar | beidseitig | 3,5m @ 23°C @ 50%rF; initial | 6,4 | 1,1 |
| 100 | PC/PC | 300s @ 80°C @ 10bar | beidseitig | 3,5m @ 23°C @ 50%rF; 72h @ 60°C @ 95%rF | 7,0 | 0,3 |
| 100 | PC/PC | 300s @ 80°C @ 10bar | beidseitig | 3,5m @ 23°C @ 50%rF; 72h @ 85°C @ 85%rF | 1,7 | 0,2 |
| 100 | Al/Al | 300s @ 80°C @ 10bar | beidseitig | 6,5m @ 23°C @ 50%rF; initial | 2,6 | 1,1 |
| 100 | Al/Al | 300s @ 80°C @ 10bar | beidseitig | 6,5m @ 23°C @ 50%rF; 72h @ 60°C @ 95%rF | 3,6 | 1,7 |
| 100 | Al/Al | 300s @ 80°C @ 10bar | beidseitig | 6,5m @ 23°C @ 50%rF; 72h @ 85°C @ 85%rF | 3,5 | 0,1 |
| 100 | Al/Al | 300s @ 80°C @ 10bar | beidseitig | 6,5m @ 23°C @ 50%rF; 72h @ 60°C @ EtOH/H2O | 0,4 | 0,2 |
| 100 | Al/Al | 300s @ 80°C @ 10bar | beidseitig | 6,5m @ 23°C @ 50%rF; 72h @ 60°C @ Ölsäure | 1,3 | 0,2 |
| 100 | PC/PC | 300s @ 80°C @ 10bar | beidseitig | 6,5m @ 23°C @ 50%rF; initial | 6,5 | 1,6 |
| 100 | PC/PC | 300s @ 80°C @ 10bar | beidseitig | 6,5m @ 23°C @ 50%rF; 72h @ 60°C @ 95%rF | 5,0 | 3,5 |
| 100 | PC/PC | 300s @ 80°C @ 10bar | beidseitig | 6,5m @ 23°C @ 50%rF; 72h @ 85°C @ 85%rF | 1,8 | 0,3 |
| | | | | | | |
| | | | | | | |

| Beispiel 16 | MKu-D530-98-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 90 | Al/Al | 120s @ 80°C @ 10bar | oben | initial | 4,5 | 0,4 |
| 90 | Al/Al | 300s @ 80°C @ 10bar | oben | initial | 4,7 | 0,4 |
| 90 | Al/Al | 600s @ 80°C @ 10bar | oben | initial | 5,0 | 0,1 |
| 90 | Al/Al | 120s @ 80°C @ 10bar | oben | 72h @ 60°C @ 95%rF | 5,4 | 0,2 |
| 90 | Al/Al | 300s @ 80°C @ 10bar | oben | 72h @ 60°C @ 95%rF | 5,9 | 0,3 |
| 90 | Al/Al | 600s @ 80°C @ 10bar | oben | 72h @ 60°C @ 95%rF | 6,3 | 0,2 |
| 90 | Al/Al | 120s @ 80°C @ 10bar | oben | 72h @ 85°C @ 85%rF | 6,5 | 0,4 |
| 90 | Al/Al | 300s @ 80°C @ 10bar | oben | 72h @ 85°C @ 85%rF | 6,3 | 0,4 |
| 90 | Al/Al | 600s @ 80°C @ 10bar | oben | 72h @ 85°C @ 85%rF | 5,9 | 0,5 |
| 90 | Al/Al | 120s @ 80°C @ 10bar | oben | 72h @ 60°C @ EtOH/H2O | 1,5 | 0,2 |
| 90 | Al/Al | 300s @ 80°C @ 10bar | oben | 72h @ 60°C @ EtOH/H2O | 1,4 | 0,0 |
| 90 | Al/Al | 600s @ 80°C @ 10bar | oben | 72h @ 60°C @ EtOH/H2O | 1,2 | 0,2 |
| 90 | PC/PC | 300s @ 80°C @ 10bar | beidseitig | 3,5m @ 23°C @ 50%rF; initial | 5,0 | 0,1 |
| 90 | PC/PC | 300s @ 80°C @ 10bar | beidseitig | 3,5m @ 23°C @ 50%rF; 72h @ 60°C @ 95%rF | 6,5 | 0,3 |
| 90 | PC/PC | 300s @ 80°C @ 10bar | beidseitig | 3,5m @ 23°C @ 50%rF; 72h @ 85°C @ 85%rF | 1,7 | 1,3 |
| | | | | | | |
| | | | | | | |

| Beispiel 17 | MKu-D530-99-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 90 | Al/Al | 120s @ 80°C @ 10bar | oben | initial | 3,6 | 0,7 |
| 90 | Al/Al | 300s @ 80°C @ 10bar | oben | initial | 3,9 | 0,3 |
| 90 | Al/Al | 600s @ 80°C @ 10bar | oben | initial | 4,7 | 0,0 |
| 90 | Al/Al | 120s @ 80°C @ 10bar | oben | 72h @ 60°C @ 95%rF | 5,3 | 0,4 |
| 90 | Al/Al | 300s @ 80°C @ 10bar | oben | 72h @ 60°C @ 95%rF | 5,9 | 0,2 |
| 90 | Al/Al | 600s @ 80°C @ 10bar | oben | 72h @ 60°C @ 95%rF | 5,7 | 0,1 |
| 90 | Al/Al | 120s @ 80°C @ 10bar | oben | 72h @ 85°C @ 85%rF | 5,4 | 0,7 |
| 90 | Al/Al | 300s @ 80°C @ 10bar | oben | 72h @ 85°C @ 85%rF | 6,0 | 0,2 |
| 90 | Al/Al | 600s @ 80°C @ 10bar | oben | 72h @ 85°C @ 85%rF | 6,6 | 0,3 |
| 90 | Al/Al | 120s @ 80°C @ 10bar | oben | 72h @ 60°C @ EtOH/H2O | 1,1 | 0,0 |
| 90 | Al/Al | 300s @ 80°C @ 10bar | oben | 72h @ 60°C @ EtOH/H2O | 1,1 | 0,2 |
| 90 | Al/Al | 600s @ 80°C @ 10bar | oben | 72h @ 60°C @ EtOH/H2O | 1,1 | 0,0 |
| | | | | | | |
| | | | | | | |

| Beispiel 18 | MKu-D530-100-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 90 | Al/Al | 120s @ 80°C @ 10bar | oben | initial | 3,2 | 0,2 |
| 90 | Al/Al | 300s @ 80°C @ 10bar | oben | initial | 4,2 | 0,1 |
| 90 | Al/Al | 600s @ 80°C @ 10bar | oben | initial | 4,5 | 0,0 |
| 90 | Al/Al | 120s @ 80°C @ 10bar | oben | 72h @ 60°C @ 95%rF | 5,9 | 0,1 |
| 90 | Al/Al | 300s @ 80°C @ 10bar | oben | 72h @ 60°C @ 95%rF | 5,9 | 0,0 |
| 90 | Al/Al | 600s @ 80°C @ 10bar | oben | 72h @ 60°C @ 95%rF | 5,9 | 0,3 |
| 90 | Al/Al | 120s @ 80°C @ 10bar | oben | 72h @ 85°C @ 85%rF | 5,1 | 0,8 |
| 90 | Al/Al | 300s @ 80°C @ 10bar | oben | 72h @ 85°C @ 85%rF | 5,9 | 0,3 |
| 90 | Al/Al | 600s @ 80°C @ 10bar | oben | 72h @ 85°C @ 85%rF | 6,6 | 0,2 |
| 90 | Al/Al | 120s @ 80°C @ 10bar | oben | 72h @ 60°C @ EtOH/H2O | 1,1 | 0,0 |
| 90 | Al/Al | 300s @ 80°C @ 10bar | oben | 72h @ 60°C @ EtOH/H2O | 1,2 | 0,1 |
| 90 | Al/Al | 600s @ 80°C @ 10bar | oben | 72h @ 60°C @ EtOH/H2O | 1,1 | 0,0 |
| | | | | | | |
| | | | | | | |

| Beispiel 19 | MKu-D530-103-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 2,3 | 0,3 |
| 100 | Al/Al | 300s @ 80°C @ 10bar | beidseitig | 72h @ 60°C @ 95%rF | 5,3 | 1,0 |
| 100 | Al/Al | 300s @ 80°C @ 10bar | beidseitig | 72h @ 85°C @ 85%rF | 6,0 | 0,5 |
| 100 | Al/Al | 300s @ 80°C @ 10bar | beidseitig | 72h @ 60°C @ EtOH/H2O | 1,1 | 0,2 |
| 100 | Al/Al | 300s @ 80°C @ 10bar | beidseitig | 72h @ 60°C @ Ölsäure | 2,8 | 0,7 |
| | | | | | | |
| | | | | | | |

| Beispiel 20 | MKu-D530-110-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 4,2 | 0,3 |
| 100 | Al/Al | 300s @ 80°C @ 10bar | beidseitig | 72h @ 60°C @ 95%rF | 5,9 | 0,2 |
| 100 | Al/Al | 300s @ 80°C @ 10bar | beidseitig | 72h @ 85°C @ 85%rF | 6,9 | 0,8 |
| 100 | Al/Al | 300s @ 80°C @ 10bar | beidseitig | 72h @ 60°C @ EtOH/H2O | 1,8 | 0,0 |
| 100 | Al/Al | 300s @ 80°C @ 10bar | beidseitig | 72h @ 60°C @ Ölsäure | 3,7 | 0,1 |
| 100 | Al/Al | 300s @ 80°C @ 10bar | beidseitig | 3,5m @ 23°C @ 50%rF; initial | 4,0 | 0,4 |
| 100 | Al/Al | 300s @ 80°C @ 10bar | beidseitig | 3,5m @ 23°C @ 50%rF; 72h @ 60°C @ 95%rF | 6,0 | 0,1 |
| 100 | Al/Al | 300s @ 80°C @ 10bar | beidseitig | 3,5m @ 23°C @ 50%rF; 72h @ 85°C @ 85%rF | 5,7 | 1,1 |
| 100 | Al/Al | 300s @ 80°C @ 10bar | beidseitig | 3,5m @ 23°C @ 50%rF; 72h @ 60°C @ EtOH/H2O | 1,7 | 0,2 |
| 100 | Al/Al | 300s @ 80°C @ 10bar | beidseitig | 3,5m @ 23°C @ 50%rF; 72h @ 60°C @ Ölsäure | 3,8 | 0,4 |
| 100 | Al/Al | 300s @ 80°C @ 10bar | beidseitig | 3,5m @ 23°C @ 50%rF; initial | 6,7 | 1,9 |
| 100 | Al/Al | 300s @ 80°C @ 10bar | beidseitig | 3,5m @ 23°C @ 50%rF; 72h @ 60°C @ 95%rF | 6,5 | 1,6 |
| 100 | Al/Al | 300s @ 80°C @ 10bar | beidseitig | 3,5m @ 23°C @ 50%rF; 72h @ 85°C @ 85%rF | 3,8 | 0,2 |
| | | | | | | |
| | | | | | | |

| Beispiel 21 | MKu-D530-111-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 4,6 | 0,3 |
| 100 | Al/Al | 300s @ 80°C @ 10bar | beidseitig | 72h @ 60°C @ 95%rF | 6,4 | 0,4 |
| 100 | Al/Al | 300s @ 80°C @ 10bar | beidseitig | 72h @ 85°C @ 85%rF | 6,5 | 0,3 |
| 100 | Al/Al | 300s @ 80°C @ 10bar | beidseitig | 72h @ 60°C @ EtOH/H2O | 1,5 | 0,4 |
| 100 | Al/Al | 300s @ 80°C @ 10bar | beidseitig | 72h @ 60°C @ Ölsäure | 3,6 | 0,4 |
| 100 | Al/Al | 300s @ 80°C @ 10bar | beidseitig | 3,5m @ 23°C @ 50%rF; initial | 4,1 | 1,0 |
| 100 | Al/Al | 300s @ 80°C @ 10bar | beidseitig | 3,5m @ 23°C @ 50%rF; 72h @ 60°C @ 95%rF | 5,7 | 0,2 |
| 100 | Al/Al | 300s @ 80°C @ 10bar | beidseitig | 3,5m @ 23°C @ 50%rF; 72h @ 85°C @ 85%rF | 6,2 | 1,2 |
| 100 | Al/Al | 300s @ 80°C @ 10bar | beidseitig | 3,5m @ 23°C @ 50%rF; 72h @ 60°C @ EtOH/H2O | 1,3 | 0,2 |
| 100 | Al/Al | 300s @ 80°C @ 10bar | beidseitig | 3,5m @ 23°C @ 50%rF; 72h @ 60°C @ Ölsäure | 4,0 | 0,4 |
| 100 | Al/Al | 300s @ 80°C @ 10bar | beidseitig | 3,5m @ 23°C @ 50%rF; initial | 6,9 | 0,4 |
| 100 | Al/Al | 300s @ 80°C @ 10bar | beidseitig | 3,5m @ 23°C @ 50%rF; 72h @ 60°C @ 95%rF | 6,1 | 1,2 |
| 100 | Al/Al | 300s @ 80°C @ 10bar | beidseitig | 3,5m @ 23°C @ 50%rF; 72h @ 85°C @ 85%rF | 4,5 | 1,0 |
| | | | | | | |
| | | | | | | |

| Beispiel 22 | MKu-D530-114-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 5,0 | 0,3 |
| 100 | Al/Al | 300s @ 80°C @ 10bar | beidseitig | 72h @ 60°C @ 95%rF | 6,1 | 0,4 |
| 100 | Al/Al | 300s @ 80°C @ 10bar | beidseitig | 72h @ 85°C @ 85%rF | 5,6 | 1,5 |
| 100 | Al/Al | 300s @ 80°C @ 10bar | beidseitig | 72h @ 60°C @ EtOH/H2O | 0,8 | 0,2 |
| 100 | Al/Al | 300s @ 80°C @ 10bar | beidseitig | 72h @ 60°C @ Ölsäure | 3,0 | 1,0 |
| 100 | PC/PC | 300s @ 80°C @ 10bar | beidseitig | initial | 7,6 | 0,8 |
| 100 | PC/PC | 300s @ 80°C @ 10bar | beidseitig | 72h @ 60°C @ 95%rF | 8,8 | 0,1 |
| 100 | PC/PC | 300s @ 80°C @ 10bar | beidseitig | 72h @ 85°C @ 85%rF | 5,9 | 1,0 |
| | | | | | | |
| | | | | | | |

| Beispiel 23 | MKu-D530-115-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 3,6 | 1,1 |
| 100 | Al/Al | 300s @ 80°C @ 10bar | beidseitig | 72h @ 60°C @ 95%rF | 5,3 | 1,0 |
| 100 | Al/Al | 300s @ 80°C @ 10bar | beidseitig | 72h @ 85°C @ 85%rF | 5,9 | 1,3 |
| 100 | Al/Al | 300s @ 80°C @ 10bar | beidseitig | 72h @ 60°C @ EtOH/H2O | 0,8 | 0,0 |
| 100 | Al/Al | 300s @ 80°C @ 10bar | beidseitig | 72h @ 60°C @ Ölsäure | 3,4 | 0,8 |
| 100 | PC/PC | 300s @ 80°C @ 10bar | beidseitig | initial | 7,7 | 0,1 |
| 100 | PC/PC | 300s @ 80°C @ 10bar | beidseitig | 72h @ 60°C @ 95%rF | 8,0 | 1,6 |
| 100 | PC/PC | 300s @ 80°C @ 10bar | beidseitig | 72h @ 85°C @ 85%rF | 5,7 | 0,9 |
| | | | | | | |
| | | | | | | |

| Beispiel 24 | MKu-D530-112-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 3,3 | 0,7 |
| 100 | Al/Al | 300s @ 80°C @ 10bar | beidseitig | 72h @ 60°C @ 95%rF | 6,1 | 0,1 |
| 100 | Al/Al | 300s @ 80°C @ 10bar | beidseitig | 72h @ 85°C @ 85%rF | 5,8 | 0,6 |
| 100 | Al/Al | 300s @ 80°C @ 10bar | beidseitig | 72h @ 60°C @ EtOH/H2O | 1,2 | 0,2 |
| 100 | Al/Al | 300s @ 80°C @ 10bar | beidseitig | 72h @ 60°C @ Ölsäure | 3,5 | 0,2 |
| 100 | PC/PC | 300s @ 80°C @ 10bar | beidseitig | initial | 7,2 | 0,3 |
| 100 | PC/PC | 300s @ 80°C @ 10bar | beidseitig | 72h @ 60°C @ 95%rF | 9,0 | 0,1 |
| 100 | PC/PC | 300s @ 80°C @ 10bar | beidseitig | 72h @ 85°C @ 85%rF | 6,2 | 1,8 |
| 100 | Al/Al | 300s @ 80°C @ 10bar | beidseitig | 3,5m @ 23°C @ 50%rF; initial | 2,6 | 0,5 |
| 100 | Al/Al | 300s @ 80°C @ 10bar | beidseitig | 3,5m @ 23°C @ 50%rF; 72h @ 60°C @ 95%rF | 5,3 | 1,1 |
| 100 | Al/Al | 300s @ 80°C @ 10bar | beidseitig | 3,5m @ 23°C @ 50%rF; 72h @ 85°C @ 85%rF | 5,6 | 0,7 |
| 100 | Al/Al | 300s @ 80°C @ 10bar | beidseitig | 3,5m @ 23°C @ 50%rF; 72h @ 60°C @ EtOH/H2O | 0,7 | 0,1 |
| 100 | Al/Al | 300s @ 80°C @ 10bar | beidseitig | 3,5m @ 23°C @ 50%rF; 72h @ 60°C @ Ölsäure | 3,3 | 1,5 |
| 100 | Al/Al | 300s @ 80°C @ 10bar | beidseitig | 3,5m @ 23°C @ 50%rF; initial | 7,6 | 0,1 |
| 100 | Al/Al | 300s @ 80°C @ 10bar | beidseitig | 3,5m @ 23°C @ 50%rF; 72h @ 60°C @ 95%rF | 8,8 | 0,1 |
| 100 | Al/Al | 300s @ 80°C @ 10bar | beidseitig | 3,5m @ 23°C @ 50%rF; 72h @ 85°C @ 85%rF | 5,0 | 1,1 |
| | | | | | | |
| | | | | | | |

| Beispiel 25 | MKu-D530-116-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 4,5 | 0,4 |
| 100 | Al/Al | 300s @ 80°C @ 10bar | beidseitig | 72h @ 60°C @ 95%rF | 6,1 | 0,4 |
| 100 | Al/Al | 300s @ 80°C @ 10bar | beidseitig | 72h @ 85°C @ 85%rF | 5,6 | 1,5 |
| 100 | Al/Al | 300s @ 80°C @ 10bar | beidseitig | 72h @ 60°C @ EtOH/H2O | 0,6 | 0,1 |
| 100 | Al/Al | 300s @ 80°C @ 10bar | beidseitig | 72h @ 60°C @ Ölsäure | 3,1 | 1,0 |
| 100 | PC/PC | 300s @ 80°C @ 10bar | beidseitig | initial | 6,4 | 1,1 |
| 100 | PC/PC | 300s @ 80°C @ 10bar | beidseitig | 72h @ 60°C @ 95%rF | 8,7 | 0,2 |
| 100 | PC/PC | 300s @ 80°C @ 10bar | beidseitig | 72h @ 85°C @ 85%rF | 6,5 | 0,5 |
| | | | | | | |
| | | | | | | |

| Beispiel 26 | MKu-D530-113-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 3,6 | 0,6 |
| 100 | Al/Al | 300s @ 80°C @ 10bar | beidseitig | 72h @ 60°C @ 95%rF | 5,8 | 0,4 |
| 100 | Al/Al | 300s @ 80°C @ 10bar | beidseitig | 72h @ 85°C @ 85%rF | 6,2 | 0,6 |
| 100 | Al/Al | 300s @ 80°C @ 10bar | beidseitig | 72h @ 60°C @ EtOH/H2O | 1,0 | 0,2 |
| 100 | Al/Al | 300s @ 80°C @ 10bar | beidseitig | 72h @ 60°C @ Ölsäure | 3,6 | 0,1 |
| 100 | PC/PC | 300s @ 80°C @ 10bar | beidseitig | initial | 6,4 | 0,1 |
| 100 | PC/PC | 300s @ 80°C @ 10bar | beidseitig | 72h @ 60°C @ 95%rF | 8,5 | 0,3 |
| 100 | PC/PC | 300s @ 80°C @ 10bar | beidseitig | 72h @ 85°C @ 85%rF | 6,4 | 1,3 |
| 100 | Al/Al | 300s @ 80°C @ 10bar | beidseitig | 3,5m @ 23°C @ 50%rF; initial | 2,7 | 0,5 |
| 100 | Al/Al | 300s @ 80°C @ 10bar | beidseitig | 3,5m @ 23°C @ 50%rF; 72h @ 60°C @ 95%rF | 5,2 | 1,5 |
| 100 | Al/Al | 300s @ 80°C @ 10bar | beidseitig | 3,5m @ 23°C @ 50%rF; 72h @ 85°C @ 85%rF | 5,6 | 0,4 |
| 100 | Al/Al | 300s @ 80°C @ 10bar | beidseitig | 3,5m @ 23°C @ 50%rF; 72h @ 60°C @ EtOH/H2O | 0,6 | 0,2 |
| 100 | Al/Al | 300s @ 80°C @ 10bar | beidseitig | 3,5m @ 23°C @ 50%rF; 72h @ 60°C @ Ölsäure | 4,1 | 0,4 |
| 100 | Al/Al | 300s @ 80°C @ 10bar | beidseitig | 3,5m @ 23°C @ 50%rF; initial | 6,9 | 0,1 |
| 100 | Al/Al | 300s @ 80°C @ 10bar | beidseitig | 3,5m @ 23°C @ 50%rF; 72h @ 60°C @ 95%rF | 8,6 | 0,1 |
| 100 | Al/Al | 300s @ 80°C @ 10bar | beidseitig | 3,5m @ 23°C @ 50%rF; 72h @ 85°C @ 85%rF | 4,9 | 1,2 |
| | | | | | | |
| | | | | | | |

| Beispiel 27 | MKu-D530-117-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 4,3 | 0,8 |
| 100 | Al/Al | 300s @ 80°C @ 10bar | beidseitig | 72h @ 60°C @ 95%rF | 5,5 | 0,6 |
| 100 | Al/Al | 300s @ 80°C @ 10bar | beidseitig | 72h @ 85°C @ 85%rF | 5,5 | 1,0 |
| 100 | Al/Al | 300s @ 80°C @ 10bar | beidseitig | 72h @ 60°C @ EtOH/H2O | 1,1 | 0,1 |
| 100 | Al/Al | 300s @ 80°C @ 10bar | beidseitig | 72h @ 60°C @ Ölsäure | 3,4 | 0,5 |
| 100 | PC/PC | 300s @ 80°C @ 10bar | beidseitig | initial | 6,6 | 0,2 |
| 100 | PC/PC | 300s @ 80°C @ 10bar | beidseitig | 72h @ 60°C @ 95%rF | 8,5 | 0,1 |
| 100 | PC/PC | 300s @ 80°C @ 10bar | beidseitig | 72h @ 85°C @ 85%rF | 5,0 | 0,0 |
| | | | | | | |
| | | | | | | |

| Beispiel 28 | MKu-D530-118-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 4,3 | 0,9 |
| 100 | Al/Al | 300s @ 80°C @ 10bar | beidseitig | 72h @ 60°C @ 95%rF | 5,6 | 0,9 |
| 100 | Al/Al | 300s @ 80°C @ 10bar | beidseitig | 72h @ 85°C @ 85%rF | 6,0 | 1,4 |
| 100 | Al/Al | 300s @ 80°C @ 10bar | beidseitig | 72h @ 60°C @ EtOH/H2O | 1,2 | 0,2 |
| 100 | Al/Al | 300s @ 80°C @ 10bar | beidseitig | 72h @ 60°C @ Ölsäure | 3,5 | 0,5 |
| 100 | PC/PC | 300s @ 80°C @ 10bar | beidseitig | initial | 6,6 | 0,1 |
| 100 | PC/PC | 300s @ 80°C @ 10bar | beidseitig | 72h @ 60°C @ 95%rF | 7,9 | 1,2 |
| 100 | PC/PC | 300s @ 80°C @ 10bar | beidseitig | 72h @ 85°C @ 85%rF | 5,2 | 0,5 |
| | | | | | | |
| | | | | | | |

| Beispiel 29 | MKu-D530-123-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 4,5 | 0,3 |
| 100 | Al/Al | 300s @ 80°C @ 10bar | beidseitig | 72h @ 60°C @ 95%rF | 5,9 | 0,1 |
| 100 | Al/Al | 300s @ 80°C @ 10bar | beidseitig | 72h @ 85°C @ 85%rF | 5,9 | 0,1 |
| 100 | Al/Al | 300s @ 80°C @ 10bar | beidseitig | 72h @ 60°C @ EtOH/H2O | 3,2 | 0,2 |
| 100 | Al/Al | 300s @ 80°C @ 10bar | beidseitig | 72h @ 60°C @ Ölsäure | 3,8 | 0,4 |
| 100 | PC/PC | 300s @ 80°C @ 10bar | beidseitig | 3w @ 23°C @ 50%rF; initial | 8,4 | 0,7 |
| 100 | PC/PC | 300s @ 80°C @ 10bar | beidseitig | 3w @ 23°C @ 50%rF; 72h @ 60°C @ 95%rF | 8,7 | 0,4 |
| 100 | PC/PC | 300s @ 80°C @ 10bar | beidseitig | 3w @ 23°C @ 50%rF; 72h @ 85°C @ 85%rF | 3,3 | 0,6 |
| | | | | | | |
| | | | | | | |

| Beispiel 30 | MKu-D530-124-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 2,8 | 0,7 |
| 100 | Al/Al | 300s @ 80°C @ 10bar | beidseitig | 72h @ 60°C @ 95%rF | 4,8 | 0,6 |
| 100 | Al/Al | 300s @ 80°C @ 10bar | beidseitig | 72h @ 85°C @ 85%rF | 3,3 | 1,0 |
| 100 | Al/Al | 300s @ 80°C @ 10bar | beidseitig | 72h @ 60°C @ EtOH/H2O | 2,0 | 0,3 |
| 100 | Al/Al | 300s @ 80°C @ 10bar | beidseitig | 72h @ 60°C @ Ölsäure | 2,7 | 0,7 |
| 100 | PC/PC | 300s @ 80°C @ 10bar | beidseitig | 3w @ 23°C @ 50%rF; initial | 6,1 | 1,9 |
| 100 | PC/PC | 300s @ 80°C @ 10bar | beidseitig | 3w @ 23°C @ 50%rF; 72h @ 60°C @ 95%rF | 7,1 | 1,4 |
| 100 | PC/PC | 300s @ 80°C @ 10bar | beidseitig | 3w @ 23°C @ 50%rF; 72h @ 85°C @ 85%rF | 2,2 | 1,1 |
| | | | | | | |
| | | | | | | |

| Beispiel 31 | MKu-D530-125-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 3,1 | 0,5 |
| 100 | Al/Al | 300s @ 80°C @ 10bar | beidseitig | 72h @ 60°C @ 95%rF | 4,2 | 0,3 |
| 100 | Al/Al | 300s @ 80°C @ 10bar | beidseitig | 72h @ 85°C @ 85%rF | 4,0 | 0,2 |
| 100 | Al/Al | 300s @ 80°C @ 10bar | beidseitig | 72h @ 60°C @ EtOH/H2O | 1,8 | 0,3 |
| 100 | Al/Al | 300s @ 80°C @ 10bar | beidseitig | 72h @ 60°C @ Ölsäure | 3,7 | 0,5 |
| 100 | PC/PC | 300s @ 80°C @ 10bar | beidseitig | 3w @ 23°C @ 50%rF; initial | 8,4 | 0,0 |
| 100 | PC/PC | 300s @ 80°C @ 10bar | beidseitig | 3w @ 23°C @ 50%rF; 72h @ 60°C @ 95%rF | 5,2 | 2,1 |
| 100 | PC/PC | 300s @ 80°C @ 10bar | beidseitig | 3w @ 23°C @ 50%rF; 72h @ 85°C @ 85%rF | 2,3 | 1,2 |
| | | | | | | |
| | | | | | | |

| Beispiel 32 | MKu-D530-126-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 3,1 | 0,9 |
| 100 | Al/Al | 300s @ 80°C @ 10bar | beidseitig | 72h @ 60°C @ 95%rF | 3,4 | 0,7 |
| 100 | Al/Al | 300s @ 80°C @ 10bar | beidseitig | 72h @ 85°C @ 85%rF | 4,9 | 1,3 |
| 100 | Al/Al | 300s @ 80°C @ 10bar | beidseitig | 72h @ 60°C @ EtOH/H2O | 1,2 | 0,4 |
| 100 | Al/Al | 300s @ 80°C @ 10bar | beidseitig | 72h @ 60°C @ Ölsäure | 3,4 | 0,6 |
| 100 | PC/PC | 300s @ 80°C @ 10bar | beidseitig | 3w @ 23°C @ 50%rF; initial | 5,8 | 1,8 |
| 100 | PC/PC | 300s @ 80°C @ 10bar | beidseitig | 3w @ 23°C @ 50%rF; 72h @ 60°C @ 95%rF | 3,6 | 1,2 |
| 100 | PC/PC | 300s @ 80°C @ 10bar | beidseitig | 3w @ 23°C @ 50%rF; 72h @ 85°C @ 85%rF | 1,4 | 0,7 |
| | | | | | | |
| | | | | | | |

| Beispiel 33 | MKu-D530-131-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | 2,5w @ 23°C @ 50%rF; initial | 2,5 | 0,3 |
| 100 | Al/Al | 300s @ 80°C @ 10bar | beidseitig | 2,5w @ 23°C @ 50%rF; 72h @ 60°C @ 95%rF | 4,7 | 0,2 |
| 100 | Al/Al | 300s @ 80°C @ 10bar | beidseitig | 2,5w @ 23°C @ 50%rF; 72h @ 85°C @ 85%rF | 4,1 | 0,1 |
| 100 | Al/Al | 300s @ 80°C @ 10bar | beidseitig | 1m @ 23°C @ 50%rF; 72h @ 60°C @ EtOH/H2O | 0,5 | 0,0 |
| 100 | Al/Al | 300s @ 80°C @ 10bar | beidseitig | 1m @ 23°C @ 50%rF; 72h @ 60°C @ Ölsäure | 1,9 | 0,2 |
| 100 | PC/PC | 300s @ 80°C @ 10bar | beidseitig | 3w @ 23°C @ 50%rF; initial | 8,6 | 0,1 |
| 100 | PC/PC | 300s @ 80°C @ 10bar | beidseitig | 3w @ 23°C @ 50%rF; 72h @ 60°C @ 95%rF | 8,9 | 0,1 |
| 100 | PC/PC | 300s @ 80°C @ 10bar | beidseitig | 3w @ 23°C @ 50%rF; 72h @ 85°C @ 85%rF | 4,4 | 0,4 |
| | | | | | | |
| | | | | | | |

| Beispiel 34 | MKu-D530-132-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | 2,5w @ 23°C @ 50%rF; initial | 2,3 | 0,5 |
| 100 | Al/Al | 300s @ 80°C @ 10bar | beidseitig | 2,5w @ 23°C @ 50%rF; 72h @ 60°C @ 95%rF | 4,1 | 0,3 |
| 100 | Al/Al | 300s @ 80°C @ 10bar | beidseitig | 2,5w @ 23°C @ 50%rF; 72h @ 85°C @ 85%rF | 4,1 | 0,2 |
| 100 | Al/Al | 300s @ 80°C @ 10bar | beidseitig | 1m @ 23°C @ 50%rF; 72h @ 60°C @ EtOH/H2O | 0,7 | 0,2 |
| 100 | Al/Al | 300s @ 80°C @ 10bar | beidseitig | 1m @ 23°C @ 50%rF; 72h @ 60°C @ Ölsäure | 2,4 | 1,2 |
| 100 | PC/PC | 300s @ 80°C @ 10bar | beidseitig | 3w @ 23°C @ 50%rF; initial | 8,0 | 0,8 |
| 100 | PC/PC | 300s @ 80°C @ 10bar | beidseitig | 3w @ 23°C @ 50%rF; 72h @ 60°C @ 95%rF | 8,9 | 0,0 |
| 100 | PC/PC | 300s @ 80°C @ 10bar | beidseitig | 3w @ 23°C @ 50%rF; 72h @ 85°C @ 85%rF | 5,3 | 0,4 |
| | | | | | | |
| | | | | | | |

| Beispiel 35 | MKu-D530-133-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | 2,5w @ 23°C @ 50%rF; initial | 2,1 | 0,1 |
| 100 | Al/Al | 300s @ 80°C @ 10bar | beidseitig | 2,5w @ 23°C @ 50%rF; 72h @ 60°C @ 95%rF | 3,8 | 0,3 |
| 100 | Al/Al | 300s @ 80°C @ 10bar | beidseitig | 2,5w @ 23°C @ 50%rF; 72h @ 85°C @ 85%rF | 4,3 | 0,5 |
| 100 | Al/Al | 300s @ 80°C @ 10bar | beidseitig | 1m @ 23°C @ 50%rF; 72h @ 60°C @ EtOH/H2O | 1,1 | 0,2 |
| 100 | Al/Al | 300s @ 80°C @ 10bar | beidseitig | 1m @ 23°C @ 50%rF; 72h @ 60°C @ Ölsäure | 2,0 | 0,1 |
| 100 | PC/PC | 300s @ 80°C @ 10bar | beidseitig | 3w @ 23°C @ 50%rF; initial | 8,2 | 0,6 |
| 100 | PC/PC | 300s @ 80°C @ 10bar | beidseitig | 3w @ 23°C @ 50%rF; 72h @ 60°C @ 95%rF | 8,6 | 0,2 |
| 100 | PC/PC | 300s @ 80°C @ 10bar | beidseitig | 3w @ 23°C @ 50%rF; 72h @ 85°C @ 85%rF | 4,5 | 0,3 |
| | | | | | | |
| | | | | | | |

| Beispiel 36 | MKu-D530-134-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | 2,5w @ 23°C @ 50%rF; initial | 2,3 | 0,2 |
| 100 | Al/Al | 300s @ 80°C @ 10bar | beidseitig | 2,5w @ 23°C @ 50%rF; 72h @ 60°C @ 95%rF | 3,7 | 0,0 |
| 100 | Al/Al | 300s @ 80°C @ 10bar | beidseitig | 2,5w @ 23°C @ 50%rF; 72h @ 85°C @ 85%rF | 3,9 | 0,1 |
| 100 | Al/Al | 300s @ 80°C @ 10bar | beidseitig | 1m @ 23°C @ 50%rF; 72h @ 60°C @ EtOH/H2O | 1,6 | 0,7 |
| 100 | Al/Al | 300s @ 80°C @ 10bar | beidseitig | 1m @ 23°C @ 50%rF; 72h @ 60°C @ Ölsäure | 2,5 | 0,9 |
| 100 | PC/PC | 300s @ 80°C @ 10bar | beidseitig | 3w @ 23°C @ 50%rF; initial | 8,2 | 0,7 |
| 100 | PC/PC | 300s @ 80°C @ 10bar | beidseitig | 3w @ 23°C @ 50%rF; 72h @ 60°C @ 95%rF | 8,0 | 0,3 |
| 100 | PC/PC | 300s @ 80°C @ 10bar | beidseitig | 3w @ 23°C @ 50%rF; 72h @ 85°C @ 85%rF | 5,0 | 0,8 |
| | | | | | | |
| | | | | | | |

| Beispiel 37 | MKu-D530-135-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | 2,5w @ 23°C @ 50%rF; initial | 2,1 | 0,5 |
| 100 | Al/Al | 300s @ 80°C @ 10bar | beidseitig | 2,5w @ 23°C @ 50%rF; 72h @ 60°C @ 95%rF | 4,0 | 0,3 |
| 100 | Al/Al | 300s @ 80°C @ 10bar | beidseitig | 2,5w @ 23°C @ 50%rF; 72h @ 85°C @ 85%rF | 4,2 | 0,3 |
| 100 | Al/Al | 300s @ 80°C @ 10bar | beidseitig | 1m @ 23°C @ 50%rF; 72h @ 60°C @ EtOH/H2O | 1,4 | 0,5 |
| 100 | Al/Al | 300s @ 80°C @ 10bar | beidseitig | 1m @ 23°C @ 50%rF; 72h @ 60°C @ Ölsäure | 2,5 | 0,2 |
| 100 | PC/PC | 300s @ 80°C @ 10bar | beidseitig | 3w @ 23°C @ 50%rF; initial | 8,0 | 0,6 |
| 100 | PC/PC | 300s @ 80°C @ 10bar | beidseitig | 3w @ 23°C @ 50%rF; 72h @ 60°C @ 95%rF | 8,7 | 0,2 |
| 100 | PC/PC | 300s @ 80°C @ 10bar | beidseitig | 3w @ 23°C @ 50%rF; 72h @ 85°C @ 85%rF | 5,6 | 0,0 |
| | | | | | | |
| | | | | | | |

| Beispiel 38 | MKu-D530-136-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 3,3 | 0,4 |
| 100 | Al/Al | 300s @ 80°C @ 10bar | beidseitig | 72h @ 60°C @ 95%rF | 4,2 | 0,5 |
| 100 | Al/Al | 300s @ 80°C @ 10bar | beidseitig | 72h @ 85°C @ 85%rF | 3,8 | 0,1 |
| 100 | Al/Al | 300s @ 80°C @ 10bar | beidseitig | 72h @ 60°C @ EtOH/H2O | 1,8 | 0,4 |
| 100 | Al/Al | 300s @ 80°C @ 10bar | beidseitig | 72h @ 60°C @ Ölsäure | 3,1 | 0,4 |
| 100 | PC/PC | 300s @ 80°C @ 10bar | beidseitig | initial | 5,6 | 0,8 |
| 100 | PC/PC | 300s @ 80°C @ 10bar | beidseitig | 72h @ 60°C @ 95%rF | 8,1 | 0,0 |
| 100 | PC/PC | 300s @ 80°C @ 10bar | beidseitig | 72h @ 85°C @ 85%rF | 4,0 | 0,5 |
| | | | | | | |
| | | | | | | |

| Beispiel 39 | MKu-D530-137-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 3,1 | 0,8 |
| 100 | Al/Al | 300s @ 80°C @ 10bar | beidseitig | 72h @ 60°C @ 95%rF | 3,8 | 0,4 |
| 100 | Al/Al | 300s @ 80°C @ 10bar | beidseitig | 72h @ 85°C @ 85%rF | 4,0 | 0,4 |
| 100 | Al/Al | 300s @ 80°C @ 10bar | beidseitig | 72h @ 60°C @ EtOH/H2O | 1,9 | 0,1 |
| 100 | Al/Al | 300s @ 80°C @ 10bar | beidseitig | 72h @ 60°C @ Ölsäure | 2,5 | 0,5 |
| 100 | PC/PC | 300s @ 80°C @ 10bar | beidseitig | initial | 4,1 | 0,5 |
| 100 | PC/PC | 300s @ 80°C @ 10bar | beidseitig | 72h @ 60°C @ 95%rF | 8,2 | 0,2 |
| 100 | PC/PC | 300s @ 80°C @ 10bar | beidseitig | 72h @ 85°C @ 85%rF | 4,3 | 0,7 |
| | | | | | | |
| | | | | | | |

| Beispiel 40 | MKu-D530-138-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 2,5 | 0,4 |
| 100 | Al/Al | 300s @ 80°C @ 10bar | beidseitig | 72h @ 60°C @ 95%rF | 3,7 | 0,3 |
| 100 | Al/Al | 300s @ 80°C @ 10bar | beidseitig | 72h @ 85°C @ 85%rF | 3,6 | 0,9 |
| 100 | Al/Al | 300s @ 80°C @ 10bar | beidseitig | 72h @ 60°C @ EtOH/H2O | 1,7 | 0,5 |
| 100 | Al/Al | 300s @ 80°C @ 10bar | beidseitig | 72h @ 60°C @ Ölsäure | 2,0 | 0,7 |
| 100 | PC/PC | 300s @ 80°C @ 10bar | beidseitig | initial | 3,4 | 1,0 |
| 100 | PC/PC | 300s @ 80°C @ 10bar | beidseitig | 72h @ 60°C @ 95%rF | 6,1 | 1,9 |
| 100 | PC/PC | 300s @ 80°C @ 10bar | beidseitig | 72h @ 85°C @ 85%rF | 5,4 | 0,1 |
| | | | | | | |
| | | | | | | |

| Beispiel 41 | MKu-D530-139-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 3,0 | 0,5 |
| 100 | Al/Al | 300s @ 80°C @ 10bar | beidseitig | 72h @ 60°C @ 95%rF | 3,2 | 0,1 |
| 100 | Al/Al | 300s @ 80°C @ 10bar | beidseitig | 72h @ 85°C @ 85%rF | 3,6 | 0,2 |
| 100 | Al/Al | 300s @ 80°C @ 10bar | beidseitig | 72h @ 60°C @ EtOH/H2O | 1,7 | 0,4 |
| 100 | Al/Al | 300s @ 80°C @ 10bar | beidseitig | 72h @ 60°C @ Ölsäure | 2,5 | 0,3 |
| 100 | PC/PC | 300s @ 80°C @ 10bar | beidseitig | initial | 4,5 | 1,3 |
| 100 | PC/PC | 300s @ 80°C @ 10bar | beidseitig | 72h @ 60°C @ 95%rF | 4,3 | 1,1 |
| 100 | PC/PC | 300s @ 80°C @ 10bar | beidseitig | 72h @ 85°C @ 85%rF | 4,3 | 1,6 |
| | | | | | | |
| | | | | | | |

| Beispiel 42 | MKu-D530-142-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 2,1 | 0,6 |
| 100 | Al/Al | 300s @ 80°C @ 10bar | beidseitig | 72h @ 60°C @ 95%rF | 4,3 | 0,6 |
| 100 | Al/Al | 300s @ 80°C @ 10bar | beidseitig | 72h @ 85°C @ 85%rF | 4,3 | 0,4 |
| 100 | Al/Al | 300s @ 80°C @ 10bar | beidseitig | 72h @ 60°C @ EtOH/H2O | 2,2 | 0,2 |
| 100 | Al/Al | 300s @ 80°C @ 10bar | beidseitig | 72h @ 60°C @ Ölsäure | 2,5 | 0,3 |
| 100 | PC/PC | 300s @ 80°C @ 10bar | beidseitig | initial | 4,7 | 1,2 |
| 100 | PC/PC | 300s @ 80°C @ 10bar | beidseitig | 72h @ 60°C @ 95%rF | 5,0 | 0,9 |
| 100 | PC/PC | 300s @ 80°C @ 10bar | beidseitig | 72h @ 85°C @ 85%rF | 4,1 | 1,5 |
| | | | | | | |
| | | | | | | |

| Beispiel 43 | MKu-D530-143-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 2,4 | 0,3 |
| 100 | Al/Al | 300s @ 80°C @ 10bar | beidseitig | 72h @ 60°C @ 95%rF | 3,6 | 0,4 |
| 100 | Al/Al | 300s @ 80°C @ 10bar | beidseitig | 72h @ 85°C @ 85%rF | 3,7 | 0,6 |
| 100 | Al/Al | 300s @ 80°C @ 10bar | beidseitig | 72h @ 60°C @ EtOH/H2O | 1,2 | 0,4 |
| 100 | Al/Al | 300s @ 80°C @ 10bar | beidseitig | 72h @ 60°C @ Ölsäure | 2,8 | 0,5 |
| 100 | PC/PC | 300s @ 80°C @ 10bar | beidseitig | initial | 5,3 | 2,3 |
| 100 | PC/PC | 300s @ 80°C @ 10bar | beidseitig | 72h @ 60°C @ 95%rF | 6,0 | 0,5 |
| 100 | PC/PC | 300s @ 80°C @ 10bar | beidseitig | 72h @ 85°C @ 85%rF | 5,0 | 0,3 |
| | | | | | | |
| | | | | | | |

| Beispiel 44 | MKu-D530-140-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 120 | Al/Al | 300s @ 80°C @ 10bar | beidseitig | initial | 4,5 | 0,2 |
| 120 | Al/Al | 300s @ 80°C @ 10bar | beidseitig | 72h @ 60°C @ 95%rF | 5,4 | 0,7 |
| 120 | Al/Al | 300s @ 80°C @ 10bar | beidseitig | 72h @ 85°C @ 85%rF | 5,3 | 0,4 |
| 120 | Al/Al | 300s @ 80°C @ 10bar | beidseitig | 72h @ 60°C @ EtOH/H2O | 1,6 | 0,4 |
| 120 | Al/Al | 300s @ 80°C @ 10bar | beidseitig | 72h @ 60°C @ Ölsäure | 3,9 | 0,4 |
| 120 | PC/PC | 300s @ 80°C @ 10bar | beidseitig | initial | 7,7 | 0,6 |
| 120 | PC/PC | 300s @ 80°C @ 10bar | beidseitig | 72h @ 60°C @ 95%rF | 7,9 | 0,2 |
| 120 | PC/PC | 300s @ 80°C @ 10bar | beidseitig | 72h @ 85°C @ 85%rF | 5,0 | 0,7 |
| | | | | | | |
| | | | | | | |

| Beispiel 45 | MKu-D530-141-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 120 | Al/Al | 300s @ 80°C @ 10bar | beidseitig | initial | 4,5 | 0,3 |
| 120 | Al/Al | 300s @ 80°C @ 10bar | beidseitig | 72h @ 60°C @ 95%rF | 6,0 | 0,0 |
| 120 | Al/Al | 300s @ 80°C @ 10bar | beidseitig | 72h @ 85°C @ 85%rF | 5,7 | 0,6 |
| 120 | Al/Al | 300s @ 80°C @ 10bar | beidseitig | 72h @ 60°C @ EtOH/H2O | 1,8 | 0,3 |
| 120 | Al/Al | 300s @ 80°C @ 10bar | beidseitig | 72h @ 60°C @ Ölsäure | 4,6 | 0,0 |
| 120 | PC/PC | 300s @ 80°C @ 10bar | beidseitig | initial | 7,4 | 0,3 |
| 120 | PC/PC | 300s @ 80°C @ 10bar | beidseitig | 72h @ 60°C @ 95%rF | 8,6 | 0,1 |
| 120 | PC/PC | 300s @ 80°C @ 10bar | beidseitig | 72h @ 85°C @ 85%rF | 5,7 | 1,1 |
| | | | | | | |
| | | | | | | |

| Beispiel 46 | MKu-D530-144-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 120 | Al/Al | 300s @ 80°C @ 10bar | beidseitig | initial | 4,3 | 0,3 |
| 120 | Al/Al | 300s @ 80°C @ 10bar | beidseitig | 72h @ 60°C @ 95%rF | 5,1 | 1,0 |
| 120 | Al/Al | 300s @ 80°C @ 10bar | beidseitig | 72h @ 85°C @ 85%rF | 6,3 | 0,4 |
| 120 | Al/Al | 300s @ 80°C @ 10bar | beidseitig | 72h @ 60°C @ EtOH/H2O | 2,4 | 0,4 |
| 120 | Al/Al | 300s @ 80°C @ 10bar | beidseitig | 72h @ 60°C @ Ölsäure | 4,5 | 0,4 |
| 120 | PC/PC | 300s @ 80°C @ 10bar | beidseitig | initial | 7,0 | 0,2 |
| 120 | PC/PC | 300s @ 80°C @ 10bar | beidseitig | 72h @ 60°C @ 95%rF | 8,1 | 0,2 |
| 120 | PC/PC | 300s @ 80°C @ 10bar | beidseitig | 72h @ 85°C @ 85%rF | 5,7 | 0,6 |
| | | | | | | |
| | | | | | | |

| Beispiel 47 | MKu-D530-145-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 120 | Al/Al | 300s @ 80°C @ 10bar | beidseitig | initial | 4,4 | 0,3 |
| 120 | Al/Al | 300s @ 80°C @ 10bar | beidseitig | 72h @ 60°C @ 95%rF | 5,4 | 0,3 |
| 120 | Al/Al | 300s @ 80°C @ 10bar | beidseitig | 72h @ 85°C @ 85%rF | 5,1 | 0,1 |
| 120 | Al/Al | 300s @ 80°C @ 10bar | beidseitig | 72h @ 60°C @ EtOH/H2O | 3,1 | 0,5 |
| 120 | Al/Al | 300s @ 80°C @ 10bar | beidseitig | 72h @ 60°C @ Ölsäure | 4,6 | 0,1 |
| 120 | PC/PC | 300s @ 80°C @ 10bar | beidseitig | initial | 6,6 | 0,4 |
| 120 | PC/PC | 300s @ 80°C @ 10bar | beidseitig | 72h @ 60°C @ 95%rF | 7,8 | 0,5 |
| 120 | PC/PC | 300s @ 80°C @ 10bar | beidseitig | 72h @ 85°C @ 85%rF | 2,7 | 1,7 |
| | | | | | | |
| | | | | | | |

| Beispiel 48 | MKu-D530-146-01 | | | | | |
|---|---|---|---|---|---|---|
| | | | | | | |
| Filmdicke | Substrate | Vernetzung | Heizen | Lagerung | Push-Out | |

| µm | Platte / Ronde | t / T / P | | | Mpa | s |
|---|---|---|---|---|---|---|
| 100 | Al/Al | 300s @ 80°C @ 10bar | beidseitig | initial | 4,5 | 0,1 |
| 100 | Al/Al | 300s @ 80°C @ 10bar | beidseitig | 72h @ 60°C @ 95%rF | 5,8 | 0,2 |
| 100 | Al/Al | 300s @ 80°C @ 10bar | beidseitig | 72h @ 85°C @ 85%rF | 6,4 | 0,5 |
| 100 | Al/Al | 300s @ 80°C @ 10bar | beidseitig | 72h @ 60°C @ EtOH/H2O | 0,4 | 0,0 |
| 100 | Al/Al | 300s @ 80°C @ 10bar | beidseitig | 72h @ 60°C @ Ölsäure | 4,1 | 0,5 |
| 100 | PC/PC | 300s @ 80°C @ 10bar | beidseitig | initial | 7,0 | 0,4 |
| 100 | PC/PC | 300s @ 80°C @ 10bar | beidseitig | 72h @ 60°C @ 95%rF | 8,4 | 0,1 |
| 100 | PC/PC | 300s @ 80°C @ 10bar | beidseitig | 72h @ 85°C @ 85%rF | 4,7 | 0,4 |
| | | | | | | |

| Beispiel 49 | MKu-D530-149-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 3,2 | 0,2 |
| 100 | Al/Al | 300s @ 80°C @ 10bar | beidseitig | 72h @ 60°C @ 95%rF | 4,4 | 0,5 |
| 100 | Al/Al | 300s @ 80°C @ 10bar | beidseitig | 72h @ 85°C @ 85%rF | 4,0 | 0,4 |
| 100 | Al/Al | 300s @ 80°C @ 10bar | beidseitig | 72h @ 60°C @ EtOH/H2O | 1,8 | 0,3 |
| 100 | Al/Al | 300s @ 80°C @ 10bar | beidseitig | 72h @ 60°C @ Ölsäure | 4,1 | 0,4 |
| 100 | PC/PC | 300s @ 80°C @ 10bar | beidseitig | initial | 7,2 | 0,4 |
| 100 | PC/PC | 300s @ 80°C @ 10bar | beidseitig | 72h @ 60°C @ 95%rF | 7,5 | 0,2 |
| 100 | PC/PC | 300s @ 80°C @ 10bar | beidseitig | 72h @ 85°C @ 85%rF | 4,7 | 0,6 |
| | | | | | | |

| Beispiel 50 | MKu-D530-150-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 3,6 | 0,5 |
| 100 | Al/Al | 300s @ 80°C @ 10bar | beidseitig | 72h @ 60°C @ 95%rF | 4,8 | 0,2 |
| 100 | Al/Al | 300s @ 80°C @ 10bar | beidseitig | 72h @ 85°C @ 85%rF | 4,5 | 0,7 |
| 100 | Al/Al | 300s @ 80°C @ 10bar | beidseitig | 72h @ 60°C @ EtOH/H2O | 2,0 | 0,2 |
| 100 | Al/Al | 300s @ 80°C @ 10bar | beidseitig | 72h @ 60°C @ Ölsäure | 4,4 | 0,2 |
| 100 | PC/PC | 300s @ 80°C @ 10bar | beidseitig | initial | 6,9 | 0,3 |
| 100 | PC/PC | 300s @ 80°C @ 10bar | beidseitig | 72h @ 60°C @ 95%rF | 7,5 | 0,1 |
| 100 | PC/PC | 300s @ 80°C @ 10bar | beidseitig | 72h @ 85°C @ 85%rF | 4,4 | 0,3 |
| | | | | | | |

| Beispiel 51 | MKu-D530-151-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 3,1 | 0,4 |
| 100 | Al/Al | 300s @ 80°C @ 10bar | beidseitig | 72h @ 60°C @ 95%rF | 4,1 | 0,2 |
| 100 | Al/Al | 300s @ 80°C @ 10bar | beidseitig | 72h @ 85°C @ 85%rF | 3,5 | 0,6 |
| 100 | Al/Al | 300s @ 80°C @ 10bar | beidseitig | 72h @ 60°C @ EtOH/H2O | 1,6 | 0,3 |
| 100 | Al/Al | 300s @ 80°C @ 10bar | beidseitig | 72h @ 60°C @ Ölsäure | 4,1 | 0,5 |
| 100 | PC/PC | 300s @ 80°C @ 10bar | beidseitig | initial | 7,4 | 0,1 |
| 100 | PC/PC | 300s @ 80°C @ 10bar | beidseitig | 72h @ 60°C @ 95%rF | 7,5 | 0,1 |
| 100 | PC/PC | 300s @ 80°C @ 10bar | beidseitig | 72h @ 85°C @ 85%rF | 4,5 | 0,2 |
| | | | | | | |

| Beispiel 52 | MKu-D530-152-01 | | | | | |
|---|---|---|---|---|---|---|
| | | | | | | |

| Filmdicke | Substrate | Vernetzung | Heizen | Lagerung | Push-Out | |
|---|---|---|---|---|---|---|
| µm | Platte / Ronde | t / T / P | | | Mpa | s |
| 100 | Al/Al | 300s @ 80°C @ 10bar | beidseitig | initial | 3,2 | 0,3 |
| 100 | Al/Al | 300s @ 80°C @ 10bar | beidseitig | 72h @ 60°C @ 95%rF | 4,3 | 0,3 |
| 100 | Al/Al | 300s @ 80°C @ 10bar | beidseitig | 72h @ 85°C @ 85%rF | 4,1 | 0,3 |
| 100 | Al/Al | 300s @ 80°C @ 10bar | beidseitig | 72h @ 60°C @ EtOH/H2O | 1,5 | 0,2 |
| 100 | Al/Al | 300s @ 80°C @ 10bar | beidseitig | 72h @ 60°C @ Ölsäure | 4,3 | 0,3 |
| 100 | PC/PC | 300s @ 80°C @ 10bar | beidseitig | initial | 7,0 | 0,1 |
| 100 | PC/PC | 300s @ 80°C @ 10bar | beidseitig | 72h @ 60°C @ 95%rF | 7,4 | 0,1 |
| 100 | PC/PC | 300s @ 80°C @ 10bar | beidseitig | 72h @ 85°C @ 85%rF | 3,9 | 0,3 |

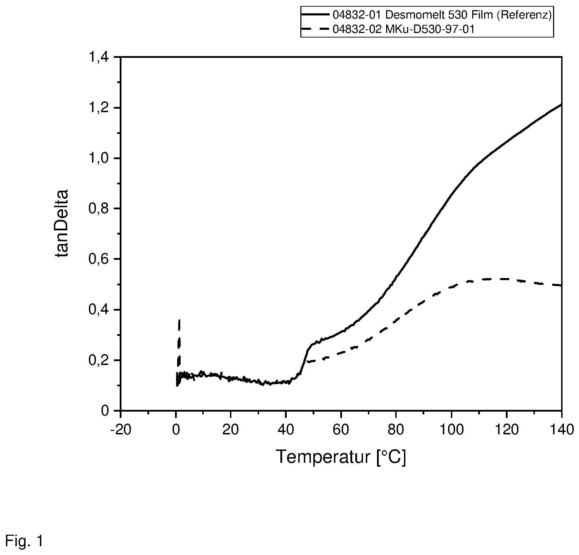

Figur 1 zeigt zudem einen Vergleich der Temperaturkurven (Verlustfaktor tan δ versus Temperatur [°C]) eines Films des Beispiels 15 (unvernetzt; Probe MKu-D530-97-01) im Vergleich zu einem reinen 100 µm Film Desmomelt 530 als Referenz, bestimmt mittels Dynamisch-Mechanischer Analyse (DMA) gemessen nach DIN EN ISO 6721-1 (2019-09). Für die Messung wurden sieben Stanzlinge übereinandergestapelt.
Messgerät: Anton Paar 702 MultiDrive
Messkopf: Luftgelagert mit Normalkraft Temperierung: Ofen
Messgeometrie: Parallele Platten (Einmaltools) Durchmesser: 12 mm

### TemperaturSweep

Temperaturbereich: 0 bis 140°C
Temperaturrampe: 2,5°C/min.
Deformation: jeweils an die Probe angepasst
Frequenzbereich: 1 Hz

Vorbereitung der Probe: 2 Minuten bei 50°C mit anschließendem Aufheizen oder Abkühlen auf Messtemperatur
Figur 1 illustriert auf hervorragende Weise die latente Vernetzungsreaktion des Beispiels 15, gegen die Referenz (Desmomelt 530 - Film).

## Patentansprüche

1. Zubereitung zur Herstellung eines Klebstoffs, umfassend
i) eine Polymer-Komponente, gebildet aus mindestens einem thermoplastischen Polymeren, das funktionelle Gruppen enthält, die mit Isocyanat reagieren können,
ii) eine Vernetzer-Komponente, gebildet aus mindestens einer Isocyanat-haltigen, partikulären Verbindung,
x) eine Lösemittel-Komponente, gebildet aus mindestens einem organischen Lösemittel,
**dadurch gekennzeichnet, dass**
die Polymer-Komponente im Wesentlichen in der Lösemittel-Komponente gelöst vorliegt, und
die Vernetzer-Komponente bei 23 °C im Wesentlichen weder in der lösemittelfreien Polymer-Komponente noch in der Lösemittel-Komponente löslich ist.

2. Zubereitung nach Anspruch 1, weiterhin umfassend
iii) eine Haftvermittler-Komponente, gebildet aus mindestens einer organofunktionellen Silanverbindung.

3. Zubereitung nach einem der vorangegangenen Ansprüche, weiterhin umfassend
(iv) mindestens eine weitere Komponente aus der Gruppe der Epoxide und/oder Epoxy-Verbindungen.

4. Zubereitung nach einem der vorangegangenen Ansprüche, weiterhin umfassend
(v) ein oder mehrere Additive, insbesondere Klebharze.

5. Zubereitung nach einem der vorangehenden Ansprüche, **dadurch gekennzeichnet, dass**
es sich bei dem mindestens einen funktionellen thermoplastischen Polymeren der Polymer-Komponente um ein zumindest teilkristallines Polymer handelt.

6. Zubereitung nach einem der vorangegangenen Ansprüche **dadurch gekennzeichnet, dass**
es sich bei dem mindestens einen funktionellen thermoplastischen Polymeren der Polymer-Komponente um ein Polyurethanpolymer handelt.

7. Zubereitung nach einem der vorangegangenen Ansprüche **dadurch gekennzeichnet, dass**
es sich bei dem mindestens einen funktionellen thermoplastischen Polymeren der Polymer-Komponente um ein thermoplastisches, semikristallines Polyurethan handelt, insbesondere um ein thermoplastisches semikristallines Polyesterpolyurethan.

8. Zubereitung nach einem der vorangegangenen Ansprüche **dadurch gekennzeichnet, dass**
mindestens eine der Isocyanat-haltigen Verbindungen der Vernetzer-Komponente zumindest zum Teil oberflächendeaktiviert vorliegt.

9. Zubereitung nach einem der vorangehenden Ansprüche, **dadurch gekennzeichnet, dass**
mindestens eine der Isocyanat-haltigen Verbindungen der Vernetzer-Komponente in nicht oberflächendeaktivierter Form vorliegt.

10. Zubereitung nach Anspruch 9, **dadurch gekennzeichnet, dass**
es sich bei der mindestens einen nicht oberflächendeaktivierten Isocyanat-haltigen Verbindung um ein TDI-Dimer handelt.

11. Verfahren zum Verkleben zweier Substratoberflächen miteinander mittels eines Klebefilms, der durch Ausformen der Zubereitung nach einem der Ansprüche 1 bis 10 und anschließendem Trocknen erhalten ist, **dadurch gekennzeichnet, dass**
der Klebefilm zwischen die zwei Substratoberflächen gebracht wird, indem er diese jeweils kontaktiert, und anschließend mittels Wärmezufuhr gehärtet wird.

12. Verfahren zum Verkleben eines Klebefilms, der durch Ausformen der Zubereitung nach einem der Ansprüche 1 bis 10 und anschließendem Trocknen erhalten ist, auf einer Substratoberfläche, **dadurch gekennzeichnet, dass**
der Klebefilm auf einer seiner Oberflächen einen Permanentträger aufweist und mit der anderen, freiliegenden Oberfläche auf die Substratoberfläche aufgebracht wird, so dass er diese kontaktiert, und anschließend mittels Wärmezufuhr gehärtet wird.

13. Verfahren zum Verkleben zweier Substratoberflächen nach Anspruch 11 oder 12, **dadurch gekennzeichnet, dass**
der Klebefilm mittels Wärmezufuhr unter Druck gehärtet wird.

14. Verfahren zum Verkleben zweier Substratoberflächen nach einem der Ansprüche 11 bis 13, **dadurch gekennzeichnet, dass**
die Härtungszeit kürzer oder gleich 20 Minuten, bevorzugt kürzer oder gleich 10 Minuten, noch bevorzugter kürzer oder gleich 5 Minuten beträgt.

## Claims

1. Preparation for producing an adhesive, comprising
i) a polymer component formed of at least one thermoplastic polymer containing functional groups able to react with isocyanate,
ii) a crosslinker component formed of at least one isocyanate-containing particulate compound,
x) a solvent component formed of at least one organic solvent,
**characterized in that**
the polymer component is substantially in solution in the solvent component, and
the crosslinker component at 23°C is substantially soluble neither in the solvent-free polymer component nor in the solvent component.

2. Preparation according to Claim 1, further comprising iii) an adhesion promoter component formed of at least one organofunctional silane compound.

3. Preparation according to either of the preceding claims, further comprising
(iv) at least one further component from the group of epoxides and/or epoxy compounds.

4. Preparation according to any of the preceding claims, further comprising
(v) one or more additives, more particularly tackifier resins.

5. Preparation according to any of the preceding claims, **characterized in that**
the at least one functional thermoplastic polymer of the polymer component is an at least partly crystalline polymer.

6. Preparation according to any of the preceding claims, **characterized in that**
the at least one functional thermoplastic polymer of the polymer component is a polyurethane polymer.

7. Preparation according to any of the preceding claims, **characterized in that**
the at least one functional thermoplastic polymer of the polymer component is a thermoplastic, semicrystalline polyurethane, more particularly a thermoplastic semicrystalline polyester polyurethane.

8. Preparation according to any of the preceding claims, **characterized in that**
at least one of the isocyanate-containing compounds of the crosslinker component is at least partly surface-deactivated.

9. Preparation according to any of the preceding claims, **characterized in that**
at least one of the isocyanate-containing compounds of the crosslinker component is in non-surface-deactivated form.

10. Preparation according to Claim 9, **characterized in that**
the at least one non-surface-deactivated isocyanate-containing compound is a TDI dimer.

11. Method for bonding two substrate surfaces together by means of an adhesive film, obtained by shaping of the preparation according to any of Claims 1 to 10 and subsequent drying, **characterized in that**
the adhesive film is placed between the two substrate surfaces by contacting each of them, and subsequently cured by supply of heat.

12. Method for bonding an adhesive film, obtained by shaping of the preparation according to any of Claims 1 to 10 and subsequent drying, on a substrate surface, **characterized in that**
the adhesive film on one of its surfaces has a permanent carrier and is applied by the other, exposed surface to the substrate surface, so that it contacts it, and is subsequently cured by supply of heat.

13. Method for bonding two substrate surfaces according to Claim 11 or 12, **characterized in that**
the adhesive film is cured by supply of heat under pressure.

14. Method for bonding two substrate surfaces according to any of Claims 11 to 13, **characterized in that**
the curing time is less than or equal to 20 minutes, preferably less than or equal to 10 minutes, more preferably still less than or equal to 5 minutes.

## Revendications

1. Préparation pour la fabrication d'une matière adhésive, comprenant
i) un composant polymère obtenu à partir d'au moins un polymère thermoplastique, qui contient des groupes fonctionnels pouvant réagir avec de l'isocyanate,
ii) un composant de réticulation obtenu à partir d'au moins un composant particulaire contenant de l'isocyanate,
x) un composant solvant obtenu à partir d'au moins un solvant organique,
**caractérisée en ce que**
le composant polymère est présent sous une forme sensiblement dissoute dans le composant solvant, et
le composant de réticulation n'est sensiblement soluble ni dans le composant polymère sans solvant ni dans le composant solvant à 23 °C.

2. Préparation selon la revendication 1, comprenant par ailleurs
iii) un composant de promotion d'adhérence obtenu à partir d'au moins un composé de silane organofonctionnel.

3. Préparation selon l'une des revendications précédentes, comprenant par ailleurs
(iv) au moins un autre composant issu du groupe des époxydes et/ou des composés époxy.

4. Préparation selon l'une des revendications précédentes, comprenant par ailleurs
(v) un ou plusieurs additifs, en particulier des résines adhésives.

5. Préparation selon l'une des revendications précédentes, **caractérisée en ce que**
l'au moins un polymère thermoplastique fonctionnel du composant polymère est un polymère au moins en partie cristallin.

6. Préparation selon l'une des revendications précédentes, **caractérisée en ce que**
l'au moins un polymère thermoplastique fonctionnel du composant polymère est un polymère polyuréthane.

7. Préparation selon l'une des revendications précédentes, **caractérisée en ce que**
l'au moins un polymère thermoplastique fonctionnel du composant polymère est un polyuréthane semi-cristallin thermoplastique, en particulier un polyuréthane polyester semi-cristallin thermoplastique.

8. Préparation selon l'une des revendications précédentes, **caractérisée en ce que**
au moins un des composés du composant de réticulation contenant de l'isocyanate est présent sous une forme au moins en partie désactivée en surface.

9. Préparation selon l'une des revendications précédentes, **caractérisée en ce que**
au moins un des composés du composant de réticulation contenant de l'isocyanate n'est pas présent sous une forme désactivée en surface.

10. Préparation selon la revendication 9, **caractérisée en ce que**
l'au moins un composé contenant de l'isocyanate non désactivé en surface est un dimère TDI.

11. Procédé de collage de deux surfaces de substrat l'une à l'autre au moyen d'un film adhésif, qui est obtenu par démoulage de la préparation selon l'une des revendications 1 à 10 puis par séchage, **caractérisé en ce que**
le film adhésif est placé entre les deux surfaces de substrat **en ce qu'**il est amené en contact avec chacune de celles-ci, puis est durci par apport de chaleur.

12. Procédé de collage d'un film adhésif, qui est obtenu par démoulage de la préparation selon l'une des revendications 1 à 10 puis par séchage, sur une surface de substrat, **caractérisé en ce que**
le film adhésif comporte sur une de ses surfaces un support permanent et est appliqué sur la surface de substrat par l'autre surface exposée de telle sorte qu'il est amené en contact avec celle-ci puis est durci par apport de chaleur.

13. Procédé de collage de deux surfaces de substrat selon la revendication 11 ou 12, **caractérisé en ce que**
le film adhésif est durci sous pression par apport de chaleur.

14. Procédé de collage de deux surfaces de substrat selon l'une des revendications 11 à 13, **caractérisé en ce que**
la durée de durcissement est inférieure ou égale à 20 minutes, de manière préférée est inférieure ou égale à 10 minutes, de manière davantage préférée est inférieure ou égale à 5 minutes.
